(19) Europäisches Patentamt
European Patent Office
Office européen des brevets

(11) **EP 2 065 210 A1**

(12) **EUROPEAN PATENT APPLICATION**
published in accordance with Art. 153(4) EPC

(43) Date of publication:
**03.06.2009 Bulletin 2009/23**

(21) Application number: **07806778.2**

(22) Date of filing: **05.09.2007**

(51) Int Cl.:
***B41M 5/26*** *(2006.01)* ***G11B 7/24*** *(2006.01)*
***G11B 7/244*** *(2006.01)* ***G11B 7/254*** *(2006.01)*
***G11B 7/257*** *(2006.01)*

(86) International application number:
**PCT/JP2007/067336**

(87) International publication number:
**WO 2008/029856 (13.03.2008 Gazette 2008/11)**

(84) Designated Contracting States:
**DE**
Designated Extension States:
**AL BA HR MK RS**

(30) Priority: **06.09.2006 JP 2006241738**

(71) Applicant: **Mitsubishi Kagaku Media Co., Ltd.**
**Tokyo 108-8415 (JP)**

(72) Inventors:
- **KUBO, Masae**
  **Tokyo 108-8415 (JP)**
- **KIYONO, Kenjirou**
  **Toyko 108-8415 (JP)**
- **NAKAMURA, Takeshi**
  **Yokohama-shi, Kanagawa 227-8502 (JP)**

(74) Representative: **Vossius & Partner**
**Siebertstrasse 4**
**81675 München (DE)**

(54) **OPTICAL RECORDING MEDIUM**

(57) An optical recording medium is provided which has excellent jitter characteristics and satisfactory recording/reproducing characteristics and is capable of extremely high-density recording. Theopticalrecordingmedium 20 comprises a substrate 21 having a guide groove and the following layers formed on the substrate 21 in the following order: a layer 23 having a light-reflecting function, a recording layer 22 containing a specific porphyrin compound as a main component, and a cover layer 24 capable of transmitting a recording/reproducing light entering the recording layer 22, wherein when a portion of the guide groove at a side far from a surface where a recording/reproducing light beam enters the cover layer 24, is represented as a recording groove portion, then a recording pit portion formed in the recording groove portion, has a higher reflective optical intensity than the recording groove portion in an unrecorded state.

[Fig. 2]

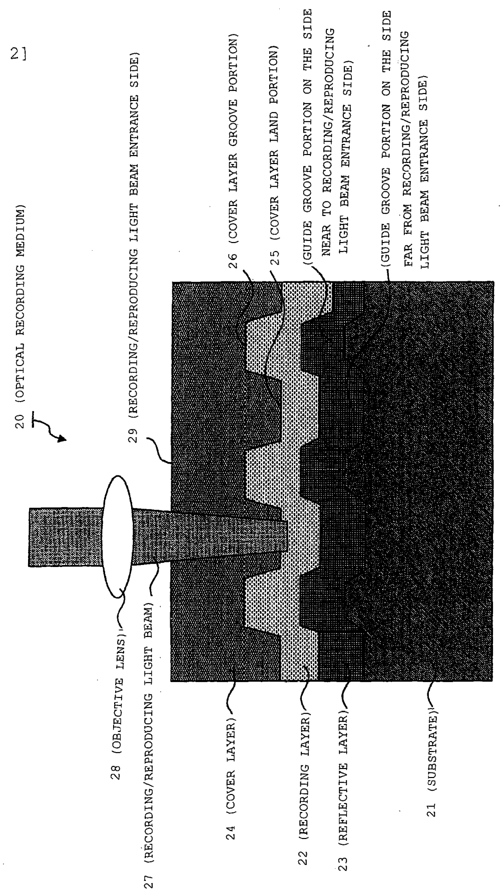


EP 2 065 210 A1

**Description**

TECHNICAL FIELD

The present invention relates to an optical recording medium. More particularly, the invention relates to an optical recording medium having a recording layer containing a dye.

BACKGROUND ART

The development of blue lasers which enable extremely high-density recording is proceeding rapidly in recent years. Recordable optical recording media capable of recording with such a laser are being developed. Of such recording media, a dye coating type recordable medium which can be efficiently produced at a relatively low cost is strongly desired to be developed. In conventional dye coating type recordable optical recording media, a laser light is caused to enter the recording layer, which is constituted of organic compounds including a dye as a main component, to mainly cause an optical (refractive index/absorbance) change due to the decomposition/alteration of an organic compound and thereby form recording pits. The recording pit portion has usually undergone a deformation resulting from a volume change of the recording layer, formation of a substrate/dye mixed part due to heat generation, substrate deformation (swelling mainly due to substrate expansion), etc. as well as the optical change (see, for example, patent document 1).

The optical behavior and thermal behavior, such as decomposition/sublimation and resultant heat generation, of organic compounds for use in the recording layer at the laser wavelength to be used for recording/reproducing are important factors in the formation of satisfactory recording pits. Consequently, it is necessary to select materials having suitable optical properties and suitable decomposition behavior as organic compounds for use in the recording layer.

Conventional recordable media, in particular, CD-Rs and DVD-Rs, are required to attain a reflectance of about 60% or higher and a high degree of modulation exceeding about 60% so as to retain reproducing interchangeability with recording media for reproducing only (ROM media) obtained by coating pits, i.e., recesses, formed beforehand in a surface of a substrate with a reflecting film of Al, Ag, Au, or the like. First, the recording layermust have specific optical properties so as to obtain a high reflectance in a pre-recording state. Usually, the recording layer in a pre-recording state is required to have a refractive index n of about 2 or higher and an extinction coefficient of about 0.01-0.3 (see, for example, patent document 2).

In a recording layer containing a dye as a main component, it is difficult to obtain a degree of modulation as high as 60% or above only through the change in such optical properties caused by recording. Namely, the amounts of changes in refractive index n and extinction coefficient k are limited in dyes, which are organic substances. This recording layer in a planar state is hence limited in reflectance change.

A technique is therefore utilized in which the effect of that interference of reflected lights from a recording pit portion and a part in a pre-recording state which occurs due to a phase difference between the reflected lights from the two parts is used to increase the apparent reflectance change (reflectance decrease) in the recording pit portion. Namely, the same principle as that of phase-difference pits in ROM media is used. It has been reported that in the case of organic recording layers, which show a smaller refractive-index change than inorganic ones, it is rather advantageous to mainly use the reflectance change caused by a phase difference (see patent document 3). Furthermore, a comprehension investigation has been made on that recording principle (see non-patent document 1).
Hereinafter, the area used for recording in the manner described above (sometimes called recording mark part) is referred to as recording pits, recording pit portion, or recording pit area regardless of the physical shape thereof.

Fig. 1 is a view illustrating a recordable medium (optical recording medium 10) having a conventional constitution including a recording layer containing a dye as a main component. As shown in Fig. 1, the optical recording medium 10 has at least a recording layer 12, a reflective layer 13, and a protective coat layer 14 which have been formed in this order on a substrate 11 having a groove. An objective lens 18 is used to cause a recording/reproducing light beam 17 to enter the recording layer 12 through the substrate 11. The thickness of the substrate 11 is generally 1.2 mm (CD) or 0.6 mm (DVD). Recording pits are formed in that area of a substrate groove part 16 which is located on the side near to the recording/reproducing light beam 17 entrance side 19 and is generally called a groove. No recording pits are formed in a substrate land part 15, which is located on the side far from the side 19.

In the known documents cited above, the following has been reported. Besides to maximize the refractive-index change of the dye-containing recording layer 12 through recording, the effect of shape changes of the recording pit portion, i.e., a local change in groove shape (the substrate 11 swells or subsides and thereby equivalently changes in groove depth) and a change in film thickness (permeative change in film thickness due to the expansion/contraction of the recording layer 12) in the recording pit portion formed in the groove, contributes to a change in phase difference.

In the recording principle described above, a recording/reproducing light is usually selected so as to have a wavelength located at the longer-wavelength-side foot of a large absorption band in order to heighten the reflectance of the recording layer in a pre-recording state and to decompose an organic compound upon laser irradiation to cause

a large change in refractive index (a high degree of modulation is thus obtained). This is because a wavelength region attaining a moderate extinction coefficient and giving a high refractive index is present at the longer-wavelength-side foot of a large absorption band.

However, no material comparable to conventional materials in optical properties at blue-laser wavelengths has been found. In particular, with respect to use at around 405 nm, which is the center of oscillation wavelengths for the blue semiconductor lasers currently in practical use, almost no organic compounds exist which have optical constants nearly the same as the optical constants required for the recording layer of a conventional recordable optical recording medium. Such organic compounds are still in the state of search. Furthermore, recordable optical recording media having the conventional dye-containing recording layer have the following problem. A main absorption band for the dye is present around the wavelength of the recording/reproducing light. The dye hence has an increased wavelength dependence of optical constant (optical constant fluctuates considerably with wavelength). Because of this, fluctuations in recording/reproducing light wavelength due to the use of different lasers or with changing environmental temperature, etc. result in considerable changes in recording characteristics, such as recording sensitivity, modulation degree, jitter, and error frequency, and in reflectance, etc.

For example, an idea concerning recording with a dye-containing recording layer showing absorption at around 405 nm has been reported. However, the dye to be used in this recording layer is required to have the same optical properties and function as conventional ones, and this idea entirely depends on a search for or the finding of a high-performance dye (see, for example, patent document 4). Furthermore, it has been reported that in a recordable optical recording medium 10 employing a conventional recording layer 12 containing a dye as a main component, such as that shown in Fig. 1, the shape of the groove and the thickness distribution of the substrate groove part 16 and substrate land part 15 of the recording layer 12 must be properly regulated (see, for example, patent document 5).

Namely, from the standpoint of securing a high reflectance, the usable dyes are limited to ones which have a relatively low extinction coefficient (about 0.01-0.3) at the wavelength of the recording/reproducing light as stated above. Consequently, it is impossible to reduce the thickness of the recording layer 12 because of the necessity of obtaining light absorption necessary for recording in the recording layer 12 and because of the necessity of obtaining an increased phase difference change through recording. Asa result,the recording layer 12 usually has a thickness of about $\lambda/(2n_s)$ ($n_s$ is the refractive index of the substrate 11). It is necessary to use a substrate 11 having a deep groove in order to bury the dye for the recording layer 12 in the groove and thereby diminish crosstalk. Since the dye-containing recording layer 12 is usually formed by spin coating (coating fluid application), to bury the dye in a deep groove to increase the groove-part thickness of the recording layer 12 is rather suitable. On the other hand, the layer formation by coating fluid application results in a difference in recording-layer thickness between the substrate groove part 16 and the substrate land part 15. However, this difference in recording-layer thickness is effective in stably obtaining tracking servo signals even when a deep groove is used.

Namely, both of signal characteristics and tracking signal characteristics in a recording pit portion can be kept satisfactory only when both of the groove shape defined by the surface of the substrate 11 in Fig. 1 and the groove shape defined by the boundary between the recording layer 12 and the reflective layer 13 are kept at proper values. The depth of the groove must be usually regulated to around $\lambda/(2n_s)$ ($\lambda$ is the wavelength of the recording/reproducing light beam 17, and $n_s$ is the refractive index of the substrate 11). The depth thereof is about 200 nm in CD-Rs and is about 150 nm in DVD-Rs. It is exceedingly difficult to form a substrate 11 having such a deep groove, and this is a factor which reduces the quality of the optical recording medium 10.

Especially in optical recording media for which a blue laser light is used, a groove having a depth as large as about 100 nm is necessary when $\lambda$ = 405 nm. This groove, on the other hand, is frequently formed so as to have a track pitch of from 0.2 μm to 0.4 μm for higher-density recording. To form such a deep groove at such a small pitch is more difficult, and practical mass-production from any conventional polycarbonate resin is almost impossible. Namely, there is a high possibility that it might be difficult to mass-produce a medium which has the conventional constitution and for which a blue laser light is used.

Many of the Examples in the patent documents cited above are ones according to Fig. 1, which illustrates a conventional disk constitution. However, the so-called film-side entrance constitution is attracting attention for realizing high-density recording with a blue laser, and a constitution employing an inorganic-material recording layer such as, e.g., a phase change type recording layer has been reported (see non-patent document 2). The constitution called film-side entrance type includes at least a reflective layer, a recording layer, and a cover layer which have been formed in this order on a substrate having a groove. In this constitution, a converged laser light for recording/reproducing is caused to enter the recording layer through the cover layer in contrast to that in the conventional constitution. The thickness of the cover layer in the so-called blue-ray disk (Blu-Ray) is usually about 100 μm (non-patent document 3). The reason why a recording/reproducing light is caused to enter the side having such a thin cover layer is that an objective lens having a higher NA (numerical aperture: usually in the range of 0.7-0.9; 0.85 for blue-ray disks) than conventional ones is used for converging the light. In the case where an objective lens having a high NA is used, the cover layer is required to have a thickness as small as about 100 μm so as to lessen the influence of the aberration caused by the thickness

of the cover layer. Many reports have been made on such recording at a blue-light wavelength or such layer constitution for film-side entrance (see non-patent document 4; see, for example, patent document 6). There also are many reports on related techniques (see non-patent document 5 to non-patent document 8; see, for example, patent documents 7 to 9).

Non-Patent Document 1: Proceedings of International Symposium on Optical Memory, (U.S.A.), Vol.4, 1991, pp. 99-108
Non-Patent Document 2: Proceedings of SPIE, (U.S.A.), Vol. 4342, 2002, pp.168-177
Non-Patent Document 3: Nikkei Electronics, ed., Hikari Disuku Kaitai Shinsho, Nikkei BP Inc., 2003, Chap.3
Non-Patent Document 4: Japanese Journal of Applied Physics, (Japan), Vol.42, 2003, pp.1056-1058
Non-Patent Document 5: Heitaro NAKAJIMA and Hiroshi OGAWA, Konpakuto Disuku Dokuhon, revised 3rd edition, Ohmsha, Ltd., 1996, p.168
Non-Patent Document 6: Japanese Journal of Applied Physics, (Japan), Vol.42, 2003, pp.914-918
Non-Patent Document 7: Japanese Journal of Applied Physics, (Japan), Vol.39, 2000, pp.775-778
Non-Patent Document 8: Japanese Journal of Applied Physics, (Japan), Vol.42, 2003, pp.912-914
Patent Document 1: JP-A-3-63943
Patent Document 2: JP-A-2-132656
Patent Document 3: JP-A-57-501980
Patent Document 4: JP-A-2002-301870
Patent Document 5: JP-A-4-182944
Patent Document 6: JP-A-2004-30864
Patent Document 7: JP-A-2003-266954
Patent Document 8: JP-A-2001-331936
Patent Document 9: JP-T-2005-504649 (The term "JP-T" as used herein means a published Japanese translation of a PCT patent application.)
Patent Document 10: International Publication 06/009107, pamphlet

## DISCLOSURE OF THE INVENTION

### PROBLEMS THAT THE INVENTION IS TO SOLVE

In the film-side entrance type phase-change medium, the development of which precedes, recording marks are formed in the cover layer groove part viewed from the light entrance side. This means that when this medium is viewed from the light entrance side, recording therein is the same as recording in the substrate groove part in a conventional substrate and that this medium can have almost the same layer constitution as CD-RWs or DVD-RWs. Actually, satisfactory properties have been obtained therewith. On the other hand, in the case of a recording layer containing a dye as a main component, in particular, one formed by coating fluid application, recording in the cover layer groove part is not easy. This is because in the spin coating of a substrate, the dye is generally apt to gather in the groove part of the substrate. Even if the dye is deposited in an appropriate thickness in the substrate land part, the dye usually gathers in the substrate groove part in a large amount. Consequently, the recording pits (recording marks) formed in the cover layer groove part are apt to protrude into the cover layer land part, resulting in enhanced crosstalk. Because of this, a track pitch reduction is impossible and there are limitations on higher-density recording.

However, in most of the known documents cited above, attention is directed mainly to the fact that recording in the cover layer groove part located on the side near to the light entrance side results in a decrease in reflective optical intensity as in conventional media. Alternatively, attention is directed to the decrease in reflectance which occurs in a mere planar state and for which a phase change in reflected lights due to a level difference in the groove part is not taken into account. In other words, these prior-art techniques are based on the assumption that a reflectance change in a planar state is utilized while minimizing the use of a phase difference. This assumption is ineffective in overcoming the crosstalk problem encountered in recording in the cover layer groove part and is unsuitable for a process for forming a recording layer through solution application. Namely, the prior-art techniques are not considered to effectively utilize a phase change to realize satisfactory recording in the cover layer land part. In particular, none of the prior-art media has a practical recording power margin for each of all mark lengths ranging from the smallest to the largest mark lengths in mark length modulation recording and has attained satisfactory jitter characteristics. Some of the present inventors developed an optical recording medium in which recording in the substrate groove part located on the side far from the light entrance side resulted in an increase in reflective optical intensity, as shown in patent document 10. However, in order for this recording medium to satisfy all properties including jitter and recording sensitivity, further improvements were necessary.

As described above, no film-side entrance type recordable medium has become known so far which has high

performance comparable to that of conventional CD-Rs or DVD-Rs, is inexpensive, has a recording layer containing a dye as a main component, and is capable of blue-laser recording/reproducing.

Results of an investigation on film-side entrance type media capable of blue-laser recording/reproducing which have a recording layer containing a porphyrin dye as a main component and having an extinction coefficient as high as about 0.5-1.3 have been reported (JP-A-2004-160742). However, none of these media attained satisfactory values of jitter and push-pull signal, which are practical indexes to recording characteristics. The reasons for this are as follows.

The optical properties of a recording layer in a pre-recording state (before recording) as examined at a recording/reproducing light wavelength of $\lambda$ include: complex refractive index $n_d^* = n_d - i \cdot k_d$, wherein the real part $n_d$ and the imaginary part $k_d$ are called refractive index and extinction coefficient, respectively. Through the formation of a recording pit portion, i.e., through recording, $n_d$ changes to $n_d' = n_d - \delta n_d$ and $k_d$ changes to $k_d' = k_d - \delta k_d$.

A distinction between the two terms "reflectance" and "reflective optical intensity", which will be used hereinafter, is explained. The term reflectance relates to the reflection of light which occurs at the boundary between two substances which are in a planar state and differ in optical properties; reflectance is the proportion of the intensity of reflected energy light to the intensity of incident energy light. Even when the recording layer is planar, the reflectance changes with changing optical properties. On the other hand, the term reflective optical intensity means the intensity of the light which has returned to a detector when a recording medium surface is read through a converged recording/reproducing light beam and an objective lens.

In a ROM medium, the pit part and the part in a pre-recording state (pit-surrounding part) are covered with the same reflective layer, and the reflectance of the reflective film in the pit part is equal to that in the part in a pre-recording state. On the other hand, a phase difference between the reflected light from the pit part and the reflected light from the part in a pre-recording state causes an interference effect. Due to this interference effect, the recording pit portion appears to have a changed reflective optical intensity (usually, to have a reduced reflective optical intensity). This interference effect is produced when a recording pit has been locally formed and the diameter of a recording/reproducing light beam includes both the recording pit portion and a surrounding part in a pre-recording state. This is because the reflected light from the recording pit portion interferes with the reflected light from the surrounding part due to a phase difference between these. On the other hand, in a recording medium in which any optical change occurs in the recording pit portion, a reflectance change occurs due to a change in the complex refractive index of the recording film itself even when the recording film is in a planar state having no recesses or protrusions. This reflectance change is referred to as "reflectance change occurring in a planar state" in this embodiment. In other words, that reflectance change is a reflectance change occurring in the recording film depending on whether the whole planar surface of the recording film has a pre-recording complex refractive index or the recording film has a post-recording complex refractive index. It is a change in reflective optical intensity which occurs regardless of interference between the reflected light from the recording pit and that from the surrounding part. On the other hand, when an optical change of a recording layer occurs locally in a pit part, and a reflected light from the recording pit portion and a reflected light from the surrounding part differ in phase, then the reflected lights undergo two-dimensional interference and the part surrounding the recording pit portion appears to have a locally changed reflective optical intensity.

As described above, the change in reflective optical intensity which occurs irrespective of the two-dimensional interference of reflected lights differing in phase is referred to as "change in reflective optical intensity occurring in a planar state" or "change in reflective optical intensity in a planar state", while the change in reflective optical intensity which occurs as a result of the two-dimensional interference of reflected lights differing in phase and respectively from the recording pit and the surrounding part is referred to as "(local) change in reflective optical intensity occurring due to a phase change" or "change in reflective optical intensity due to a phase change". Those two kinds of changes are thus distinguished in this embodiment.

In general, when a sufficient change in reflective optical intensity, i.e., a sufficient recording signal amplitude (or optical contrast), is to be obtained using the "change in reflective optical intensity due to a phase difference", the recording layer 22 itself must undergo an exceedingly large change in refractive index. For example, in DC-Rs or DVD-Rs, the dye-containing recording layer is required to have a real part of refractive index which is 2.5-3.0 before recording and becomes about 1-1.5 through recording. Furthermore, it has been considered that the imaginary part $k_d$ of the pre-recording complex refractive index of the dye-containing recording layer preferably is smaller than about 0.1, from the standpoint of obtaining a high reflectance in a pre-recording state for ROM interchange. In addition, the recording layer 22 has been required to have a slightly large thickness of from 50 nm to 100 nm. This is because in case where the recording layer 22 has a thickness smaller than that, a light mostly passes through this recording layer 22 and, hence, light absorption necessary for a sufficient change in reflective optical intensity and for pit formation cannot occur. In such a thick dye-containing recording layer, the local phase change due to a deformation in the pit part is used as an auxiliary only. On the other hand, in the ROM media, it is thought that no local change in refractive index occurs in the recording pit portion and a "change in reflective optical intensity due to a phase change" only is detected. For obtaining satisfactory recording quality, it is desirable that when the two kinds of changes in reflective optical intensity in the recording pit portion occur so as to mingle with each other, the two kinds of changes should enhance each other. The term "two kinds of changes

in reflective optical intensity enhance each other" means that the changes in reflective optical intensity which occur by the respective mechanisms have the same direction, i.e., both of these changes are increases or decreases in reflective optical intensity.

With respect to the "change in reflective optical intensity in a planar state", a decrease in extinction coefficient $k_d$ in the complex refractive index of a recording layer brings about an increase in reflectance and hence an increase in reflective optical intensity. In conventional CD-Rs or DVD-Rs, this change in extinction coefficient has been undesirable because recording is conducted by utilizing a decrease in reflective optical intensity in the recording pit portion as stated above (this recording is hereinafter sometimes referred to as HtoL recording). Because of this, a dye has been utilized so that the wavelength of a recording/reproducing light is located on the longer-wavelength side of the main absorption band, which tends to result in a large value of $n_d$ and a small value of $k_d$ for the recording layer in a pre-recording state. A value of $n_d$ as large as about 2.5-3 as shown above is necessary for this manner of dye utilization. However, a dye having such a large value of $n_d$ at around 400 nm is difficult to actually obtain. There has hence been a problem that satisfactory recording characteristics cannot be obtained so long as the conventional recording principle is used as it is.

The invention has been achieved in order to eliminate such problems.

An object of the invention is to provide an optical recording medium which is excellent in jitter characteristics and tracking characteristics, has satisfactory recording/reproducing characteristics, and is capable of extremely high-density recording.

MEANS FOR SOLVING THE PROBLEMS

In view of the problems described above, the present inventors diligently made investigations on film-side entrance type media capable of blue-laser recording/reproducing which have a recording layer containing a porphyrin dye having a specific structure as a main component. As a result, they have found that a film-side entrance type medium having satisfactory recording characteristics can be obtained by employing a constitution in which that part of a guide groove which is far from the cover layer side where a recording/reproducing light beam enters is used as a recording groove portion and recording is conducted so that a recording pit portion formed in this recording groove portion has a higher reflective optical intensity than the recording groove portion which has not been used for recording (hereinafter, this recording is sometimes referred to as LtoH recording).

An essential point of the invention resides in an optical recording medium which comprises a substrate having a guide groove and the following layers on the substrate in the following order:

a layer having a light-reflecting function,
a recording layer containing a porphyrin compound represented by the following formula [I] as a main component, and
a cover layer capable of transmitting a recording/reproducing light entering the recording layer,
wherein
the recording/reproducing light has a wavelength $\lambda$ of from 350 nm to 450 nm, and
when a portion of the guide groove at a side far from a surface where a recording/reproducing light beam obtained by converging the recording/reproducing light enters the cover layer is represented as a recording groove portion, then a recording pit portion, which is formed in the recording groove portion, has a higher reflective optical intensity than the recording groove portion in an unrecorded state:

[Ka-1]

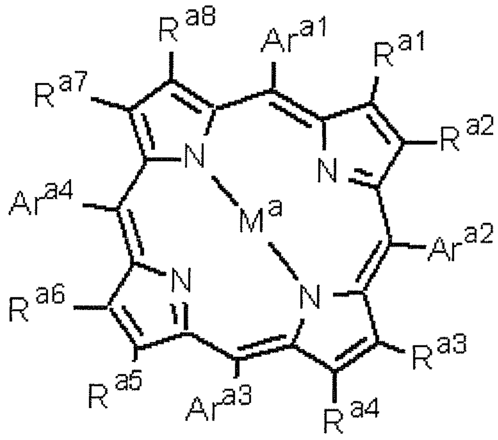

[I]

(In general formula [I], $Ar^{a1}$ to $Ar^{a4}$ each independently represent an aromatic ring and each may have a plurality of substituents; $R^{a1}$ to $R^{a8}$ each independently represent a hydrogen atom or any substituent; and $M^a$ represents a metal cation having a valence of 2 or higher, provided that when $M^a$ has a valence of 3 or higher, then the molecule may further has a counter anion so that the molecule as a whole is neutral.)

It is preferred that in the recording pit portion, voids are formed in an inner part of the recording layer or at the boundary between the recording layer and a layer adjoining the recording layer, and the formation of voids is accompanied by a shape change in which the recording layer swells toward the cover layer side.

It is also preferred that the recording layer should contain a tetraarylporphyrin compound represented by general formula (II) as a main component.

[Ka-2]

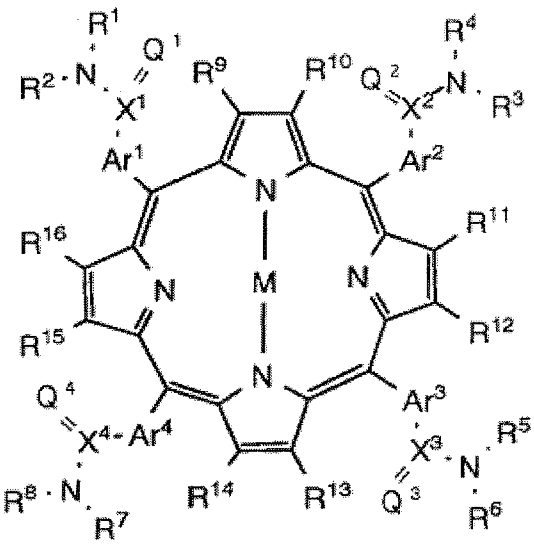

[II]

(In formula [II], $X^1$ to $X^4$ each independently represent an atom having a valence of 4 or higher, provided that when $X^1$ to $X^4$ are an atom having a valence of 5 or higher, these $X^1$ to $X^4$ may further have any substituent, and when $X^1$ to $X^4$ are an atom having a valence of 6 or higher, these $X^1$ to $X^4$ may respectively have two $=Q^1$s to two $=Q^4$s, wherein the two $Q^1$s to the two $Q^4$s each may be the same or different;
$Q^1$ to $Q^4$ each independently represent an atom in Group 16 of the periodic table;
$Ar^1$ to $Ar^4$ each independently represent an aromatic ring and each may have a substituent other than $X^1$ to $X^4$;
$R^1$ to $R^8$ each independently represent an organic group having 20 or less carbon atoms;
$R^9$ to $R^{16}$ each independently represent a hydrogen atom or an electron-attracting substituent; and
M represents a metal cation having a valence of 2 or higher, provided that when M has a valence of 3 or higher, then the molecule may further have a counter anion so that the molecule as a whole is neutral,
provided that $R^1$ and $R^2$, $R^3$ and $R^4$, $R^5$ and $R^6$, or $R^7$ and $R^8$ may be bonded to each other to form a ring.)

It is further preferred that the optical recording medium should further comprise an interfacial layer between the recording layer and the cover layer, in which the interfacial layer prevents a material of the recording layer and a material of the cover layer from mixing.

It is desirable that the optical recording medium should further comprise an interlayer between the layer having a light-reflecting function and the recording layer.

It is also desirable that the interlayer should contain at least one element selected from the group consisting of Ta, Nb, V, W, Mo, Cr, and Ti.

Furthermore, it is preferred that when a boundary of the layer having a light-reflecting function, which faces the recording layer, is represented as a reflection reference plane, and a portion of the guide groove in which the recording pit portion is not formed, is represented as a recording land portion, then the difference in level $d_{GL}$ between the recording groove portion and the recording land portion, as defined by the reflection reference plane, is 30-70 nm.

## ADVANTAGE OF THE INVENTION

According to the invention, which has the constitution described above, an optical recording medium having satisfactory jitter characteristics and capable of extremely high-density recording is obtained.

## BRIEF DESCRIPTION OF THE DRAWINGS

[Fig. 1] Fig. 1 is a view illustrating a recordable medium (optical recording medium) having a conventional constitution including a recording layer containing a dye as a main component.
[Fig. 2] Fig. 2 is a view illustrating a recordable medium (optical recording medium) which has a film-side entrance constitution including a recording layer containing a dye as a main component and to which this embodiment is applied.
[Fig. 3] Fig. 3 is views for illustrating reflected lights resulting from the entrance of a recording/reproducing light beam from the substrate side of the substrate entrance constitution shown in Fig. 1 as a conventional constitution.
[Fig. 4] Fig. 4 is views illustrating the layer constitution of a film-side entrance type medium and a phase difference in recording in the cover layer land part.
[Fig. 5] Fig. 5 is views illustrating the layer constitution of a film-side entrance type medium and a phase difference in recording in the cover layer groove part.
[Fig. 6] Fig. 6 is a presentation showing a relationship between reflective optical intensity and a phase difference caused by a recording groove portion and a recording land portion.
[Fig. 7] Fig. 7 is a view illustrating the constitution of a four-segmented detector which detects recording signals (sum signals) and push-pull signals (difference signals).
[Fig. 8] Fig. 8 is presentations showing signals detected after passing output signals obtained while actually crossing groove parts and land parts through a low-frequency transmission filter (cut-off frequency, about 30 kHz).
[Fig. 9] Fig. 9 is graphs showing an absorption spectrum of the recording-layer dye used in Example 1 and the wavelength dependence of the nd and kd of the dye.
[Fig. 10] Fig. 10 is graphs showing an absorption spectrum of the recording-layer dye used in Example 2 and the wavelength dependence of the nd and kd of the dye.
[Fig. 11] Fig. 11 is transmission electron microscope photographs of sections of the disk used in Example 1.

## DESCRIPTION OF THE REFERENCE NUMERALS AND SIGNS

10, 20 ... optical recording medium, 11, 21 ... substrate, 12, 22 ... recording layer, 13, 23 ... reflective layer,

14 ... protective coat layer, 15 ... substrate land part, 16 ... substrate groove part, 16m, 25m, 26m ... mixed layer, 16p, 25p, 26p ... recording pit portion, 17, 27 ... recording/reproducing light beam, 18, 28 ... objective lens, 24 ... cover layer, 25 ... cover layer land part, 26 ... cover layer groove part, 19, 29 ... recording/reproducing light beam entrance side.

BEST MODE FOR CARRYING OUT THE INVENTION

Best modes for carrying out the invention (hereinafter referred to as embodiments of the invention) are explained below. The invention should not be construed as being limited to the following embodiments, and various modifications of the invention can be made within the spirit of the invention.
Fig. 2 is a partial sectional view diagrammatically illustrating the layer constitution of an optical recording medium according to an embodiment of the invention. The optical recording medium 20 (optical recording medium as this embodiment) shown in Fig. 2 is a recordable optical recording medium having a film-side entrance constitution. This recording medium has a structure composed of a substrate 21 having a guide groove and at least the following layers superposed on the substrate 21 in the following order: a layer having a reflecting function (reflective layer 23); a recording layer 22 having a light-absorbing function and containing as a main component a dye which, in a pre-recording state (before recording), has the property of absorbing a recording/reproducing light as will be described later with regard to Fig. 2; and a cover layer 24. Recording or reproducing therein is conducted by causing a converged recording/reproducing light beam 27 to enter the medium through an objective lens 28 from the cover layer 24 side. Namely, this optical recording medium 20 has a "film-side entrance constitution" (referred to also as reverse stack). Hereinafter, the layer having a reflecting function is referred to simply as "reflective layer 23", and the recording layer having a light-absorbing function and containing a dye as a main component is referred to simply as "recording layer 22". The conventional constitution described above by reference to Fig. 1 is referred to as "substrate entrance constitution".
In causing a recording/reproducing light beam 27 to enter the cover layer 24 side of the film-side entrance constitution illustrated in Fig. 2, an objective lens having a high numerical aperture (hereinafter referred to as NA) of about 0.6-0.9 is generally used for high-density recording. The wavelength $\lambda$ of the recording/reproducing light to be used in the invention is especially preferably in the wavelength range of from 350 nm to 450 nm.
In this embodiment, that portion of the guide groove which is far from the side where the recording/reproducing light beam 27 enters the cover layer 24 (recording/reproducing light beam entrance side 29) in Fig. 2 (i.e., that portion of the guide groove which is far from the recording/reproducing light beam entrance side) is used as a recording groove portion. Recording is conducted in such a manner that a recording pit portion formed in the recording groove portion has a higher reflective optical intensity than the recording groove portion which has not been used for recording. In the main mechanism thereof, an increase in reflective optical intensity occurs due to a decrease in extinction coefficient in the recording pit portion and a phase change of the reflected light. The term "phase change of the reflected light" means a change through recording of the optical path length of the incident light and reflected light in the recording groove portion.
With regard to the optical recording medium 20 of the film-side entrance type, that portion of the guide groove which is far from the side where the recording/reproducing light beam 27 enters the cover layer 24 (recording/reproducing light beam entrance side 29) (that guide groove part coincides with the groove part of the substrate 21) is herein referred to as a cover layer land part (in-groove) 25, while the guide groove land part which is near to the side 29 where the recording/reproducing light beam 27 enters (the guide groove land part coincides with the land part of the substrate 21) is herein referred to as a cover layer groove part (on-groove) 26 (the terms on-groove and in-groove are ones used in non-patent document 2).
More specifically, the invention can be practiced by employing the following contrivances.
(1) In a substrate 21 is formed a groove which has such a depth that a reflected light from the cover layer land part in a pre-recording state and a reflected light from the cover layer groove part have a phase difference $\Phi$ of about n/2 to n. A recording layer 22 containing a dye as a main component is formed which in the cover layer land part (in-groove) is thin and has a thickness smaller than the groove depth and which in the cover layer groove part (on-groove) is extremely thin and has an almost zero thickness. A recording/reproducing light beam is caused to enter the cover layer land part from the cover layer side to alter the recording layer and form a recording pit, in which an increase in reflective optical intensity due to a phase change is utilized. Thus, the dye-containing medium produced by coating fluid application has greatly improved performance as compared with conventional on-groove HtoL recording. Furthermore, recording at a high trackpitch density (e. g. , 0.2 $\mu$m to 0.4 $\mu$m) with reduced crosstalk is possible. In addition, groove formation at such a high track pitch density is facilitated.
A feature of the dye-containing medium produced by coating fluid application (spin coating) resides in that the dye gathers preferentially in the substrate groove part. This medium hence has an advantage concerning process that a dye-containing recording layer which in the cover layer land part (in-groove) is thin and has a thickness smaller than the groove depth and which in the cover layer groove part (on-groove) is extremely thin and has an almost zero thickness is apt to be naturally formed.
(2) For attaining a refractive-index change in a recording pit portion, the formation of voids in an inner part of

the recording layer 22 or in a boundary part of the layer 22 is utilized. Within the voids, $n_d$' and $k_d$' can be regarded as $n_d' \approx 1$ and $k_d' \approx 0$. It is preferred that a deformation in which the recording layer 22 swells towards the cover layer 24 should be used in combination with the void formation. A flexible deformation-accelerating layer made of, e.g., a pressure-sensitive adhesive having a glass transition temperature not higher than room temperature is formed at least on the recording layer 22 side of the cover layer 24 to promote the deformation. Thus, not only recording results in phase changes which are in the same direction to increase the reflective optical intensity (the recorded signals have a waveform with no distortion), but also even a relatively small refractive-index change can result in a large phase change (large recorded-signal amplitude). Furthermore, a decrease in the extinction coefficient of the recording layer can be positively utilized, and an increase in reflective optical intensity due to the resultant change in reflectance occurring in a planar state can also be used. The techniques described above can be used to realize an optical recording medium which includes a substrate having a guide groove and at least the following layers formed on the substrate in the following order: a layer having a light-reflecting function; a recording layer containing as a main component a dye which, in a pre-recording state, has a light-absorbing function at the wavelength of a recording/reproducing light; and a cover layer through which the recording/reproducing light enters the recording layer. In this optical recording medium, when a portion of the guide groove at a side far from a surface where a recording/reproducing light beam obtained by converging the recording/reproducing light enters the cover layer is represented as a recording groove portion, then a recording pit portion formed in the recording groove portion has a higher reflective optical intensity than the recording groove portion in an unrecorded state. A feature of this optical recording medium resides in that recorded signals with LtoH polarity which have a high degree of modulation and no distortion are obtained from the recording pit portion.

(3) As the dye which has a light-absorbing function and serves as a main component of the recording layer, use is made of a porphyrin compound represented by general formula [I] given above.

This porphyrin compound has a large main absorption band having an exceedingly sharp peak and located on the longer-wavelength side of about 400 nm, which is the wavelength of a recording/reproducing light. Because of this, there are the following advantages when the medium is used as an optical recording medium for which a recording/reproducing wavelength of around 400 nm is used. This porphyrin compound, before recording, has a relatively high extinction coefficient of about 0.5-1.3, and this extinction coefficient decreases to nearly zero through recording because the compound is efficiently decomposed to form voids. Namely, the amount of the decrease in extinction coefficient through recording is exceedingly large. Because of this, the amount of light absorbed in the recording pit portion decreases considerably, while the intensity of reflected light increases remarkably. Consequently, it is easy to obtain a large signal amplitude in the recording mode in which the recording pit portion increases in reflective optical intensity through recording. There also is an advantage that light absorption occurs satisfactorily during recording due to the high extinction coefficient and, hence, the power for recording can be efficiently used and satisfactory recording sensitivity can be attained. On the other hand, a feature resides in that a dye having a relatively low refractive index of about 0.5-1 can be selected. In the case where a recording groove portion has been filled with a dye, a calculated optical depth of the groove is determined by the product of the absolute depth of the groove and the refractive index. When the same groove depth is used, the optical depth fluctuates with refractive index. When a low refractive index is employed, the optical groove depth can be reduced. Because of this, even in a constitution contrived so as to obtain satisfactory jitter characteristics, tracking signals can be easily controlled within a range where tracking is maintained. Consequently, signal characteristics are obtained which are comparable to those of tracking signals in blue-ray disks which have already been put into the market, e.g., ones employing an inorganic-material recording layer. When the recording medium of the invention is used with an optical recording/reproducing apparatus, interchangeability is easily secured.

The porphyrin compound having the constitution according to the invention can be one soluble in fluorinated alcohols or the like. The compound is hence suitable for mass-production processes employing spin coating.

A reflection reference plane is defined here for the following explanation. That boundary (surface) of the reflective layer which faces the recording layer and serves as the main reflective surface is taken as the reflection reference plane. The term main reflective surface means the reflective boundary which contributes, in a highest proportion, to a reproducing reflected light. In Fig. 2, which shows an optical recording medium 20 to which this embodiment is applied, the main reflective surface lies at the boundary between the recording layer 22 and the reflective layer 23. This is because the recording layer 22 employed in the optical recording medium 20 to which this embodiment is applied is relatively thin and has a relatively low absorbance and, hence, most of light energy merely passes through the recording layer 22 and can reach the boundary between the recording layer 22 and the reflective surface. Incidentally, there are other boundaries which can cause reflection, and the reflective optical intensity for a reproducing light is governed by the overall contribution of the intensities and phases of reflected lights from the respective boundaries. In the optical recording medium 20 to which this embodiment is applied, the contribution made by reflection at the main reflective surface accounts for most of the overall contribution and, hence, to take account of only the intensity and phase of the light reflected at the main reflective surface suffices. For this reason, the main reflective surface is taken as the reflection reference plane.

In this embodiment, pits (marks) are first formed in the cover layer land part 25 in Fig. 2 mainly for the purpose of utilizing the recording layer 22 formed by the spin coating method, which facilitates production. Use of the method of

formation by coating fluid application rather has an advantage that a recording layer in which the thickness thereof in the cover layer land part (substrate groove part) 25 is larger than the thickness thereof in the cover layer groove part (substrate land part) 26 is formed naturally. However, the recording-layer thickness in the cover layer land part 25 is not so large as to give a sufficient change in reflective optical intensity based only on the "change in reflective optical intensity in a planar state". When this change is used in combination with the "change in reflective optical intensity due to interference", a large change in reflective optical intensity (a high degree of modulation) can be realized in the pit part formed in the cover layer land part 25 in a relatively small recording-layer thickness.

This embodiment is characterized in that when a change in reflected-light phase in the recording pit portion is utilized, the change is caused so that the difference in level between the cover layer land part 25 and the cover layer groove part 26 which are constituted of the reflection reference plane in Fig. 2 appears optically smaller after recording than before recording. In this operation, in order to stabilize servo-tracking, a phase change which does not invert push-pull signals and which gives a post-recording reflective optical intensity higher than a pre-recording reflective optical intensity is first caused in recording pits.

The layer constitution of the optical recording medium 20 shown in Fig. 2, which has a film-side entrance constitution and to which this embodiment is applied, is explained while comparing it with the optical recording medium 10 having a substrate entrance constitution shown in Fig. 1, which was explained as a conventional constitution. The layer constitution of the optical recording medium 10 shown in Fig. 1 and that of the optical recording medium 20 shown in Fig. 2 are distinguishably explained here while directing attention to the phase of a light to be reflected by the reflection reference plane. For this purpose, the case where recording is conducted in the substrate groove part 16 in Fig. 1 and the cases where recording is conducted in the cover layer land part 25 and in the cover layer groove part 26 in Fig. 2 are investigated using Fig. 3, Fig. 4, and Fig. 5, respectively.

Fig. 3 is views for illustrating reflected lights resulting from the entrance of a recording/reproducing light beam 17 from the substrate 11 side of the substrate entrance constitution shown in Fig. 1 as a conventional constitution.
Fig. 4 is views illustrating the layer constitution of a film-side entrance type medium (optical recording medium 20) and a phase difference in recording in the cover layer land part 25.
Fig. 5 is views illustrating the layer constitution of a film-side entrance type medium (optical recording medium 20) and a phase difference in recording in the cover layer groove part 26.
Namely, Fig. 4 and Fig. 5 are views for explaining reflected lights in the optical recording medium 20 having a film-side entrance constitution shown in Fig. 2, the reflected lights being ones derived from a recording/reproducing light beam 27 entering from the entrance side 28 of the cover layer 24 in the film-side entrance constitution. In Fig. 4, pits are formed in the cover layer land part (substrate groove part) 25 in the optical recording medium 20 to which this embodiment is applied. In Fig. 5, pits are formed in the cover layer groove part (substrate land part) 26 in the same film-side entrance constitution for the purpose of making an explanation in comparison with the effect of the invention.

In each of Fig. 3, Fig. 4, and Fig. 5, (a) is a sectional view of a pre-recording state and (b) is a sectional view of a post-recording state including recording pits. Hereinafter, any groove or land part in which recording pits are formed is referred to as "recording groove portion", and the part between such parts is referred to as "recording land portion". Namely, in Fig. 3, which illustrates a conventional constitution, the substrate groove part 16 is a "recording groove portion" and the recording land portion 15 is a "recording land portion". In Fig. 4 according to the invention, the cover layer land part 25 is a "recording groove portion" and the cover layer groove part 26 is a "recording land portion". On the other hand, in Fig. 5, which is for a comparative explanation, the cover layer groove part 26 is a "recording groove portion" and the cover layer land part 25 is a "recording land portion".

First, in determining a phase difference between a reflected light from a recording groove portion and a reflected light from a recording land portion, a phase reference plane is defined as A-A'. In Fig. 3, Fig. 4, and Fig. 5, the planes A-A' in Figs. (a) s, which showpre-recording states, respectively correspond to a recording layer 12/substrate 11 boundary in the recording groove portion (Fig. 3 (a)), a recording layer 22/cover layer 24 boundary in the recording land portion (Fig. 4 (a)), and a recording layer 22/cover layer 24 boundary in the recording groove portion (Fig. 5 (a)). On the other hand, in Figs. (b)s showing post-recording states in Fig. 3, Fig. 4, and Fig. 5, the planes A-A' respectively correspond to a recording layer 12 (mixed layer 16m)/substrate 11 boundary in the recording groove portion (Fig. 3 (b)), a recording layer 22/cover layer 24 boundary in the recording land portion (Fig.4 (b)), and a recording layer 22 (mixed layer 26m)/ cover layer 24 boundary in the recording groove portion (Fig. 4 (b)). Light beams which have not reached the plane A-A' (which are on the entrance side) have no optical difference between light paths. Furthermore, a reflection reference plane in the recording groove portion before recording is defined as B-B', while the recording groove portion bottom plane in the substrate 21 (Fig. 3) or cover layer 24 (Fig. 4) before recording (recording layer 12/substrate 11 boundary or recording layer 22/cover layer 24 boundary) is defined as C-C'. In the pre-recording states shown in Fig. 3 and Fig. 5, A-A' coincides with C-C'.

The recording layer thickness in the substrate groove part before recording is expressed by $d_G$, and the thickness thereof in the substrate land part is expressed by $d_L$. The difference in level between the recording groove portion at the reflection reference plane and the recording land portion is expressed by $d_{GL}$, and the difference in level for the recording

land portion on the substrate surface is expressed by $D_{GLS}$. In the case shown in Fig. 3, $d_{GL}$ depends on the manner of filling the recording groove portion with the recording layer 12 and has a value different from that of $D_{GLS}$. In the cases shown in Fig. 4 and Fig. 5, the recording layer 23 in the recording groove portion and that in the recording land portion usually have almost the same thickness although this depends on the state in which the reflective layer 23 has been deposited in the recording groove portion and recording land portion. Because of this, a level difference on the substrate 21 surface is entirely reflected and, hence, $d_{GL} = d_{GLS}$.

The refractive indexes of the substrates 11 and 21 are expressed by $n_s$, and the refractive index of the cover layer 24 is expressed by $n_c$. The formation of recording pits generally brings about the following changes. In the recording pit portion 16p, 25p, or 2 6p, the refractive index of the recording layer 12 or 22 changes from $n_d$ to $n_d' = n_d - \delta n_d$. Furthermore, in the recording pit portion 16p, 25p, or 26p, the recording layer 12 or 22 undergoes mingling at its entrance side boundary. Specifically, the recording layer 12 mingles with the substrate 11, or the substrate 21 mingles with the cover layer 24 material, whereby a mixed layer is formed. In addition, the recording layer 12 or 22 undergoes a volume change and the position of the reflection reference plane (recording layer/reflective layer boundary) shifts. Usually, the formation of a mixed layer by mingling between the substrate 11 or 21 or the cover layer 24 material, which are organic substances, and the reflective-layer material, which is a metal, is negligibly slight. It is therefore assumed that mingling between the recording layer 12 and substrate 11 or between the recording layer 22 and cover layer 24 material occurs at the recording layer 12/substrate 11 boundary (Fig. 1) or the recording layer 22/cover layer 24 boundary (Fig. 2) to form a mixed layer 16m, 25m, or 26m having a thickness $d_{mix}$. The refractive indexes of the mixed layers 16m, 25m, and 26m are regarded as $n_s' = n_s - \delta n_s$ (Fig. 3 (b)) and $n_c' = n_c - \delta n_c$ (Fig. 4 (b) and Fig. 5 (b)).

Through the recording, the recording layer 12/substrate 11 boundary or the recording layer 22/cover layer 24 boundary shifts by $d_{bmp}$ from C-C' as a reference. When the boundary shifts toward an inner part of the recording layer 12 or 22 as shown in Fig. 3, Fig. 4, and Fig. 5, $d_{bmp}$ has a positive value. Conversely, when $d_{bmp}$ has a negative value, this means that the recording layer 12 or 22 expands beyond the plane C-C'. In case where an interfacial layer is disposed between the recording layer 12 and the substrate 11 in Fig. 3 or between the recording layer 22 and the cover layer 24 in Fig. 4 or Fig. 5 so as to prevent mingling between the two layers, the value of $d_{mix}$ can be 0. It should, however, be noted that a $d_{bmp}$ deformation can occur due to a volume change of the recording layer 12 or 22. In the case where no dye mingling occurs, the change in refractive index of the substrate 21 or cover layer 24 which is caused by a $d_{bmp}$ deformation is thought to exert a negligibly slight influence.

On the other hand, the distance by which the reflection reference plane shifts in the recording groove portion is expressed by $d_{pit}$ in terms of distance from the position B-B' of the reflection reference plane before recording. When the reflection reference plane shifts in such a direction that the recording layer 12 or 22 contracts (the reflection reference plane shifts toward an inner part of the recording layer 12 or 22) as shown in Fig. 3, Fig. 4, and Fig. 5, then $d_{pit}$ has a positive value. Conversely, when $d_{pit}$ has a negative value, this means that the recording layer 12 or 22 expands beyond the plane B-B'. After recording, the thickness of the recording layer is as follows.

$$d_{Ga} = d_G - d_{pit} - d_{bmp} \qquad (1)$$

Incidentally, $d_{GL}$, $d_G$, $d_L$, $d_{mix}$, $n_d$, $n_c$, $n_s$, and $d_{Ga}$ each do not have a negative value because of the definition thereof and physical properties.

For the modeling of a recording pit described above and for the following method of phase estimation, known methods were used (non-patent document 1).

A phase difference between reproducing lights (reflected lights) from a recording groove portion and a recording land portion in the phase reference plane A-A' are determined with respect to each of a pre-recording state and a post-recording state. The phase difference between reflected lights from the recording groove portion and recording land portion before recording is expressed by $\Phi b$, while the phase difference between reflected lights from the recording pit portion 16p, 25p, or 26p and recording land portion after recording is expressed by $\Phi a$. These two phase differences are inclusively expressed by $\Phi$. The definition of these is as follows.

$$\phi = \phi b \text{ or } \phi a$$

$$= \text{(phase of reflected light from recording land portion)} - \text{(phase of recording groove portion (including pit part after recording))} \quad (2)$$

$$\phi = \phi b \text{ or } \phi a$$

$$= (2\pi/\lambda)\cdot 2\cdot\{\text{(optical path length of recording land portion)} - \text{(optical path length of recording groove portion (including pit part after recording))}\} \quad (3)$$

The reason why equation (3) includes coefficient 2 is that the optical path length for incident light and that for reflected light are taken into account.
In Fig. 3, the following equations hold.

$$\phi b_1 = (2\pi/\lambda)\cdot 2\cdot(n_s\cdot d_{GL}+n_d\cdot d_L-n_d\cdot d_G)$$
$$= (4\pi/\lambda)\cdot\{n_s\cdot d_{GL}-n_d\cdot(d_G-d_L)\} \quad (4)$$

$$\phi a_1 = (2\pi/\lambda)\cdot 2\cdot\{n_s\cdot d_{GL}+n_s\cdot(d_{mix}-d_{bmp})+n_d\cdot d_L-[(n_d-\delta n_d)\cdot(d_G-d_{pit}-d_{bmp})+(n_s-\delta n_s)\cdot d_{mix}]\}$$

$$= \phi b_1+\Delta\phi \quad (5)$$

In equation (5), $\Delta\Phi$ is as follows.

$$\Delta\phi = (4\pi/\lambda)\{(n_d-n_s)\cdot d_{bmp}+n_d\cdot d_{pit}+\delta n_s\cdot d_{mix}+\delta n_d\cdot(d_G-d_{pit}-d_{bmp})\} \quad (6)$$

Because the recording groove portion is located nearer to the entrance side than the recording land portion, $\Phi b_1>0$.
On the other hand, in Fig. 4, the following equations hold.

$$\phi b_2 = (2\pi/\lambda)\cdot 2\cdot\{n_d\cdot d_L-[n_d\cdot d_G+n_c\cdot(d_L+d_{GL}-d_G)]\}$$
$$= (4\pi/\lambda)\cdot\{(n_c-n_d)\cdot(d_G-d_L)-n_c\cdot d_{GL}\} \quad (7)$$

$$\phi a_2 =$$
$$(2\pi/\lambda)\cdot 2\cdot\{(n_d\cdot d_L-[n_c\cdot(d_L+d_{GL}-d_G+d_{bmp}-d_{mix})+(n_d-\delta n_d)\cdot(d_G-d_{pit}-d_{bmp})$$
$$+(n_c-\delta n_c)\cdot d_{mix}])$$
$$= \phi b_2+\Delta\phi \quad (8)$$

In equation (8), $\Delta\Phi$ is as follows.

$$\Delta\phi = (4\pi/\lambda)\{(n_d-n_c)\cdot d_{bmp}+n_d\cdot d_{pit}+\delta n_c\cdot d_{mix}+\delta n_d\cdot(d_G-d_{pit}-d_{bmp})\} \quad (9)$$

Because the recording groove portion is located farther from the entrance side than the recording land portion, $\Phi b_2<0$.

Furthermore, in Fig. 5, the following equations hold.

$$\phi b_3 = (2\pi/\lambda)\cdot 2\cdot\{n_d\cdot d_G+n_c\cdot(d_L+d_{GL}-d_G)-n_d\cdot d_L\}$$
$$= (4\pi/\lambda)\cdot\{(n_d-n_c)\cdot(d_G-d_L)+n_c\cdot d_{GL}\} \quad (10)$$

$$\phi a_3 =$$
$$(2\pi/\lambda)\cdot 2\cdot\{n_d\cdot d_G+n_c\cdot(d_L+d_{GL}-d_G)+n_c\cdot(d_{mix}-d_{bmp})-[(n_d-\delta n_d)\cdot(d_L-d_{pit}-$$
$$d_{bmp})+(n_c-\delta n_c)\cdot d_{mix}]\}$$

$$= \phi b_3+\Delta\phi \quad (11)$$

In equation (11), $\Delta\Phi$ is as follows.

$$\Delta\phi = (4\pi/\lambda)\{(n_d-n_c)\cdot d_{bmp}+n_d\cdot d_{pit}+\delta n_c\cdot d_{mix}+\delta n_d\cdot(d_L-d_{pit}-d_{bmp})\} \quad (12)$$

Because the recording groove portion is located nearer to the entrance side than the recording land portion, $\Phi b_3>0$.

$\Delta\Phi$ represents a phase change in the recording pit portion generated by recording. In all those cases, $\Delta\Phi$ can be expressed with the same equation, except that $d_G$ has been replaced by $d_L$ in equation (12). Hereinafter, $\Phi b_1$, $\Phi b_2$, and $\Phi b_3$ are inclusively expressed by $\Phi b$, and $\Phi a_1$, $\Phi a_2$, and $\Phi a_3$ are inclusively expressed by $\Phi a$.

The degree of signal modulation m caused by $\Delta\Phi$ is as follows.

$$m\ 1-\cos(\Delta\phi) = \sin^2(\Delta\phi/2) \qquad (13)$$

$$\approx (\Delta\phi/2)^2 \qquad (14)$$

The rightest side (14) is an approximation in the case where $\Delta\Phi$ is small.

A large value of $|\Delta\Phi|$ results in a high degree of modulation. Usually, however, the phase change $|\Delta\Phi|$ caused by recording is in the range of from 0 to n and is thought to be usually about n/2 or smaller. The reasons for this are as follows. Actually, such a large phase change has not been reported with respect to conventional dye-containing recording layers including those employed in conventional CD-Rs and DVD-Rs. Furthermore, in a blue wavelength region, smaller phase changes tend to result due to the general properties of dyes as stated above. Conversely, a change in which $|\Delta\Phi|$ exceeds $\pi$ poses a possibility that the polarity of push-pull signals might be inverted through recording and a possibility that push-pull signals might undergo too large a change. Such changes are undesirable from the standpoint of stably maintaining servo-tracking.

Fig. 6 is a presentation showing a relationship between reflective optical intensity and a phase difference caused by a recording groove portion and a recording land portion. In Fig. 6 is shown a relationship between $|\Phi|$ and a reflective optical intensity in a recording groove portion in pre-recording and post-recording states. For the purpose of simplification, absorption by the recording layer 12 or 22 is neglected here. In the constitutions shown in Fig. 3 and Fig. 5, $\Phi b$ generally satisfies $\Phi b>0$. Consequently, when $\Delta\Phi>0$, then the change is in the direction where $|\Phi|$ in Fig. 6 increases. Namely, this indicates that $\Phi b$ increases to become $\Phi a$.

On the other hand, in the constitution shown in Fig. 4, $\Phi b$ generally satisfies $\Phi b<0$. Consequently, when $\Delta\Phi<0$, the change is in the direction where $|\Phi|$ in Fig. 6 increases. Namely, the relationship in this case corresponds to one obtained by multiplying the abscissa in Fig. 6 by -1. That case hence means that $|\Phi b|$ increases to become $|\Phi a|$.

The reflectance of a recording groove portion in a planar state ($d_{GL}=0$) is expressed by R0. As the value of $|\Phi|$ increases, an interference effect is produced due to a phase difference $\Phi b$ between reflected lights from the recording groove portion and recording land portion and the reflective optical intensity decreases. When the phase difference $|\Phi|$ becomes equal to n (half-wavelength),the reflective optical intensity becomes minimum. The reflective optical intensity comes to increase when $|\Phi|$ further increases beyond n, and becomes maximum when $|\Phi| = 2\pi$.

The intensity of push-pull signals is maximum when the phase difference $|\Phi|$ is $\pi/2$, and is minimum when $|\Phi|$ is n, resulting in polarity inversion. Thereafter, the intensity thereof increases and decreases again and becomes minimum when $|\Phi|$ is $2\pi$, resulting again in polarity inversion. The relationship described above is completely the same as the relationship between pit part depth (corresponding to $d_{GL}$) and reflectance in ROM media employing phase pits (non-patent document 5).

A brief explanation is given below on push-pull signals. Fig. 7 is a view for explaining the constitution of a four-segmented detector which detects recorded signals (sum signals) and push-pull signals (difference signals). The four-segmented detector is composed of four independent photodetectors, the outputs of which are expressed by Ia, Ib, Ic, and Id, respectively. A zero-order diffracted light and first-order diffracted light from the recording groove portion and recording land portion in Fig. 7 are received by the four-segmented detector and converted to electrical signals. The signals from the four-segmented detector give the following operation outputs.

$$Isum = (Ia+Ib+Ic+Id) \qquad (15)$$

$$IPP = (Ia+Ib)-(Ic+Id) \qquad (16)$$

Fig. 8 is presentations showing signals detected after passing output signals obtained while actually crossing groove parts and land parts through a low-frequency transmission filter (cut-off frequency, about 30 kHz).
In Fig. 8, $Isum_{p-p}$ is the peak-to-peak signal amplitude of Isum signals. $IPP_{p-p}$ is the peak-to-peak signal amplitude of push-pull signals. Push-pull signal intensity means $IPP_{p-p}$, and is distinguished from push-pull signals IPP themselves. In servo-tracking, feedback servoing is conducted using the push-pull signals (IPP) in Fig. 8 (b) as error signals. When, for example, the zero-cross points where the polarity of IPP signals changes from + to - in Fig. 8 (b) are caused to correspond to the center of the recording groove portion and the zero-cross points where the polarity thereof changes

from - to + in Fig. 8 (b) are caused to correspond to the recording land portion, then the term "polarity of push-pull signals is inverted" means that those changes in sign are inverted. When sign inversion has occurred, this arouses a trouble such as the following. In the case where the recording groove portion is to be servo-tracked (i.e., a converged beam spot is to be directed to the recording groove portion), not the recording groove portion but the recording land portion is servo-tracked.

The Isum signals obtained when the recording groove portion is servo-tracked are recorded signals. In this embodiment, the signals change, i.e., increase, through recording.
The following operation output is referred to as normalized push-pull signal intensity ($IPP_{actual}$).

$$IPP_{actual} =$$
$$[\{(Ia+Ib)(t)-(Ic+Id)(t)\}/\{(Ia+Ib)(t)+(Ic+Id)(t)\}]_{p-p}$$
$$= \{IPP(tb)/Isum(tb)\}-\{IPP(ta)/Isum(ta)\} \qquad (17)$$

(In equation (17), ta is the time period required for IPP to become minimum, and tb is the time period required for IPP to become maximum.)
In optical recording/reproducing apparatus, the push-pull signals actually used for servo-tracking frequently are normalized push-pull signals obtained through calculation from values of Isum and IPP determined at every moment.

The relationship between phase difference and reflective optical intensity shown in Fig. 6 is periodical as can be seen from equation (13). In media containing a dye as a main component, the change of $|\Phi|$ through recording, i.e., $|\Delta\Phi|$, is usually smaller than about n/2. Conversely, in this embodiment, the change of $|\Phi|$ through recording is regulated so as to be up to n at the most. For this purpose, the thickness of the recording layer may be suitably reduced according to need.

In the case where the formation of a recording pit portion 16p, 25p, or 26p has resulted in a decrease in the phase (or optical path length) of a reflected light from the recording groove portion as compared with that before recording (or where the phase has retarded through recording) when the medium is viewed from the phase reference plane A-A', i.e., in the case where $\Delta\Phi>0$, then the optical distance to the reflection reference plane (optical path length) decreases when the medium is viewed from the entrance side. Namely, the reflection reference plane has approached the light source (or the phase reference plane A-A'). Consequently, in Fig. 3, this change has the same effect as that produced when the reflection reference plane in the recording groove portion has shifted downward ($d_{GL}$ has increased). As a result, the reflected light from the recording pit portion 16p has a reduced intensity. In Fig. 4, that change conversely has the same effect as that produced when the reflection reference plane in the recording groove portion has shifted upward ($d_{GL}$ has decreased), resulting in an increase in the intensity of the reflected light from the recording pit portion 25p. In Fig. 5, that change has the same effect as that produced when the reflection reference plane in the recording groove portion has shifted upward ($d_{GL}$ has increased), resulting in a decrease in the intensity of the reflected light from the recording pit portion 26p.

On the other hand, in the case where the phase (or optical path length) of a reflected light from the recording pit portion 16p, 25p, or 26p has increased as compared with that before recording (or where the phase has retarded through recording) when the medium is viewed from the phase reference plane A-A', i.e., in the case where $\Delta\Phi<0$, then the optical distance to the reflection reference plane (optical path length) increases when the medium is viewed from the entrance side. Namely, the reflection reference plane has receded from the light source (or from the phase reference plane A-A'). In Fig. 3, this change has the same effect as that produced when the reflection reference plane in the recording groove portion has shifted upward ($d_{GL}$ has decreased), resulting in an increase in the intensity of the reflected light from the recording pit portion 16p. In Fig. 4, that change conversely has the same effect as that produced when the reflection reference plane in the recording groove portion has shifted downward ($d_{GL}$ has increased), resulting in a decrease in the intensity of the reflected light from the recording pit portion 25p. In Fig. 5, that change has the same effect as that produced when the reflection reference plane in the recording groove portion has shifted downward ($d_{GL}$ has decreased), resulting in an increase in the intensity of the reflected light from the recording pit portion 26p. The direction of change in reflective optical intensity regarding whether the intensity of a reflected light from a recording pit portion decreases or increases through recording is herein referred to as the polarity of recording (signals).

Consequently, when the recording pit portion 16p, 25p, or 26p undergoes a phase change which results in $\Delta\Phi>0$, it is preferred that the change in signal polarity in which reflective optical intensity decreases through recording, i.e., undergoes a "high-to-low" change (hereinafter, referred to simply as HtoL), should be utilized for the recording groove portion in Fig. 3 or Fig. 5. With respect to the recording groove portion in Fig. 4, it is preferred to utilize the pola rity in which reflective optical intensity increases through recording, i.e., undergoes a "low-to-high" change (hereinafter,

referred to simply as LtoH). On the other hand, when a phase change resulting in $\Delta\Phi<0$ occurs, it is preferred that the polarity which results in the LtoH change should be utilized for the recording groove portion in Fig. 3 or Fig. 5, and that the polarity which results in the HtoL change should be utilized for the recording groove portion in Fig. 4. The relationships described above are summarized in Table 1. Table 1 shows that which polarity change in reflective optical intensity, of the HtoL and LtoH polarity changes, is preferred for the constitutions of Fig. 3, Fig. 4, and Fig. 5 and for the recording groove portions therein with respect to each sign for $\Delta\Phi$.

[Table 1]

| | $\Delta\Phi>0$ | $\Delta\Phi<0$ |
|---|---|---|
| Fig. 3 | HtoL | LtoH |
| Fig. 4 | LtoH | HtoL |
| Fig. 5 | HtoL | LtoH |

(With Respect to Preferred Embodiments of Phase Change $\Delta\Phi$)

In the invention, LtoH recording which is consistent with a reflective optical intensity resulting from a decrease in extinction coefficient is intended to be conducted. Because of this, in the case shown in Fig. 4, it is preferred that $\Delta\Phi>0$. Namely, in order for the polarity of recorded signals to be constant irrespective of recording power, recording pit length, or recording pit size, it is preferred that the "change in reflective optical intensity in a planar state" and the "change in reflective optical intensity due to interference" should be in the same direction.

A preferred embodiment for realizing $\Delta\Phi>0$ when recording is conducted in the cover layer land part 25 of the medium shown in Fig. 4, which has a dye-containing recording layer, is described below.

In $\Delta\Phi$, when terms thereof are expressed by the following symbols,

$$\Phi_{bmp} = (n_d - n_c) \cdot d_{bmp} \quad (18)$$

$$\Phi_{pit} = n_d \cdot d_{pit} \quad (19)$$

$$\Phi_{mix} = \delta n_c \cdot d_{mix} \quad (20)$$

$$\Phi_n = \delta n_d \cdot (d_G - d_{pit} - d_{bmp}) = \delta n_d \cdot d_{Ga} \quad (21)$$

then $\Phi_{bmp}$ corresponds to a phase change caused by the deformation (movement) of the entrance-side boundary of the recording layer; $\Phi_{pit}$ corresponds to a phase change caused by the deformation (movement) of the recording layer 22/reflective layer 23 boundary; $\Phi_{mix}$ corresponds to a phase change caused by the formation of a mixed layer 25m; and $\Phi_n$ corresponds to a phase change caused by a refractive-index change of the recording layer 22. That these phase changes are large and are in the same direction, i.e., $\Phi_{bmp}$, $\Phi_{pit}$, $\Phi_{mix}$, and $\Phi_n$ have the same sign, is important for attaining a higher degree of modulation and obtaining satisfactory recording characteristics without distorting the waveform of signals having a specific signal polarity.

For obtaining phase changes occurring in the same direction, it is describable to control only a minimum number of factors among the physical parameter relating to the $\Phi_{bmp}$, $\Phi_{pit}$, $\Phi_{mix}$, and $\Phi_n$ rather than to precisely control all these parameters.

First, it is preferred to regulate $d_{mix}$ to 0, for example, by forming an interfacial layer at the entrance-side boundary of the recording layer. This is because the phase-difference change with $d_{mix}$ cannot be increased so much and, hence, not only it is difficult to positively utilize this effect but also to control the thickness thereof is difficult. It is therefore preferred to regulate $d_{mix}$ to 0, for example, by forming an interfacial layer at the entrance-side boundary of the recording

layer.

Next, with respect to deformation, it is preferred that deformation should be concentrated on one part and that the deformation should occur in one direction only. This is because to more precisely control one deformation part is more apt to give satisfactory signal quality than to control two or more deformation parts.
Consequently, in this embodiment, it is preferred to mainly utilize $\Phi_n$ and either of $\Phi_{bmp}$ and $\Phi_{pit}$.

With respect to $d_{pit}$, a main factor contributing thereto usually is the expansion of the substrate or cover layer or the volume contraction of the recording layer. Because of this, $d_{pit}>0$ in many cases. Such values of $d_{pit}$ are advantageous to $\Phi_{pit}$ but are disadvantageous to $d_{Ga}$, i.e., $\Phi_n$. On the other hand, absorption by the recording layer is highest in an area ranging from a central part in terms of thickness of the recording layer to the entrance-side boundary thereof. Because of this, that area comes to have a highest temperature, and the amount of heat generated in an area near the boundary of the reflective layer is relatively small. When a highly radiating material is used as the reflective layer, the influence of heat generation by the recording layer is mostly concentrated on the entrance-side boundary of the recording layer. In Fig. 4, the part to which heat generation is concentrated is that boundary of the recording layer 22 which is on the cover layer 24 side. Consequently, in the constitution shown in Fig. 4, the entrance-side boundary of the dye, i.e., the boundary between the dye and the cover layer 24, deforms. This naturally results in a small value of $d_{pit}$ and hence in a small contribution. The influence of a deformation on the substrate 21 side is thought to be low unlike that in the conventional constitution, and $d_{pit}$ can be practically regarded as $d_{pit}\approx 0$. This rather suggests that deformation factors to be controlled should be concentrated to $d_{bmp}$.

On the other hand, the refractive-index change of the dye $\delta n_d$ and the deformation $d_{bmp}$ contribute to $\Phi_n$.
In this case, the refractive-index change of the dye $\delta n_d$ and the deformation $d_{bmp}$, which contribute to $\Phi_n$ as can be seen from equation (21), are most important factors for the magnitude and sign of $\Delta\Phi$.
The case where $\Phi_{pit}\approx 0$ and $\Phi_{max}\approx 0$ is discussed below. In this case, the following can be derived from equations (18) and (21).

$$\Delta\phi \approx \phi_{bmp} + \phi_n = (n_d - n_c)\cdot d_{bmp} + \delta n_d \cdot (d_G - d_{bmp})$$
$$= (n_d' - n_c)\cdot d_{bmp} + \delta n_d \cdot d_G \qquad (22)$$

First, $\Phi_{bmp}$ is discussed. The value of $n_d'$ is $n_d'\approx 1$, and $n_c$ is usually around 1.5 in the case of resinous materials. Because of this, $n_d'-n_c<0$. Consequently, for satisfying $\Phi_{bmp}>0$, the value of $d_{bmp}$ must be $d_{bmp}<0$. This means that it is preferred to swell the recording layer toward the cover layer 24 side.

Subsequently, of the physical phenomena relating to $\Phi_n$, the influence of the refractive-index change $\delta n_d$ of the recording layer is first discussed. The recording-layer thickness after recording $d_{Ga}$ is $d_{Ga}>0$ because of the definition thereof. It is therefore thought that the sign of $\delta n_d$ governs the sign of $\Phi_n$. Although a recording layer containing a dye as a main component is used in the invention, the dye is one having a main absorption band in which the most intense absorption (absorption peak) occurs at wavelengths in a visible light region (about 400-800 nm). In the case where recording/reproducing is conducted at a wavelength near to an edge of the main absorption band of the dye serving as a main component, it is generally thought that the recording layer is decomposed by the heat generated by the recording layer, resulting in considerably reduced absorption. It is thought that abnormal dispersion of the so-called Kramers-Kronig type occurs in the main absorption band in the recording layer at least in a pre-recording state and the refractive index n and extinction coefficient k have a wavelength dependence.

On the other hand, the dye serving as a main component of the recording layer in the invention has a decomposition temperature of 500°C or lower. This dye as a recording-layer main component is decomposed, due to the heat generation caused by a recording light, to such a degree that the main absorption end cannot be retained, and thereby forms voids. In this case, abnormal dispersion of the Kramers-Kronig type does not occur, and $n_d'$ and $k_d'$ can be regarded as nd'≈1 and kd'≈0.

The porphyrin compound employed in the invention has a large main absorption band with a sharp peak on the longer-wavelength side of the wavelength $\lambda$ of a recording/reproducing light. Because of this, the value of $n_d$ is about 0.5-1.2 due to the Kramers-Kronig relationship. Since the formation of voids in the recording pit portion results in a post-recording refractive index $n_d'\approx 1$, there can be cases where $\delta n_d<0$. In this case, $\Phi_n=\delta n_d \cdot d_G<0$. Namely, $\Phi_n<0$, which is a term differing from the term $\Phi_{bmp}>0$ in the direction of phase change, remains slightly. However, by positively increasing the value of $d_{bmp}$ which is $d_{bmp}<0$, $\Phi_{bmp}$ can be caused to serve as a main component of $\Delta\Phi$ and the adverse influence of $\Phi_n$ can be virtually excluded. Thus, $\Delta\Phi>0$ can be realized.

In order to increase the value of $\Phi_{bmp}$ which is $\Phi_{bmp}>0$, the deformation which results in $d_{bmp}<0$ is accelerated. From this standpoint, it is desirable that the thermal alteration of the recording layer 22 should be accompanied by a volume-expanding pressure which is caused by thermal expansion, decomposition, or sublimation. It is also preferred

that an interfacial layer should be disposed at the boundary between the recording layer 22 and the cover layer 24 to confine the pressure and prevent it from leaking out to another layer. The interfacial layer desirably is one which has high gas barrier properties and is more deformable than the cover layer 24. Especially when a highly sublimable dye is used as a main component, a volume-expanding pressure generates locally in parts of the recording layer 22 to facilitate the formation of large voids.

On the other hand, from the standpoint of causing the contribution of $\Phi_n$ to be advantageous, the following conditions may be used because $n_d$ is 0.5-1.2. First, in the case where $n_d<1$ and $\Phi_n<0$, it is desirable that for reducing the contribution of $\Phi_n$ even slightly, the thickness of the dye-containing layer should be smaller so as to reduce the value of $d_G$, so long as recording is possible. For reducing the value of $|\delta n_d|=|n_d-n_d'|\approx|n_d-1|$, it is desirable that $n_d$ should be close to 1. Specifically, $n_d$ is desirably 0.7 or larger, more desirably 0.8 or larger. In the case where $n_d>1$ and $\Phi_n>0$, the value of $|\delta n_d|=|n_d-n_d'|\approx|n_d-1|$ desirably is larger because the phase changes have the same direction. In the case of the porphyrin compound used in the invention, the upper limit of $n_d$ is about 2.

As described above, to regulate a combination of the relative magnitudes of $n_d'$ and $n_c$ and the sign (direction of deformation) of $d_{bmp}$ so as to satisfy a specific relationship and to regulate the value of nd so as to be in a specific range are effective in preventing the phenomenon in which the polarity of recorded signals (HtoL or LtoH) is inverted or mingled (to give a differential waveform) depending on mark length.

A relationship between a phase change resulting in $\Delta\Phi>0$ and push-pull signals is discussed here. The following is presumed from conventional CD-Rs and DVD-Rs. In the case where HtoL recording is to be conducted in a cover layer groove part 26 (see Fig. 5) while preventing the inversion of the polarity of push-pull signals, $d_{GL}$ is limited to either a large groove level difference which results in a larger optical path length for incident and reflected lights than the wavelength (i.e., which results in $|\Phi b_3|>2\pi$) (referred to as "deep groove") or such a groove level difference that the value of $\Phi b_3$ is almost zero and push-pull signals are barely obtained (referred to as "shallow groove"). In the case of the deep groove, the phase change in the direction indicated by the arrow $\alpha$ along the slope where $|\Phi b|>2\pi$ in Fig. 6 is utilized to optically deepen the groove. In this case, the groove depth corresponding to the beginning of the arrow must be about 100 nm for a blue light having a wavelength of about 400 nm. Mass production of such media having a small track pitch is difficult because transfer failures are apt to occur in molding. Even when the desired groove shape is obtained, noises attributable to fine surface irregularities of the groove walls are apt to come into signals. Furthermore, it is difficult to evenly form a reflective layer 23 on the bottom and side walls of the groove. The reflective layer 23 itself has poor adhesion to the groove walls, and this is apt to result in deterioration such as peeling. Because of these, when HtoL recording by a conventional technique employing a "deep groove" is to be conducted while utilizing the phase change resulting in $\Delta\Phi>0$, difficulties are encountered in reducing track pitch.

In the case of the shallow groove, on the other hand, the phase change occurring in the direction indicated by the arrow $\beta$ along the slope where $|\Phi|$ ranges from 0 to $\pi$ in Fig. 6 is utilized to optically deepen the groove, whereby HtoL recording is attained. When some degree of push-pull signal intensity is to be obtained in a pre-recording state, the depth of the shallow groove is about from 20 nm to 30 nm for blue-light wavelengths. When a recording layer 22 is to be formed over the groove in such a state, the recording layer is apt to be formed in the same thickness equally in the recording groove portion (cover layer groove part 26 in this case) and the land part as in a planar state. As a result, recording pits are apt to protrude from the recording groove portion, and a diffracted light from the recording pits leaks out to an adjoining recording groove, resulting in exceedingly large crosstalk. In this case also, when HtoL recording by a conventional technique is to be conducted while utilizing the phase change resulting in $\Delta\Phi>0$, difficulties are encountered in reducing track pitch.

The present inventors found that a preferred constitution for a dye-containing medium of the film-side entrance type is not the conventional HtoL recording employing a "deep groove" but a constitution in which signals having the recording polarity of LtoH are obtained using the phase change in the direction indicated by the arrow $\gamma$ in Fig. 6 and consequently using the "medium groove" which will be described later. Namely, the constitution is an optical recording medium 20 and a method of recording in each of which recording/reproducing is conducted while causing a recording/reproducing light to enter from the cover layer 24 side and in which when that portion of the guide groove which is far from the side where a recording/reproducing light beam 27 enters the cover layer 24 (the side 29 where the recording/reproducing light beam 27 enters) is used as a recording groove portion, then a recording pit portion formed in the recording groove portion has a higher reflective optical intensity than the recording groove portion which has not been used for recording.

A matter important for this embodiment is that all of the refractive-index change in the pit part and the deformation in an inner part of or at a boundary of the recording layer 22, which are attributable to a refractive-index change of the recording layer, void formation, etc., occur on the recording/reproducing light entrance side of the reflective layer 23, which is the main reflective surface.

In a film-side entrance constitution such as that shown in Fig. 4, LtoH recording is conducted while utilizing a phase change which results in $\Delta\Phi>0$, when that portion of the guide groove which is far from the side 29 (Fig. 2) where a recording/reproducing light beam 27 (Fig. 2) enters is used as a recording groove portion.

For this recording, it is first desirable that the recording layer in the recording pit portion 25p should undergo a shape change to swell toward the cover layer side and form voids in an inner part of the recording layer or at the boundary between the recording layer and an adjoining layer, resulting in a phase change.
It is preferred that both the groove part and land part in a pre-recording state should retain a reflectance of at least from 3% to 30% from the standpoint of maintaining the stability of various servo operations.
The term "reflectance of the recording groove portion in a pre-recording state ($R_g$)" herein means one obtained by depositing only a reflective film having a known reflectance ($R_{ref}$) in the same constitution as the optical recording medium 20 shown in Fig. 2, causing a converged light beam to enter the film so as to be focused on the recording groove portion to obtain a reflective optical intensity $I_{ref}$, likewise causing a converged light beam to enter an optical recording medium 20 shown in Fig. 2 to obtain a reflective optical intensity $I_s$, and determining the reflectance $R_g$ using the equation $R_g=R_{ref}\cdot(I_s/I_{ref})$. Likewise, the following expressions were used for post-recording reflectances. The recording groove portion reflectance corresponding to the low intensity $I_L$ of a reflected light from inter-recording pit portions (space parts) with recorded-signal amplitude is referred to as $R_L$. The recording groove portion reflectance corresponding to the high intensity $I_H$ of a reflected light from recording pits (mark parts) is referred to as $R_H$.
Hereinafter, these recording groove portion reflectances are used in an ordinary manner in determining any change in reflective optical intensity in a recording groove portion.

In this embodiment, it is preferred that the recording layer 22 itself should have increased transparency because a phase change caused by recording is utilized. In the case where the recording layer 22 alone is formed on a transparent polycarbonate resin substrate, the transmittance of the layer is preferably 40% or higher, more preferably 50% or higher, even more preferably 60% or higher. In case where the recording layer has too high a transmittance, this layer cannot absorb sufficient recording-light energy. Consequently, the reflectance thereof is preferably 95% or lower, more preferably 90% or lower.
On the other hand, that such a high transmittance is maintained in a disk having the constitution shown in Fig. 2 can be almost ascertained in the following manner. This disk (in a pre-recording state) is examined for the planar-state reflectance R0 of a flat part (mirror-surface part). A disk having the same constitution except that the recording layer thickness is zero is examined for planar-state reflectance. When the reflectance R0 is 40% or more, preferably 50% or more, more preferably 70% or more, of the planar-state reflectance of the latter disk, then a high transmittance is considered to be maintained.
For maintaining such moderate transparency, $k_d$ is preferably 2 or smaller, more preferably 1.5 or smaller.

(Preferred Embodiments of Recording Groove Depth $d_{GL}$, Recording Layer Thickness in Recording groove portion $d_G$, and Recording Layer Thickness in Recording land portion $d_L$)

When LtoH recording is conducted in a cover layer land part 25 using a phase change which results in $\Delta\Phi>0$, then the groove depth in the pit part changes optically. Because of this, push-pull signals, which strongly depend on groove depth, are apt to change through recording. A phase change which is especially problematic is one which inverts the polarity of push-pull signals.

For conducting LtoH recording while preventing the polarity of push-pull signals from changing, it is preferred to utilize the phenomenon in which a groove depth is optically reduced by a phase change occurring in the direction indicated by the arrow $\gamma$ along the slope where $0<|\Phi b|$ and $|\Phi a|<\pi$ in Fig 6. Namely, a change which, in Fig. 4, reduces the optical length of a path to the reflection reference plane in the recording groove portion, when the medium is viewed from the phase difference reference plane A-A', is caused to occur in the recording pit portion 25p. In the case shown in Fig. 4, $\Phi b=\Phi b_2<0$, $\Phi a=\Phi a_2<0$, and $\Delta\Phi>0$. Consequently, $|\Phi b|>|\Phi a|$. Incidentally, since $\Phi b$ and $\Phi a$ in the case shown in Fig. 4 are negative values because of the definition of phase difference by equation (2), these were expressed by absolute values.

In particular, when normalized push-pull signal intensity $IPP_{actual}$ represented by equation (17) is used as push-pull signals, the denominator in equation (17) increases because the average reflectance increases through recording in this embodiment.
For maintaining a sufficiently large value of the normalized push-pull signal intensity $IPP_{actual}$ after recording, it is preferred that the push-pull signal intensity $IPP_{p-p}$, which is the numerator in equation (17), should increase through recording or at least retain a large value. Namely, it is preferred that the value of $|\Phi a|$ after recording should be near to $\pi/2$. On the other hand, for securing sufficient push-pull signals also before recording, it is desirable that $|\Phi b|$ should be smaller than $\pi$ by about $(1/16)\pi$. This means that $|\Phi b|$ preferably is in the range of from n/2 to (15/16)n in the route $\gamma$.

Specifically, in Fig. 4, for regulating the value of $|\Phi b_2| =(4\pi/\lambda)\ |\psi b_2|$ so as to be in the range of from $\pi/2$ to $(15/16)\pi$, it is preferred to regulate the value of

$$|\psi b_2| = |(n_c-n_d)\cdot(d_G-d_L)-n_c\cdot d_{GL}|$$

$$= |(n_d-n_c)\cdot(d_G-d_L)+n_c\cdot d_{GL}|$$

so as to be in the range of from $\lambda/8$ to $(15/64)\cdot\lambda$.
In this case, the groove depth $d_{GL}$ is determined using the following equation, which is derived from equation (7), provided that $d_G=d_L$ and that the recording/reproducing light is a blue light having a wavelength $\lambda$ of 350-450 nm.

$$|\psi b_2| = n_c\cdot d_{GL} \qquad (7a)$$

The same equation is obtained also from $n_d \approx n_c$. When $n_c$ is taken as about 1.4-1.6, which are values for general polymeric materials, then the groove depth $d_{GL}$ is generally 30 nm or larger, preferably 35 nm or larger. On the other hand, the groove depth $d_{GL}$ is generally 70 nm or smaller, preferably 65 nm or smaller, more preferably 60 nm or smaller. A groove having such a depth is referred to as "medium groove". Compared to the cases described above where a "deep groove" is employed as shown in Fig. 3 and Fig. 5, the constitution employing a medium groove has an advantage that groove formation and the deposition of a reflective layer on the cover layer land part 25 are exceedingly easy.

When a recording layer is formed through coating fluid application by spin coating, there generally is a tendency that the recording layer is apt to gather in the substrate groove part. When this tendency is taken into account, the resultant recording layer naturally satisfies $d_G>d_L$. Furthermore, when the amount of the dye to be applied is reduced to thereby from a recording layer having a reduced thickness as a whole, then this recording layer can virtually satisfy $d_L \approx 0$. Thus, the recording layer can be almost completely confined in the recording groove (in this case, in the cover layer land part 25).

In this case, equation (7) can be converted to the following equation (7b).

$$|\psi b_2| = |(n_c-n_d)\cdot d_G-n_c\cdot d_{GL}|$$

$$= |(n_d-n_c)\cdot d_G+n_c\cdot d_{GL}| \qquad (7b)$$

Namely, it is necessary to correct equation (7a) by $|(n_c-n_d)\cdot d_G|$ in view of the preferred range of the groove depth. Since $n_d<n_c$ in this embodiment, a slightly large depth is preferred. Conversely, when a groove shape including $n_d\cdot d_{GL}$ is given, then the value of $|\Phi b_2|$ becomes smaller and the intensity of a reflected light from this groove part increases, as apparent from Fig. 6, as $n_d$ becomes smaller as compared with $n_c$. This means that even when a somewhat deep groove having a depth of 40-60 nm is employed in order to confine a dye-containing recording layer in the recording groove portion and thereby inhibit crosstalk, a rather small optical groove depth can be attained.

It is also preferred that the thickness of the recording layer should be regulated so as to be smaller than the groove depth, i.e., $d_G<d_{GL}$. This is because this constitution has an effect that even when recording pits have undergone a deformation such as that which will be described later, at least the width of the deformed recording pits is within the width of the groove, and crosstalk diminution can hence be attained. Consequently, $d_G$ and $d_{GL}$ preferably are $(d_G/d_{GL})\leq 1$, more preferably are $(d_G/d_{GL})\leq 0.8$, and even more preferably are $(d_G/d_{GL})\leq 0.7$.

Namely, in the optical recording medium 20, to which this embodiment is applied, it is preferred that the recording layer 22 should be formed by coating fluid application so as to result in $d_{GL}>d_G>d_L$. More preferably, the recording layer 22 is formed so as to result in $d_L/d_G\leq 0.5$ and so that substantially no recording layer 22 virtually deposits in the recording land portion. On the other hand, since it is preferred that $d_L$ should be substantially zero as will be described later, the lower limit of $d_L/d_G$ ideally is zero.

As described above, in the case where $d_{GL}$ is 30-70 nm, $d_G$ is regulated preferably to 5 nm or larger, more preferably to 10 nm or larger. This is because by regulating $d_G$ to 5 nm or larger, phase change can be enlarged and light energy necessary for recording pit formation can be absorbed. On the other hand, $d_G$ is regulated to preferably below 50 nm, more preferably 45 nm or smaller, even more preferably 40 nm or smaller. This is because such value of $d_G$ is effective in imparting moderate transparency to the recording layer so as to maintain a reflectance of 3-30% during reproducing.
Moreover, smaller thicknesses of the recording layer 22 are effective in avoiding the trouble that the recording pit portion

suffers too large a deformation and the recording pits protrude to the recording land portion.

In the invention in which recording pits are formed in the cover layer land part, the use of a "medium groove" depth such as that described above and to thinly form a recording layer 22 which satisfies $d_G/d_L \leq 1$ and is confined in the recording groove having the "medium groove" depth are more preferred when void formation in the recording pit portion and swelling deformation toward the cover layer are positively employed as will be described later. In this respect also, the invention is superior in the effect of crosstalk inhibition to the case where the cover layer groove part is used for recording and void formation to conduct HtoL recording. Furthermore, the dye according to the invention can has a value of $k_d$ as large as about 1 and, hence, sufficient light absorption occurs even when the recording layer has a small thickness. Consequently, the recording light power required for recording pit formation can be kept low. In general, small recording-layer thicknesses tend to result in a decrease in the "change in reflective optical intensity occurring in a planar state". In the invention, however, a sufficient change in reflective optical intensity is obtained because the recording layer has a large difference between $k_d$ and $k_d'$. Consequently, the value of $k_d$ is desirably 1 or larger.

Thus, the following advantage is obtained. Recording pits are almost completely confined in the recording groove, and a diffracted light from the recording pit portion 25p in Fig. 4 can be highly inhibited from leaking out to the adjoining recording groove (to cause crosstalk). Namely, to intend to conduct LtoH recording in the cover layer land part 25 not only merely brings about an advantageous combination of a phase change resulting in $\Delta\Phi>0$ and recording in the cover layer land part 25, but also facilitates a constitution more suitable for high-density recording based on track pitch reduction. Furthermore, when $d_L$ is regulated to almost zero, the contribution of the term $(n_c-n_d)\cdot d_G$ in $|\psi b_2|$ represented by equation (7b) can be maximized and the value of $d_{GL}$ can be reduced although the reduction is slight. Consequently, groove formation is easier.

(Specific Preferred Embodiments of Layer Constitution and Materials)

Specific materials for the layer constitutions shown in Fig. 2 and Fig. 4 and specific embodiments of the constitutions are explained below especially on the assumption that the recording/reproducing light beam 27 has a wavelength $\lambda$ of about 405 nm, in view of the situation in which the development of blue lasers is proceeding.

(Substrate)

As the substrate 21 for the film-side entrance constitution, use can be made of a plastic, metal, glass, or the like which have moderate processability and rigidity. Unlike those for use in conventional substrate entrance constitution, the substrate 21 is not limited in transparency or birefringence. In forming a guide groove in a surface, it is necessary in the case of a metal or a glass that a thin resin layer curable with light or heat should be formed on the surface and the groove be formed in this resin layer. In this respect, it is preferred from the standpoint of production that a plastic material should be used to simultaneously form a shape, in particular, a disk shape, of the substrate 21 and a surface guide groove by injection molding.

As the plastic material capable of injection molding, use can be made of resins which have been used in CDs or DVDs, such as polycarbonate resins, polyolefin resins, acrylic resins, and epoxy resins. The thickness of the substrate 21 is preferably about from 0.5 mm to 1.2 mm. It is preferred that the sum of the substrate thickness and the cover layer thickness should be regulated to 1.2 mm, which is the same as in conventional CDs or DVDs. This is because cases and the like for conventional CDs or DVDs can be used as they are. A substrate thickness of 1.1 mm and a cover layer thickness of 0.1 mm are prescribed for blue-ray disks (non-patent document 3).

The substrate 21 has a guide groove for tracking. In this embodiment in which the cover layer land part 25 serves as a recording groove portion, the track pitch is regulated to preferably from 0.1 $\mu$m to 0.6 $\mu$m, more preferably from 0.2 $\mu$m to 0.4 $\mu$m, from the standpoint of attaining a higher density than in CD-Rs and DVD-Rs. The depth of the groove is preferably in the range of about from 30 nm to 70 nm, although it depends on the recording/reproducing light wavelength $\lambda$ and other factors including $d_{GL}$, $d_G$, and $d_L$. The groove depth is suitably optimized within that range while taking account of the reflectance of the recording groove portion in a pre-recording state $R_g$, signal characteristics of recorded signals, push-pull signal characteristics, optical properties of the recording layer, etc. It is necessary that both of a reflected light from the recording groove portion and a reflected light from the recording land portion should be present in a converged-light spot because the interference caused by a phase difference between the two lights is utilized in this embodiment. It is therefore preferred that the width of the recording groove (width of the cover layer land part 25) should be regulated so as to be smaller than the spot diameter (diameter in groove cross direction) of the recording/reproducing light beam 27 as measured on the recording layer 22 plane. In the case where the track pitch is 0.32 $\mu$m and an optical system having a recording/reproducing light wavelength $\lambda$ of 405 nm and an NA (numerical aperture) of 0.85 is to be used, the width of the recording groove is preferably in the range of from 0.1 $\mu$m to 0.2 $\mu$m. In case where the recording groove depth is outside the range, difficulties are frequency encountered in forming the groove or land part.

The guide groove usually has a rectangular shape. It is especially desirable that when a recording layer is formed by coating fluid application in the manner which will be described later, the dye should gather selectively in the substrate groove part within the time period of tens of seconds required for most of the solvent in the dye-containing solution to vaporize. It is therefore preferred to round the shoulder between rectangular substrate grooves so that the dye solution readily falls into the substrate groove part and gathers therein. Such a groove shape having a rounded shoulder is obtained by exposing the surface of a plastic substrate or of a stamper to a plasma, UV ozone, or the like for from several seconds to several minutes to etch the surface. Etching with a plasma is suitable for obtaining a rounded groove part shoulder shape because there is a tendency for plasma etching to selectively remove pointed parts as in the shoulder of the substrate groove part (edge of the land part).

The guide groove usually has additional signals imparted thereto by groove meanders, groove shape modulation, e.g., groove depth modulation, recess/protrusion pits formed by intermissions of a recording groove portion or recording land portion, etc. in order to impart additional information such as, e.g., an address or a synchronizing signal. In blue-ray disks, for example, a wobble addressing system employing two modulation modes, i.e., MSK (minimum shift keying) and STW (saw-tooth wobbles), is being used (non-patent document 3).

(Layer Having Light-Reflecting Function)

For forming the layer having a light-reflecting function (reflective layer 23), it is preferred to use a material which has a high reflectance at the wavelength of a recording/reproducing light, i.e., which has a reflectance of 70% or higher at the wavelength of a recording/reproducing light. Examples of materials having a high reflectance at the wavelengths of a visible light to be used as recording/reproducing wavelengths, in particular, in the wavelength range for blue light, include Au, Ag, Al, and alloys including any of these as the main component. More preferred are alloys which include Ag as the main component and have a high reflectance and reduced absorption at $\lambda$=405 nm. Addition of from 0.01 at.% to 10 at.% Au, Cu, rare earth element (in particular, Nd), Nb, Ta, V, Mo, Mn, Mg, Cr, Bi, Al, Si, Ge, or the like to Ag as the main component is preferred because this can enhance resistance to water, oxygen, sulfur, etc. Also usable besides these is a dielectric mirror composed of superposed dielectric layers.

It is preferred that the thickness of the reflective layer 23 should be equal to or smaller than $d_{GL}$ so as to maintain a groove level difference in the substrate 21 surface. For the same reason, the thickness of the reflective layer is preferably 70 nm or smaller, more preferably 65 nm or smaller, because the value of $d_{GL}$ is preferably 70 nm or smaller when the recording/reproducing light has a wavelength $\lambda$ of 405 nm as described above. Except in the case where the two-layer medium which will be described later is produced, the lower limit of the thickness of the reflective layer is preferably 30 nm or larger, more preferably 40 nm or larger. The reflective layer 23 has a surface roughness Ra of preferably 5 nm or lower, more preferably 1 nm or lower. Silver has the property of increasing in flatness upon addition of an additive thereto. In this respect also, it is preferred to incorporate any of those additive elements in an amount of preferably 0.1 at.% or higher, more preferably 0.5 at.% or higher. The reflective layer 23 can be formed by sputtering, ion plating, electron-beam vapor deposition, or the like.

The groove depth $d_{GL}$, which is defined as a level difference in the reflection reference plane, is almost equal to the groove depth $d_{GLS}$ in the substrate 21 surface. The groove depths can be directly measured by examining a section with an electron microscope. Alternatively, the depths can be measured by the probe method using an atomic force microscope (AFM) or the like. In the case where the groove and the land are not completely flat, $d_{GL}$ is defined as the difference in level between the center of the groove and the center of the land. The term groove width likewise means the width of the groove part which has been formed by the deposition of the reflective layer 23 and in which the recording layer 22 is actually present. However, so long as the groove shape in the substrate 21 surface is almost maintained after the formation of the reflective layer 23, the value of groove width for the substrate 21 surface can be used. Each value of groove width employed is one measured at a half of the groove depth. The groove width can likewise be directly measured by examining a section with an electron microscope. Alternatively, the width can be measured by the probe method using an atomic force microscope (AFM) or the like. With respect to all grooves defined in the optical recording medium 10, the depths and widths thereof can be measured in the same manners as explained above.

(Interlayer)

It is preferred that an interlayer should be disposed between the reflective layer 23 and the recording layer 22. By disposing an interlayer, jitter characteristics can be improved.

The interlayer generally contains an element selected from the group consisting of Ta, Nb, V, W, Mo, Cr, and Ti from the standpoint of improving jitter characteristics. It is preferred that the interlayer should contain any of Ta, Nb, Mo, and V among those. Preferably, the interlayer contains either of Ta and Nb. The interlayer may contain any one of those elements alone, or may contain a combination of any desired two or more of those in any desired proportion. Those elements have low reactivity with and a low tendency to form solid solution in silver or silver alloys, which are

extensively used as reflective layers. Because of this, when any of those elements is used as the interlayer, an optical recording medium having excellent storage stability can be obtained.

It is preferred that any of those elements should be contained as a main component of the interlayer. In this description, the term "main component of the interlayer" means that the content of any of those elements is 50 at.% or higher based on the elements constituting the interlayer. In particular, the content of any of those elements is preferably 70 at.% or higher, more preferably 90 at.% or higher, even more preferably 95 at.% or higher, especially preferably 99 at.% or higher. Ideally, the content of any of those elements is 100 at.%. In the case where the interlayer contains two or more of those elements, it is preferred that the total proportion of these satisfies that range.

Themechanismbywhichthe interposition of an interlayer improves jitter has not been elucidated. However, investigations made by the present inventors revealed that jitter tends to be improved by using an element having a higher hardness than Ag or Al, which are in general use as materials for the reflective layer 23, to form an interlayer and/or by using as an interlayer an element showing high light absorption at the wavelength of the recording/reproducing light. It is therefore assumed that the formation of an interlayer from, in particular, any of those elements, enables those requirements to be easily satisfied.

Elements other than those shown above may be incorporated as additive elements or impurity elements into the interlayer in order to impart desired properties. Examples of such additive elements or impurity elements include Mg, Si, Ca, Mn, Fe, Co, Ni, Cu, Y, Zr, Pd, Hf, and Pt. One of these additive elements or impurity elements may be used alone, or a combination of any desired two or more of these in any desired proportion may be used. The upper limit of the concentration of those additive elements or impurity elements in the interlayer is generally about 5 at.% or lower.

With respect to the thickness of the interlayer, the interlayer can produce its effect so long as it has been formed as a film. However, the lower limit of the thickness thereof is generally 1 nm or larger. On the other hand, too large thicknesses of the interlayer enhance light absorption by the interlayer, resulting in a decrease in recording sensitivity and a decrease in reflectance. Because of this, the thickness of the interlayer is generally 15 nm or smaller, preferably 10 nm or smaller, more preferably 5 nm or smaller. So long as the interlayer thickness is within that range, a jitter-improving effect and a proper reflectance and proper recording sensitivity can be simultaneously obtained.

The interlayer can be formed by sputtering, ion plating, electron-beam vapor deposition, or the like.

(Recording Layer)

The recording layer 22 contains, as a main component, a dye which has a light-absorbing function at the wavelength of a recording/reproducing light before being used for recording (in a pre-recording state). The dye contained as a main component in the recording layer 22 specifically is an organic compound which has a distinct absorption band attributable to the structure thereof in the visible light (and neighboring light) wavelength region of from 400 nm to 800 nm and in which the absorption band has a peak on the longer-wavelength side of the wavelength $\lambda$ of a recording/reproducing light. Such a dye, which before being used for recording (in a pre-recording state) shows absorption at the wavelength $\lambda$ of a recording/reproducing light beam 27 and which alters upon recording to cause the recording layer 22 to undergo an optical change capable of being detected as a change in the intensity of a reflected light derived from the reproducing light, is referred to as "main-component dye" in this description. The main-component dye may be of one kind, or may be a mixture of dyes which preforms that function.

The content of the main-component dye in the recording layer 22 is generally 50% by weight or higher, preferably 80% by weight or higher, more preferably 90% by weight or higher. The main-component dye preferably is a single dye which shows absorption at the wavelength $\lambda$ of the recording/reproducing light beam 27 and alters upon recording to cause the optical change. However, the main-component dye may be one in which functions have been allotted so that one dye shows absorption at the wavelength $\lambda$ of the recording/reproducing light beam 27, heats up, and thereby alters another dye and indirectly causes an optical change. A dye serving as a so-called quencher for improving the long-term stability (stability to temperature, moisture, and light) of the dye having a light-absorbing function may have been further incorporated in the main-component dye. Examples of the components of the recording layer 22 other than the main-component dye include binders constituted of a low/high-molecular material and dielectrics.

The thickness of the recording groove portion of the recording layer 22 is generally 70 nm or smaller, preferably 50 nm or smaller, more preferably 40 nm or smaller, even more preferably 30 nm or smaller.

The thickness of the recording land portion of the recording layer in a pre-recording state is generally 0 nm or larger and is generally 10 nm or smaller, preferably 7 nm or smaller, more preferably 5 nm or smaller. This is because by regulating the thickness of the recording land portion of the recording layer in a pre-recording state to a value within that range, recording pits can be formed which have a cross-direction width less apt to protrude beyond the width of the recording layer, whereby an influence on crosstalk can be lessened. Consequently, it is especially preferred that the thickness of the recording land portion of the recording layer in a pre-recording state should be up to 10 nm, which is a range of thicknesses which can be regarded as substantially zero.

In the case where the interfacial layer which will be described later is employed, when the thickness of the

recording land portion of the recording layer in a pre-recording state is in that range, then this optical recording medium is in such a state that the interfacial layer and the reflective layer 23 are in contact with each other in the recording land portion. In this medium, when, for example, the interfacial layer is made of a material containing sulfur (e.g., ZnS) and the reflective layer 23 is made of silver, then there are cases where the sulfur reacts with the reflective layer 23 to corrode the reflective layer 23. In the case where such corrosion can occur, the interlayer inhibits the interfacial layer from coming into direct contact with the reflective layer 23 and thus produces the effect of inhibiting the corrosion phenomenon.

(Dye Compound as Main Component of Recording Layer)

The dye compound serving as a main component of the recording layer in the optical recording medium of the invention is a porphyrin compound represented by the following general formula [I].

[Ka-3]

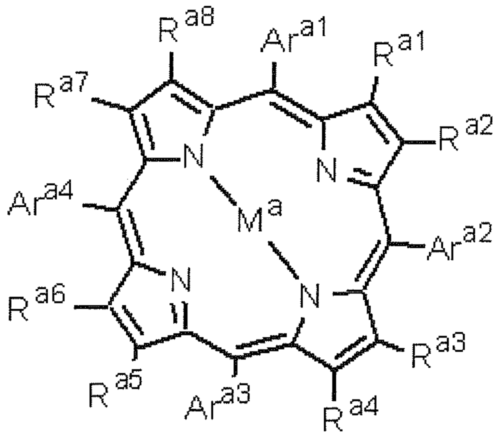

[I]

In general formula [I], $Ar^{a1}$ to $Ar^{a4}$ each independently represent an aromatic ring and each may have a plurality of substituents.
In general formula [I], $R^{a1}$ to $R^{a8}$ each independently represent a hydrogen atom or any desired substituent, and preferably are a hydrogen atom.
Furthermore, in general formula [I], $M^a$ represents a metal cation having a valence of 2 or higher, provided that when $M^a$ has a valence of 3 or higher, then the molecule may further has a counter anion so that the molecule as a whole is neutral.
This porphyrin compound preferably is a tetraarylporphyrin compound represented by the following general formula (II).

[Ka-4]

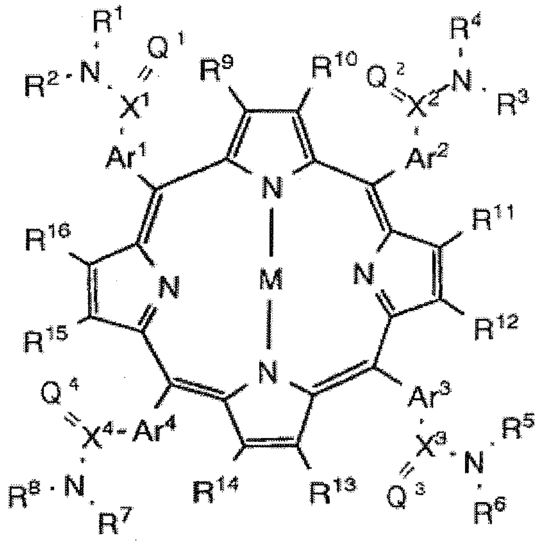

[II]

(In formula [II], $X^1$ to $X^4$ each independently represent an atom having a valence of 4 or higher, provided that when $X^1$ to $X^4$ are an atom having a valence of 5 or higher, these $X^1$ to $X^4$ may further have any desired substituent, and when $X^1$ to $X^4$ are an atom having a valence of 6 or higher, these $X^1$ to $X^4$ may respectively have two $=Q^1$s to two $=Q^4$s, wherein the two $Q^1$s to the two $Q^4$s each may be the same or different;
$Q^1$ to $Q^4$ each independently represent an atom in Group 16 of the periodic table;
$Ar^1$ to $Ar^4$ each independently represent an aromatic ring and each may have a substituent other than $X^1$ to $X^4$;
$R^1$ to $R^8$ each independently represent an organic group having 20 or less carbon atoms;
$R^9$ to $R^{16}$ each independently represent a hydrogen atom or an electron-attracting substituent; and
M represents a metal cation having a valence of 2 or higher, provided that when M has a valence of 3 or higher, then the molecule may further have a counter anion so that the molecule as a whole is neutral,
provided that $R^1$ and $R^2$, $R^3$ and $R^4$, $R^5$ and $R^6$, or $R^7$ and $R^8$ may be bonded to each other to form a ring.)

The dye for recording-layer formation according to the invention may include one of such tetraarylporphyrin compounds according to the invention alone or include a mixture of two or more of such compounds.
The tetraarylporphyrin compound represented by general formula [II] is explained below in detail.

{$X^1(=Q^1)$ to $X^4(=Q^4)$}

In formula [II], $N-X^1(=Q^1)$ to $N-X^4(=Q^4)$ each independently represent an amide structure because this greatly improves the solubility of the porphyrin compound according to the invention in solvents.
In $X^1(=Q^1)$ to $X^4(=Q^4)$ each serving as a component of the amide structure, $X^1$ to $X^4$ each independently represent an atom having a valence of 4 or higher. When $X^1$ to $X^4$ are atoms each having a valence of 5 or higher, these $X^1$ to $X^4$ may further have any desired substituent. When $X^1$ to $X^4$ are atoms each having a valence of 6 or higher, these $X^1$ to $X^4$ may respectively have two $=Q^1$s to two $=Q^4$s. In this case, the two $Q^1$s to the two $Q^4$s each may be the same or different.
Examples of $X^1$ to $X^4$ independently include C, S, and P. Especially preferred are C and S. Examples of the substituents which may be possessed by $X^1$ to $X^4$ when $X^1$ to $X^4$ are atoms having a valence of 5 or higher correspond to the examples of $R^9$ to $R^{16}$ which will be enumerated later.
In $X^1(=Q^1)$ to $X^4(=Q^4)$ each serving as a component of the amide structure, $Q^1$ to $Q^4$ each independently represent an atom in Group 16 of the periodic table, and preferably are O or S.
Examples of $X^1(=Q^1)$ to $X^4(=Q^4)$ include the following structures. These structures are bonded respectively to $Ar^1$ to $Ar^4$ in the position a and bonded to the nitrogen atoms in the position b. $R^{17}$ represents a substituent, and examples thereof correspond to the examples of $R^9$ to $R^{16}$ which will be enumerated later.

[Ka-5]

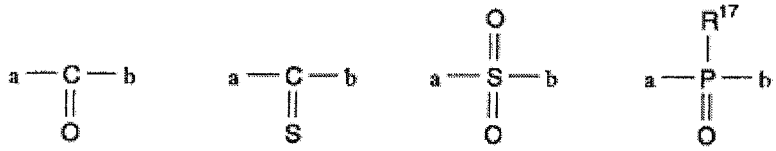

It is preferred that $X^1$(=Q1) to $X^4$(=$Q^4$) each should be a carbonyl group (i.e., N-$X^1$(=$Q^1$) to N-$X^4$(=$Q^4$) each are a carbamoyl group, N-C (=O)) or a sulfonyl group (i.e. , N-$X^1$(=$Q^1$) to N-$X^4$ (=$Q^4$) each are a sulfamoyl group, N-C (=S)) among those structures, from the standpoints of synthesis and the handleability of the compound. From the standpoint of solubility improvement, $X^1$(=$Q^1$) to $X^4$(=$Q^4$) each preferably are a carbonyl group. However, from the standpoint of improving sensitivity by lowering heat decomposition temperature, $X^1$(=$Q^1$) to $X^4$(=$Q^4$) each preferably are a sulfonyl group. Furthermore, from the standpoint of improving the film-forming properties of the compound, it is preferred that $X^1$(=$Q^1$) to $X^4$(=$Q^4$) should be different from each other. However, from the standpoint of syntheses, $X^1$(=$Q^1$) to $X^4$ (=$Q^4$) each preferably are the same.
With respect to the positions in which the substituents $X^1$(=$Q^1$) to $X^4$(=$Q^4$) are bonded to $Ar^1$ to $Ar^4$, it is preferred from the standpoint of improving solubility and film-forming properties that each substituent should be bonded in such a position that the substituent overlaps more with the porphyrin ring. However, from the standpoint of synthesis, each substituent preferably is bonded in a position remote from the porphyrin ring.

{$Ar^1$ to $Ar^4$}

<Framework Structure of $Ar^1$ to $Ar^4$>

In formula [II], $Ar^1$ to $Ar^4$ each independently represent an aromatic ring which may have a substituent. The term "aromatic ring" in the invention means a ring having aromaticity, i.e., a ring having a $(4n+2)\pi$ electron system (n is a natural number). The framework structure of each of $Ar^1$ to $Ar^4$ is an aromatic ring which is a 5- or 6-membered monocycle or a di- or hexacyclic fused ring. Examples of the aromatic ring include aromatic hydrocarbon rings and aromatic heterocycles, and further include fused rings such as an anthracene ring, carbazole ring, and azulene ring.
Examples of the framework structure of $Ar^1$ to $Ar^4$ include 5-membered monocycles such as a furan ring, thiophene ring, pyrrole ring, imidazole ring, thiazole ring, and oxadiazole ring, 6-membered monocycles such as a benzene ring, pyridine ring, and pyrazine ring, and fused rings such as a naphthalene ring, phenanthrene ring, azulene ring, pyrene ring, quinoline ring, isoquinoline ring, quinoxaline ring, benzofuran ring, carbazole ring, dibenzothiophene ring, and anthracene ring. Of these, the monocycles are preferred from the standpoint of synthesis. More preferred are the 6-membered monocycles. Especially preferred is a benzene ring.
From the standpoint of improving solubility and film-forming properties in recording-layer formation, it is preferred that $Ar^1$ to $Ar^4$ should be different from each other. However, from the standpoint of synthesis, $Ar^1$ to $Ar^4$ preferably are the same.

<Substituents Possessed by $Ar^1$ to $Ar^4$>

$Ar^1$ to $Ar^4$ each may have one or more substituents other than $X^1$ to $X^4$. Examples of the substituents other than $X^1$ to $X^4$ which may be possessed by $Ar^1$ to $Ar^4$ include alkyl groups, alkenyl groups, alkynyl groups, cyclic hydrocarbon groups, heterocyclic groups, alkoxy groups, alkylcarbonyl groups, (hetero)aryloxy groups, and (hetero)aralkyloxy groups, and further include an amino group which may have substituents, a nitro group, a cyano group, ester groups, halogen atoms, and a hydroxyl group. Preferred are alkyl groups having 1-20 carbon atoms, alkenyl groups having 2-20 carbon atoms, alkynyl groups having 2-20 carbon atoms, cyclic hydrocarbon groups having 3-20 carbon atoms, heterocyclic groups derived from a 5- or 6-membered monocycle or a di- to hexacyclic fused ring, alkoxy groups having 1-9 carbon atoms, alkylcarbonyl groups having 2-18 carbon atoms, (hetero)aryloxy groups having 2-18 carbon atoms, (hetero)aralkyloxy groups having 3-18 carbon atoms, amino, alkylamino groups having 2-20 carbon atoms, (hetero) arylamino groups having 2-30 carbon atoms, nitro, cyano, ester groups having 2-6 carbon atoms, halogen atoms, and hydroxyl.
Examples of the alkyl groups having 1-20 carbon atoms include methyl, ethyl, propyl, isopropyl, butyl, isobutyl,

sec-butyl, tert-butyl, hexyl, and octyl.

Examples of the alkenyl groups having 2-20 carbon atoms include vinyl, propenyl, butenyl, 2-methyl-1-propenyl, hexenyl, and octenyl.

Examples of the alkynyl groups having 2-20 carbon atoms include ethynyl, propynyl, butynyl, 2-methyl-1-propynyl, hexynyl, and octynyl.

Examples of the cyclic hydrocarbon groups having 3-20 carbon atoms include cyclopropyl, cyclohexyl, cyclohexenyl, tetradecahydroanthranyl, phenyl, anthranyl, phenanthryl, and ferrocenyl.

Examples of the heterocyclic groups derived from a 5- or 6-membered monocycle or a di- to hexacyclic fused ring include pyridyl, thienyl, benzothienyl, carbazolyl, quinolinyl, 2-piperidinyl, 2-piperazinyl, and octahydroquinolinyl.

Examples of the alkoxy groups having 1-9 carbon atoms includemethoxy, ethoxy, propoxy, isopropoxy, butoxy, isobutoxy, sec-butoxy, tert-butoxy, hexyloxy, and octyloxy.

Examples of the alkylcarbonyl groups having 2-18 carbon atomsinclude methylcarbonyl,ethylcarbonyl,isopropylcarbonyl, tert-butylcarbonyl, and cyclohexylcarbonyl.

Examples of the (hetero)aryloxy groups having 2-18 carbon atoms include aryloxy groups such as phenoxy and naphthyloxy and heteroaryloxy groups such as 2-thienyloxy, 2-furyloxy, and 2-quinolyloxy.

Examples of the (hereto) aralkyloxy groups having 3-18 carbon atoms include aralkyloxy groups such as benzyloxy, phenethyloxy, and naphthylmethoxy and heteroaralkyloxy groups such as 2-thienylmethoxy, 2-furylmethoxy, and 2-quinolylmethoxy.

Examples of the alkylamino groups having 2-20 carbon atoms include ethylamino, dimethylamino, methylethylamino, dibutylamino, and piperidyl.

Examples of the (hetero)arylamino groups having 2-30 carbon atoms include arylamino groups such as diphenylamino, dinaphthylamino, naphthylphenylamino, and ditolylamino and heteroarylamino groups such as di(2-thienyl) amino, di(2-furyl)amino, and phenyl(2-thienyl)amino.

Examples of the ester groups having 2-6 carbon atoms include methoxycarbonyl, ethoxycarbonyl, propoxycarbonyl, isopropoxycarbonyl, and tert-butoxycarbonyl.

Examples of the halogen atoms include fluorine, chlorine, bromine, and iodine atoms.

In the case where $Ar^1$ to $Ar^4$ each have two or more substituents other than $X^1$ to $X^4$, the substituents may be bonded to each other to form a cyclic structure. For example, when $Ar^1$ to $Ar^4$ are groups derived from a benzene ring, examples of the structure in which substituents possessed by the benzene ring are bonded to each other to form a cyclic structure include the structures represented by the following (a-1), (a-2), and (a-3). In the following formulae, the position a is the site where the structure is bonded to the porphyrin ring, and the position b is the site where the structure is bonded to $X^1$ to $X^4$.

[Ka-6]

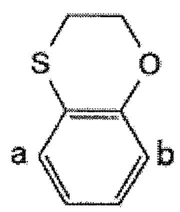
(a-1)

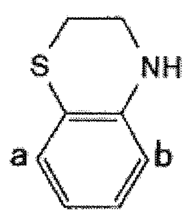
(a-2)

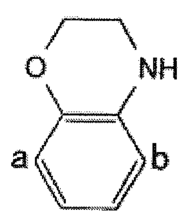
(a-3)

It is preferred, from the standpoint of improving film-forming properties, that $Ar^1$ to $Ar^4$ should have such substituents besides $X^1$ to $X^4$. However, from the standpoint of synthesis, it is preferred that $Ar^1$ to $Ar^4$ should have no substituents other than $X^1$ to $X^4$.

<Molecular Weight of $Ar^1$ to $Ar^4$>

The molecular weight of $Ar^1$ to $Ar^4$ is preferably 3,000 or lower, from the standpoint of preventing the porphyrin compound from decreasing in absorbance and thereby decreasing in recording sensitivity, in terms of total molecular weight including those of the N,N-disubstituted amide structure groups and any other substituents. {N,N-Disubstituted Amino Group}

<Organic Groups $R^1$ to $R^8$>

In the N,N-di-substituted amino moieties contained in the N,N-disubstituted amide structure groups, substituents $R^1$ to $R^8$ each independently represent an organic group having up to 20 carbon atoms.
Examples of the organic groups represented by $R^1$ to $R^8$ include alkyl groups, alkenyl groups, alkynyl groups, cyclic hydrocarbon groups, heterocyclic groups, alkoxy groups, alkylcarbonyl groups, (hetero)aryloxy groups, (hetero)aralkyloxy groups, and ester groups. Preferred are alkyl groups having 1-20 carbon atoms, alkenyl groups having 2-20 carbon atoms, alkynyl groups having 2-20 carbon atoms, cyclic hydrocarbon groups having 3-20 carbon atoms, heterocyclic groups derived from a 5- or 6-membered monocycle or a di- to hexacyclic fused ring, alkoxy groups having 1-9 carbon atoms, alkylcarbonyl groups having 2-18 carbon atoms, (hetero) aryloxy groups having 2-18 carbon atoms, (hetero) aralkyloxy groups having 3-18 carbon atoms, and ester groups having 2-6 carbon atoms.
Examples of those groups correspond to the examples enumerated above as examples of the alkyl groups having 1-20 carbon atoms, alkenyl groups having 2-20 carbon atoms, alkynyl groups having 2-20 carbon atoms, cyclic hydrocarbon groups having 3-20 carbon atoms, heterocyclic groups derived from a 5- or 6-membered monocycle or a di- to hexacyclic fused ring, alkoxy groups having 1-9 carbon atoms, alkylcarbonyl groups having 2-18 carbon atoms, (hetero)aryloxy groups having 2-18 carbon atoms, (hetero)aralkyloxy groups having 3-18 carbon atoms, and esters group having 2-6 carbon atoms which may be possessed as substituents by $Ar^1$ to $Ar^4$ described above.
$R^1$ and $R^2$, $R^3$ and $R^4$, $R^5$ and $R^6$, and $R^7$ and $R^8$ may be bonded to each other to form a cyclic structure. For example, when $R^1$ and $R^2$ are bonded to each other to form a 6-membered ring, examples of this N,N-disubstituted amino group include the following structures (R-1), (R-2), and (R-3).

[Ka-7]

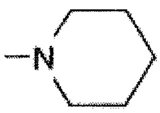

(R-1)

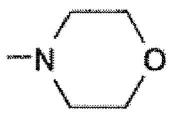

(R-2)

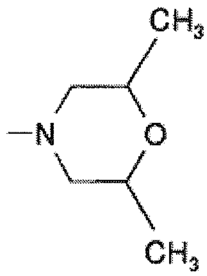

(R-3)

It is preferred that $R^1$ to $R^8$ should be different from each other from the standpoints of improving solubility and improving film-forming properties. However, from the standpoint of synthesis, it is preferred that $R^1$ to $R^8$ should be the same. Furthermore, from the standpoint of preventing the compound from decreasing in solubility, it is preferred that $R^1$ to $R^8$ each should not be sterically bulky with respect to the nitrogen atom of the amide structure group. Specifically, n-alkyl groups, n-alkenyl groups, n-alkynyl groups, alkoxy groups, alkylcarbonyl groups, and the like are preferred. Especially preferred are n-alkyl groups, alkoxy groups, and the like.

<Molecular Weight of $R^1$ to $R^8$>

The molecular weight of $R^1$ to $R^8$ is preferably 3,000 or lower in total, from the standpoint of preventing the porphyrin compound from decreasing in absorbance and thereby decreasing in recording sensitivity.

{$R^9$ to $R^{16}$}

$R^9$ to $R^{16}$ each independently represent a hydrogen atom or an electron-attracting substituent from the standpoints of synthesis and compound stability.
Examples of the electron-attracting substituent include alkylcarbonyl groups having 2-18 carbon atoms, ester groups having 2-6 carbon atoms, halogen atoms, cyano, and nitro. Examples thereof correspond to the examples enumerated above as examples of the alkylcarbonyl groups having 2-18 carbon atoms, ester groups having 2-6 carbon atoms, and

halogen atoms which may be possessed as substituents by $Ar^1$ to $Ar^4$ described above.

It is preferred from the standpoint of synthesis that $R^9$ to $R^{16}$ each should be a hydrogen atom or a halogen atom among those examples. From the standpoint of improving light resistance, $R^9$ to $R^{16}$ each especially preferably are a halogen atom. However, from the standpoint of synthesis, $R^9$ to $R^{16}$ each especially preferably are a hydrogen atom. The molecular weight of $R^9$ to $R^{16}$ is preferably 1,000 or lower in total, from the standpoint of preventing the porphyrin compound from decreasing in absorbance and thereby decreasing in recording sensitivity.

{M}

M represents a metal cation having a valence of 2 or higher. M may be any metallic element capable of coordinating to the center of the porphyrin ring. Examples thereof include Mg, Al, Si, Ti, V, Cr, Mn, Fe, Co, Ni, Cu, Zn, Mo, Ru, Rh, Pd, Ag, Pt, Au, and Er.

That M is a metal cation having a valence of 2 or higher is effective in improving the stability of the compound. From the standpoint of improving the recording sensitivity of the compound, it is preferred that M should be a metal showing no diamagnetism. Especially preferred from the standpoint of synthesis are Co, Ni, and Cu.

In the case where M is a metal ion having a valence of 3 or higher, M may be further bonded to a counter anion. The counter anion makes the whole molecule of the compound represented by general formula [II] neutral. Examples of the kind of this counter anion include alkoxy ions, (hetero) aryloxy ions, (hetero) aralkyloxy ions, cyano ion which may have a substituent, ester ions, halogen ions, hydroxy ion, and oxygen ion. Specific examples thereof include alkoxy ions having 1-9 carbon atoms, (hetero) aryloxy ions having 2-18 carbon atoms, and (hetero) aralkyloxy ions having 3-18 carbon atoms. Examples thereof correspond to the ion forms of the examples enumerated above as examples of the alkoxy groups having 1-9 carbon atoms, (hetero)aryloxy groups having 2-18 carbon atoms, and (hetero)aralkyloxy groups having 3-18 carbon atoms which may be possessed as substituents by $Ar^1$ to $Ar^4$ described above.

The counter anion preferably is one having a low molecular weight from the standpoint of improving the sensitivity of the compound. Especially preferred are ones having a molecular weight of 200 or lower, such as an acetoxy ion, cyano ion, chlorine ion, and oxygen ion.

{Molecular Weight}

The compound represented by general formula [II] explained above preferably has a molecular weight of generally 6,000 or lower, in particular, 3,000 or lower, from the standpoint of preventing the compound from decreasing in absorbance and thereby decreasing in sensitivity.

It is preferred that the compound represented by general formula [II] should generally be water-insoluble.

{Specific Examples}

Specific examples of the compound represented by general formula [II] are shown below. However, the compound according to the invention should not be construed as being limited to the following examples, wherein Et is ethyl.

[Ka-8]

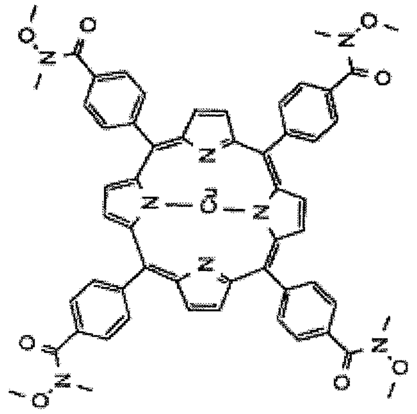

(A-4)

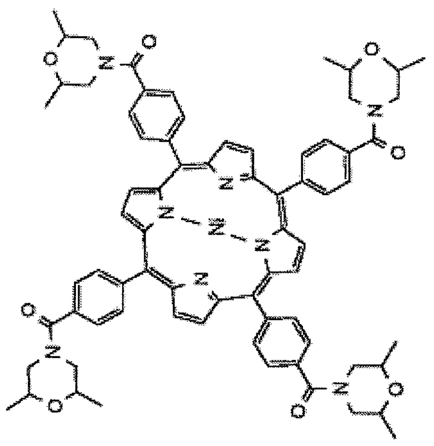

(A-3)

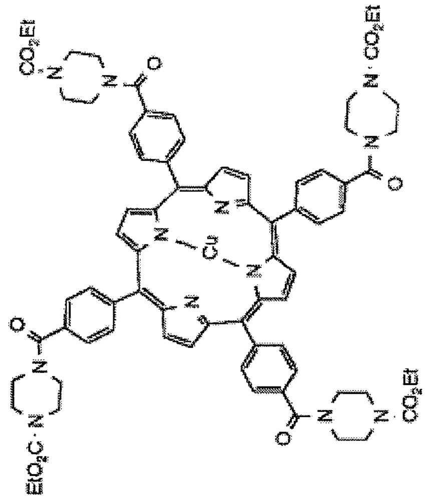

(A-6)

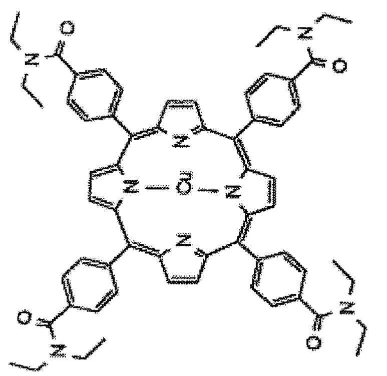

(A-2)

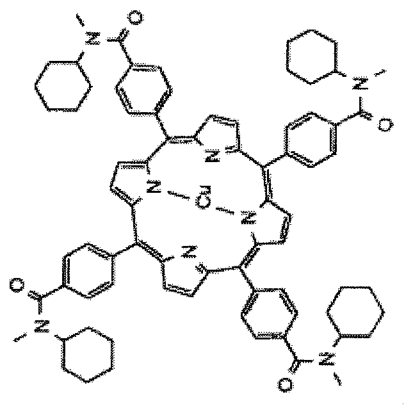

(A-5)

[Ka-9]

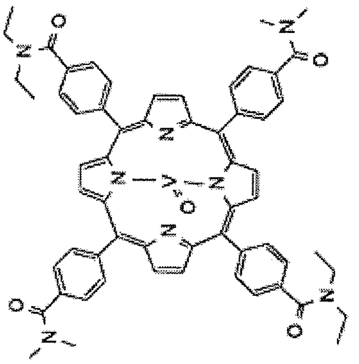

(A-9)

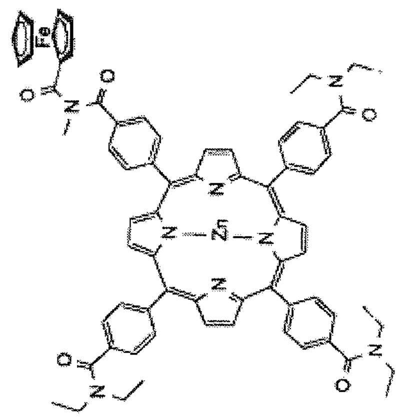

(A-12)

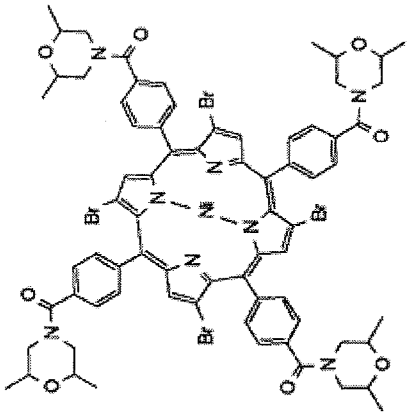

(A-8)

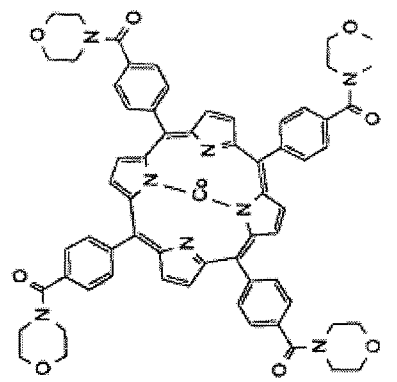

(A-11)

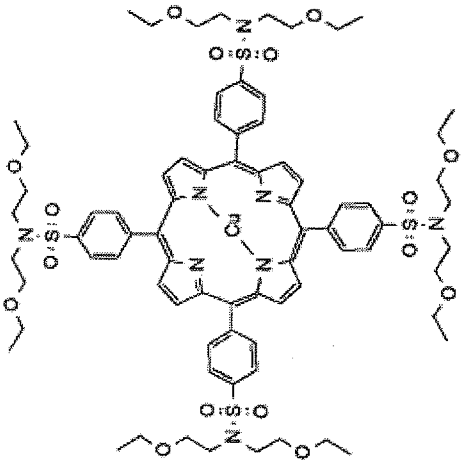

(A-7)

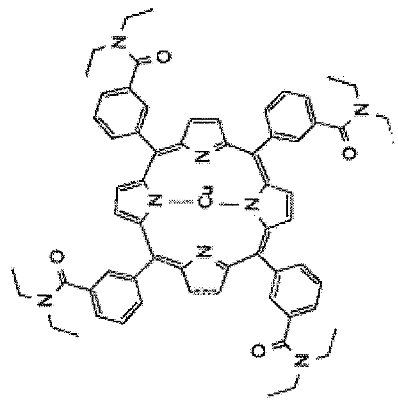

(A-10)

[Ka-10]

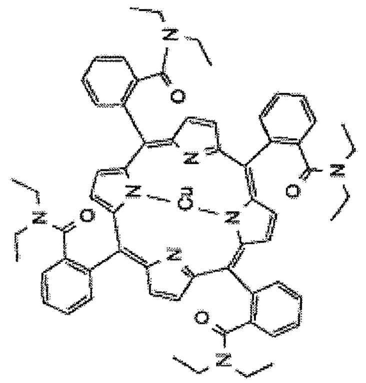

(A-13)

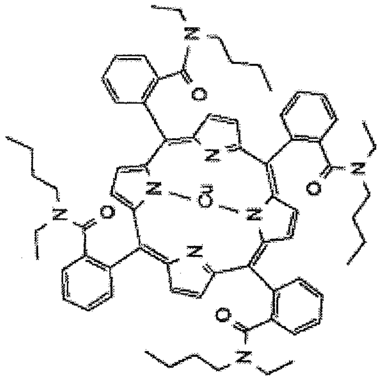

(A-14)

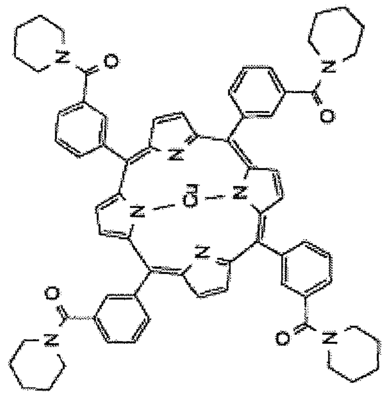

(A-15)

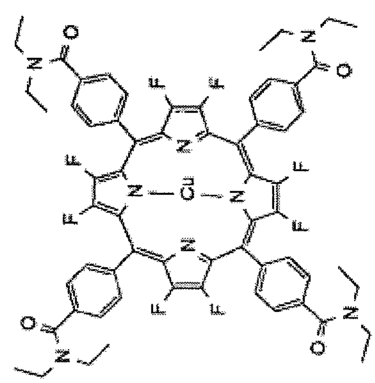

(A-16)

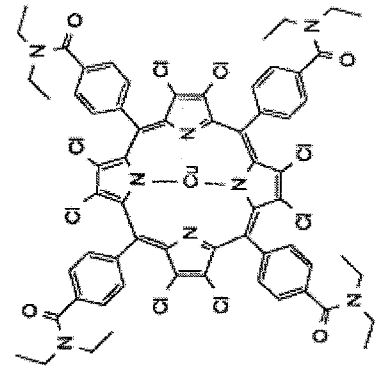

(A-17)

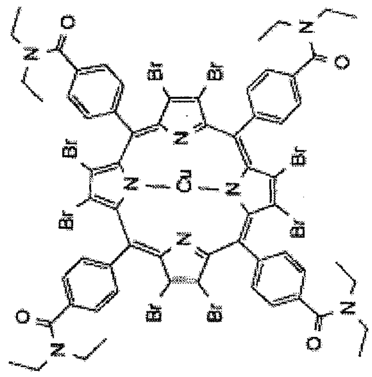

(A-18)

[Ka-11]

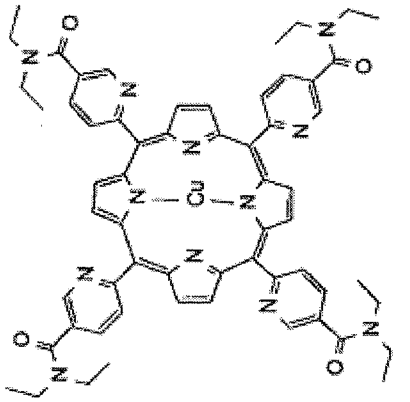
(A-24)

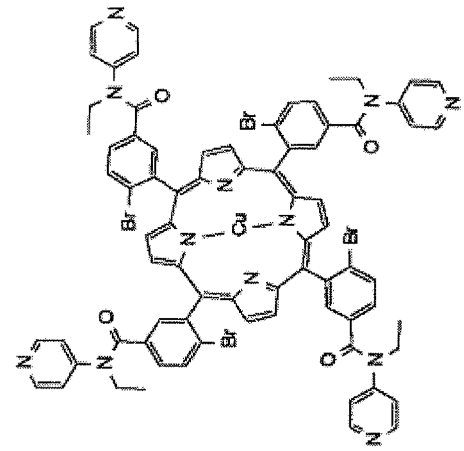
(A-20)

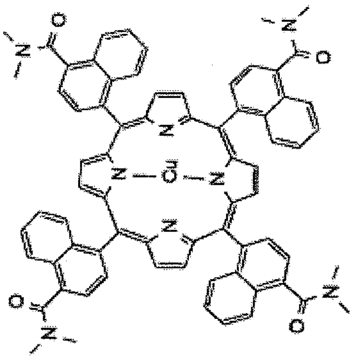
(A-23)

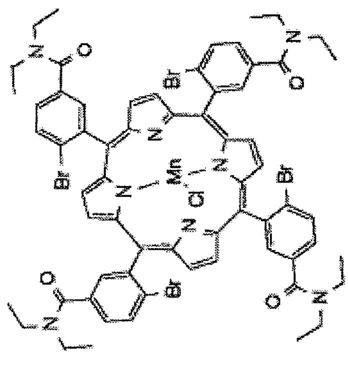
(A-19)

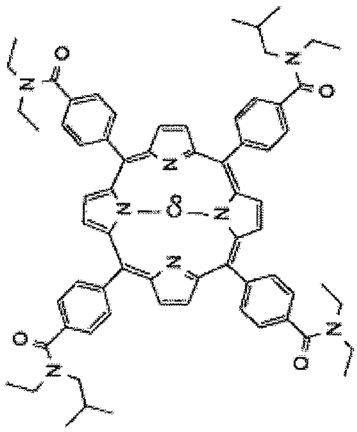
(A-22)

[Ka-12]

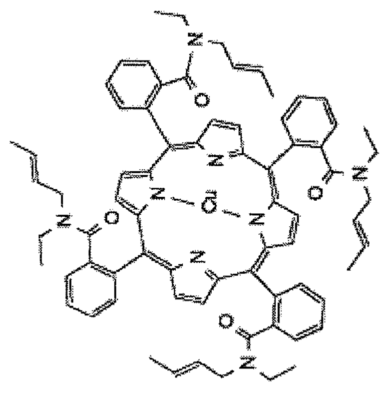

(A-25)

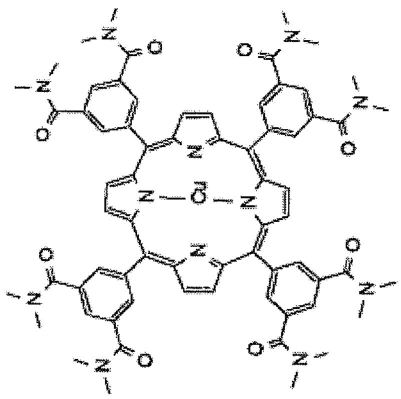

(A-26)

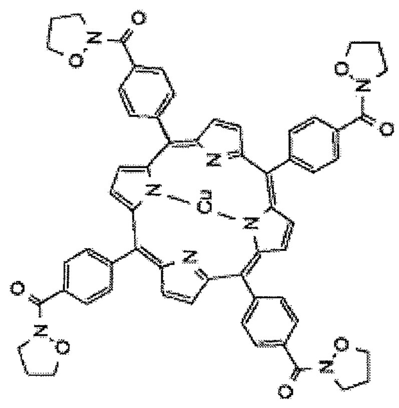

(A-27)

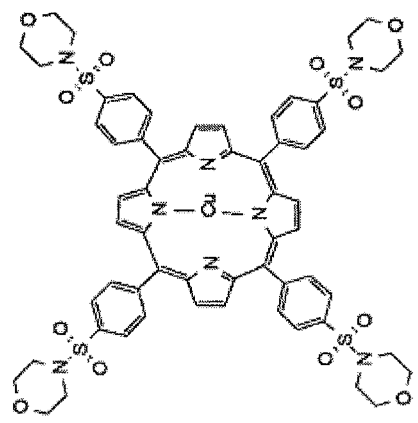

(A-28)

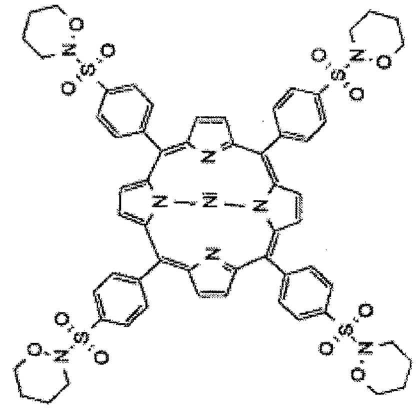

(A-29)

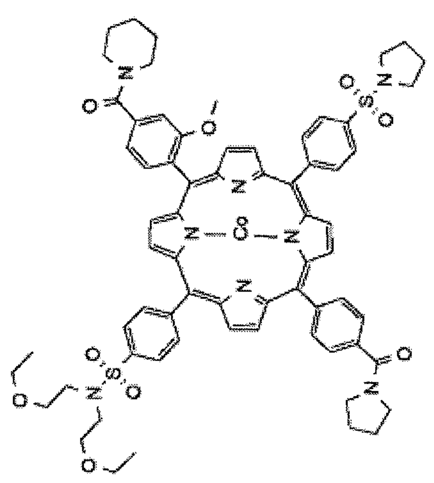

(A-30)

[Ka-13]

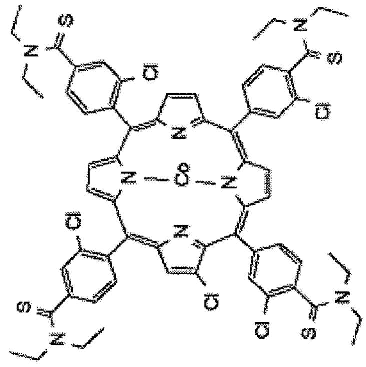

(A-33)

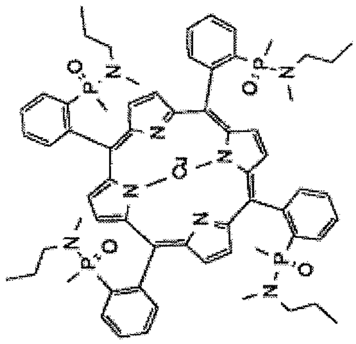

(A-32)

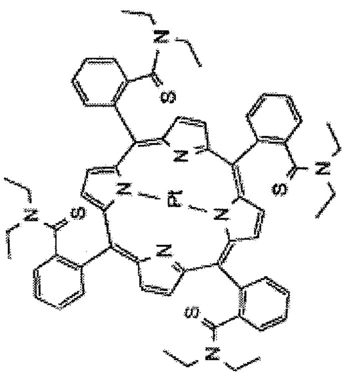

(A-31)

{Synthesis Method}

The compound represented by general formula [II] can be easily synthesized, for example, by the method described in Bioorg. Med. Chem., 2002 (Vol.10), pp.3013-3021.
For example, when all of $X^1$(=$Q^1$) to $X^4$(=$Q^4$) are carbonyl groups (i.e., N-$X^1$(=$Q^1$) to N-$X^4$(=$Q^4$) each are a carbamoyl group, N-C(=O)), the following method may be used. A commercial tetraarylporphyrin compound having carboxyl groups is heated in the presence of thienyl chloride mixed therewith, and a di-substituted amine is caused to act on the tetraarylporphyrin compound to obtain a tetraarylporphyrin compound having N,N-di-substituted carbamoyl groups. The tetraarylporphyrin compound obtained is reacted with a metal salt in the presence or absence of a solvent at room temperature or with heating. Thus, a tetraarylporphyrin metal complex having N,N-di-substituted carbamoyl groups can be obtained. Tetraarylporphyrin compounds in which $X^1$ (=$Q^1$) to $X^4$ (=$Q^4$) are not carbonyl can be synthesized by the same method, except that the tetraarylporphyrin compound to be used as a starting material or another ingredient is replaced.

(Method of Forming Recording Layer)

Examples of methods usable for forming the recording layer 22 include coating fluid application and vacuum deposition. However, it is especially preferred to form the recording layer by coating fluid application. Specifically, the dye as a main component is dissolved in an appropriate solvent together with other ingredients including a binder and a quencher to prepare a coating fluid for forming the recording layer 22, and this coating fluid is applied on the reflective layer 23 described above or on the interlayer overlying the reflective layer. The concentration of the main-component dye in the solution is generally 0.01% by weight or higher, preferably 0.1% by weight or higher, more preferably 0.2% by weight or higher, and is generally 10% by weight or lower, preferably 5% by weight or lower, more preferably 2% by weight or lower. Thus, a recording layer 22 having a thickness of usually about from 1 nm to 100 nm is formed. For regulating the thickness thereof to 50 nm or smaller (preferably below 50 nm), it is preferred to regulate the dye concentration to below 1% by weight, more preferably below 0.8% by weight. It is also preferred to further regulate a rotation speed during the application.

Examples of the solvent to be used for dissolving materials including the main-component dye therein include alcohols such as ethanol, n-propanol, isopropanol, n-butanol, and diacetone alcohol; fluorinated hydrocarbon solvents such as tetrafluoropropanol (TFP) and octafluoropentanol (OFP); glycol ethers such as ethylene glycol monomethyl ether, ethylene glycol monoethyl ether, and propylene glycol monomethyl ether; esters such as butyl acetate, ethyl lactate, and Cellosolve acetate; chlorinated hydrocarbons such as dichloromethane and chloroform; hydrocarbons such as dimethylcyclohexane; ethers such as tetrahydrofuran, ethyl ether, and dioxane; and ketones such as methyl ethyl ketone, cyclohexanone, and methyl isobutyl ketone. A suitable one can be selected from these solvents while taking account of the solubility of the main-component dye and other materials to be dissolved. Any one of those solvents may be used alone, or a mixture of two or more thereof may be used.

As the binder, use can be made of, for example, an organic polymer such as, e.g., a cellulose derivative, natural polymeric substance, hydrocarbon resin, vinyl resin, acrylic resin, poly(vinyl alcohol), or epoxy resin. Furthermore, various dyes or fading inhibitors other than dyes can be incorporated into the recording layer 22 in order to improve light resistance. Generally used as the fading inhibitors are singlet-oxygen quenchers. The amount of the fading inhibitor, e.g., singlet quencher, to be used is generally 0.1% by weight or larger, preferably 1% by weight or larger, more preferably 5% by weight or larger, based on the recording-layer materials, and is generally 50% by weight or smaller, preferably 30% by weight or smaller, more preferably 25% by weight or smaller, based on the recording-layer materials.
Examples of techniques for coating fluid application include spray coating, spin coating, dip coating, and roll coating. However, spin coating is especially preferred in disk-form optical recording media because this coating technique can secure the evenness of film thickness and reduce the density of defects.

(Interfacial Layer)

In this embodiment, the swelling of the recording layer 22 toward the cover layer 24 side and the resultant $d_{bmp}<0$ can be effectively utilized especially by disposing an interfacial layer between the recording layer 22 and the cover layer 24. The thickness of the interfacial layer is preferably from 1 nm to 50 nm. The upper limit thereof is more preferably 30 nm. The lower limit thereof is preferably 5 nm or larger. It is desirable that reflection at the interfacial layer should be as low as possible. This is for selectively utilizing a phase change in reflected lights from the reflective layer 23 serving as a main reflective surface. That the interfacial layer serves as a main reflective surface is not preferred in this embodiment. It is therefore desirable that the difference in refractive index between the interfacial layer and the recording layer 22 or between the interfacial layer and the cover layer 24 should be small. The difference for each boundary is preferably 1 or smaller, more preferably 0.7 or smaller, even more preferably 0.5 or smaller.

Effects of an interfacial layer are known, such as to inhibit the formation of a mixed layer 25m such as that shown in Fig. 4, to prevent the corrosion caused by an adhesive when a cover layer 24 is laminated to the recording layer 22, and to prevent the recording layer 22 from dissolving away due to the solvent used for forming a cover layer 24 by coating fluid application. In this embodiment also, such effects can be suitably utilized in combination with that described above. For forming the interfacial layer, it is preferred to use a material which is transparent at the wavelength of a recording/reproducing light and is chemically, mechanically, and thermally stable. The term "transparent" herein means to have a transmittance of 80% or higher with respect to the transmission of the recording/reproducing light beam 27. The transmittance of the material is preferably 90% or higher.
The upper limit of transmittance is 100%.

The interfacial layer preferably is made of a dielectric compound, such as the oxide, nitride, carbide, or sulfide of a metal, semiconductor, etc. or the fluoride of magnesium (Mg), calcium (Ca), etc., or a mixture of such dielectric compounds. The interfacial layer preferably has such a refractive index that the difference in refractive index between the interfacial layer and the recording layer or cover layer is 1 or smaller. The value of refractive index thereof is desirably in the range of 1-2.5. A deformation of the recording layer 22, in particular, swelling deformation toward the cover layer

24 side ($d_{bmp}$<0), can be accelerated or inhibited by regulating the hardness or thickness of the interfacial layer. For effectively utilizing the swelling deformation, it is preferred to employ a dielectric material having a relatively low hardness. Especially preferred is a material obtained by mixing ZnO, $In_2O_3$, $Ga_2O_3$, ZnS, or the sulfide of a rare-earth metal with the oxide, nitride, or carbide of another metal or semiconductor. It is also possible to employ a plastic film formed by sputtering or a film formed by the plasma polymerization of hydrocarbon molecules. Even when an interfacial layer has been formed, equation (2), the optical path length in equation (3), and equations (7) to (9) hold as they are, so long as the thickness and refractive index of the interfacial layer are even throughout the recording groove portion and land part and do not significantly change upon recording.

(Cover Layer)

For the cover layer 24, a material which is transparent to the recording/reproducing light beam 27 and shows reduced birefringence is selected. Usually, the cover layer 24 is formed by laminating a plastic plate (referred to as sheet) with an adhesiven or by applying a coating fluid and then curing the coating with a light, radiation, heat, etc. The cover layer 24 has a transmittance of preferably 70% or higher, more preferably 80% or higher, at the wavelength $\lambda$ of the recording/reproducing light beam 27.

The plastic to be used as the sheet material may be a polycarbonate, polyolefin, acrylic, cellulose triacetate, poly(ethylene terephthalate), or the like. For the bonding, use may be made of a photo- or radiation-curable resin, thermosetting resin, or pressure-sensitive adhesive. As the pressure-sensitive adhesive can be used a pressure-sensitive adhesive including any of acrylic, methacrylate, rubber, silicone, and urethane polymers.

For example, the following method may be used. A photocurable resin for constituting an adhesive layer is dissolved in an appropriate solvent to prepare a coating fluid. Thereafter, this coating fluid is applied on the recording layer 22 or interfacial layer to form a coating film, and a polycarbonate sheet is superposed on the coating film. Subsequently, the coating fluid is optionally further spread, for example, by rotating the medium having the superposed sheet. The medium is then irradiated with ultraviolet using a UV lamp to cure the coating film. Alternatively, a pressure-sensitive adhesive is applied beforehand to a sheet and this sheet is superposed on the recording layer 22 or interfacial layer. Thereafter, the sheet is pressed against the layer at an appropriate pressing force to press-bond the sheet.

The pressure-sensitive adhesive preferably is an acrylic- or methacrylic-polymer pressure-sensitive adhesive from the standpoints of transparency and durability. More specifically, 2-ethylhexyl acrylate, n-butyl acrylate, isooctyl acrylate, or the like is used as a main-ingredient monomer, and this main-ingredient monomer is copolymerized with a polar monomer such as acrylic acid, methacrylic acid, an acrylamide derivative, maleic acid, hydroxyethyl acrylate, or glycidyl acrylate. Properties such as glass transition temperature Tg, tack performance (adhesive force formed upon low-pressure contact), peel strength, and shear holding force can be regulated by regulating the molecular weight of the main-ingredient monomer, mixing a short-chain ingredient therewith, and regulating the density of crosslinking sites with acrylic acid (*Setchakuzai To Setchaku Gjjutsu Nyūmon,* written by Alphonsus V. Pocius, translated by Hiroshi Mizumachi and Hirokuni Ono, The Nikkan Kogyo Shinbun Ltd. , 1999, Chap. 9) . As a solvent for the acrylic polymer, use may be made of ethyl acetate, butyl acetate, toluene, methyl ethyl ketone, cyclohexane, or the like. It is preferred that the pressure-sensitive adhesive should further contain a polyisocyanate crosslinking agent.

The pressure-sensitive adhesive, for which the materials described above are used, is evenly applied in a given amount to that surface of a cover-layer sheet material which comes into contact with the recording-layer side. The adhesive applied is dried to remove the solvent. Thereafter, this sheet material is applied to the recording-layer-side surface (to the surface of the interfacial layer when the medium has this layer), and is pressed with, e.g., a roller and cured. In bonding the cover-layer sheet material coated with the pressure-sensitive adhesive to a surface of the recording medium having a recording layer, it is preferred to laminate the sheet material under vacuum in order to prevent air inclusion and resultant bubble formation.

Furthermore, the following method may be used. The pressure-sensitive adhesive is applied to a release film and then dried to remove the solvent. Thereafter, a cover-layer sheet is laminated thereto, and the release film is peeled off to unite the cover-layer sheet with the pressure-sensitive adhesive layer. Subsequently, this cover-layer sheet is laminated to the recording medium.

In the case where a cover layer 24 is formed by coating fluid application, use may be made of spin coating, dip coating, or the like. However, spin coating is frequently used for disk-form media. As a material for forming the cover layer 24 through coating fluid application, use may be made of a urethane, epoxy, or acrylic resin or the like in this case also. After application, the coating is irradiated with ultraviolet, electron beams, a radiation, or the like to accelerate radical polymerization or cationic polymerization and cure the resin.

For utilizing a deformation resulting in $d_{bmp}$<0, it is desirable that the cover layer 24 should include a layer (having a thickness at least approximately equal to $d_{GL}$ or a larger thickness) conformable to the swelling deformation at least on the side thereof in contact with the recording layer 22 or interfacial layer. It is preferred that the value of $d_{bmp}$ should be in the range of from one time to three times the value of $d_G$. It is rather desirable to positively utilize a deformation

as large as 1.5 times or more. It is preferred that the cover layer 24 should have moderate flexibility (hardness). For example, the cover layer 24 is constituted of a resinous sheet material having a thickness of from 50μ m to 100 μm, and is laminated with a pressure-sensitive adhesive. In this case, the adhesive layer has a glass transition temperature as low as from -50°C to 50°C and is relatively flexible. Consequently, the deformation resulting in $d_{bmp}<0$ is relatively enlarged. Especially preferred is the case where the adhesive layer has a glass transition temperature of room temperature or lower. The thickness of the adhesive layer formed from an adhesive is generally preferably from 1 μm to 50 μm, more preferably from 5 μm to 30 μm. It is preferred to dispose a deformation-accelerating layer in which the thickness, glass transition temperature, and crosslink density of the adhesive-layer material are regulated to thereby positively control the amount of the swelling deformation. Alternatively, in the case of forming the cover layer 24 by coating fluid application, it is preferred, from the standpoint of controlling the deformation amount $d_{bmp}$, that multilayer application should be conducted to separately form a deformation-accelerating layer having a thickness of from 1 μm to 50 μm, more preferably from 5 μm to 30 μm, and a relatively low hardness and a layer having the remaining thickness.

In the case where a deformation-accelerating layer made of a pressure-sensitive adhesive, adhesive, protective coating material, or the like is formed on the recording layer (interfacial layer) side of the cover layer, the glass transition temperature Tg thereof is preferably 25°C or lower, more preferably 0°C or lower, even more preferably -10°C or lower, from the standpoint of imparting certain flexibility. The term "glass transition temperature Tg" herein means a value measured after the pressure-sensitive adhesive, adhesive, protective coating material, or the like has cured. A simple method of measuring Tg is differential scanning calorimetry (DSC). Tg can be determined also by examining the temperature dependence of storage modulus with an apparatus for examining dynamic viscoelasticity *(*Setchakuzai To Setchaku Gjjutsu Nyumon, written by Alphonsus V. Pocius, translated by Hiroshi Mizumachi and Hirokuni Ono, The Nikkan Kogyo Shinbun Ltd. , 1999, Chap. 5).

To accelerate the deformation resulting in $d_{bmp}<0$ not only can increase the amplitude of LtoH signals but also has an advantage that the recording power necessary for recording can be reduced. On the other hand, too large a deformation results in enhanced crosstalk or too weak push-pull signals. It is therefore preferred that the deformation-accelerating layer should retain moderate viscoelasticity even at temperatures not lower than the glass transition temperature.

There are cases where a layer having a thickness of about from 0.1 μm to 50 μm is further formed on the light-entrance-side surface of the cover layer 24 in order to impart functions such as marring resistance and unsusceptibility to fingerprint adhesion. The thickness of the cover layer 24 is preferably in the range of from 0.01 mm to 0.3 mm, more preferably in the range of from 0.05 mm to 0.15 mm, although it varies depending on the wavelength λ of the recording/reproducing light beam 27 and the NA (numerical aperture) of the objective lens 28. It is preferred that the overall thickness thereof including the thicknesses of the adhesive layer, hard coat layer, etc. should be within an optically acceptable thickness range. In the case of blue-ray disks, for example, the overall thickness is preferably regulated to about 100±3 μm or smaller.

In the case where a layer differing in refractive index from the cover layer has been disposed on the recording layer side of the cover layer, as in the case of disposing a deformation-accelerating layer, the cover-layer refractive index $n_c$ in the invention means the value for that layer on the recording layer side.

(Other Constitution)

This embodiment of the optical recording medium may have any desired layers besides the layers described above, unless the disposition of such layers departs from the spirit of the invention. For example, an interfacial layer can be interposed between the substrate 21 and the reflective layer 23, besides at the boundary between the recording layer 22 and the cover layer 24 as described above, for the purpose of preventing contact/diffusion between the two layers or regulating phase difference and reflectance.

EXAMPLES

The invention will be explained below in more detail by reference to Examples. However, the invention should not be construed as being limited to the following Examples.

(EXAMPLE 1)

An alloy target having a composition represented by $Ag_{98.1}Nd_{1.0}Cu_{0.9}$ (in terms of at.%) was subjected to sputtering to form a reflective layer having a thickness of about 70 nm on a polycarbonate resin substrate having a guide groove with a groove width of about 0.18 μm and a groove depth of about 55 nm formed at a track pitch of 0.32 μm. Niobium was subjected to sputtering to form an interlayer having a thickness of about 2 nm on the reflective layer. Furthermore, the dye represented by the following structural formula was dissolved in octafluoropentanol (OFP), and

the solution obtained was applied on the interlayer by spin coating to form a film.
The structural formula had a refractive index of 1.08 and an extinction coefficient of 1.15. These values of refractive index and extinction coefficient were determined by ellipsometry with ellipsometer "MEL-30S", manufactured by Japan Spectroscopic Co., Ltd. (patent document 45, Hiroyuki Fujiwara, Bunko Eriputometori, Maruzen Shuppan, 2003, Chap. 5). The recording layer in a coating film state formed alone on a polycarbonate resin substrate was examined for absorption spectrum with a spectrophotometer (UV-3150, manufactured by Shimadzu Corp.).
Furthermore, the groove depth and groove width of the substrate were measured with an atomic force microscope (AFM: NanoScope IIIa, manufactured by Digital Instruments).
In Fig. 9 are shown the absorption spectrum of the recording layer in a coating film state formed alone on a polycarbonate resin substrate and the wavelength dependence of the $n_d$ and $k_d$ thereof.

[Ka-14]

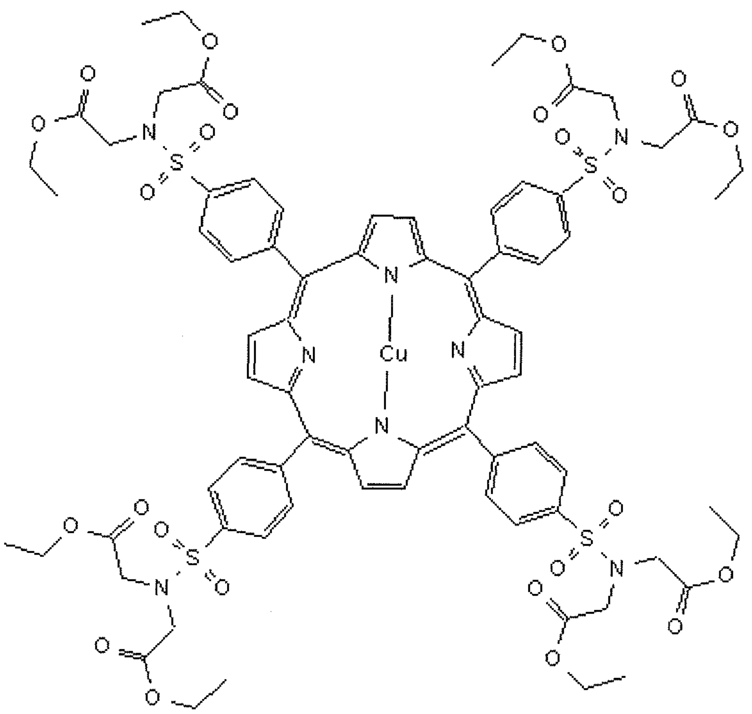

Conditions for the spin coating are as follows. A solution prepared by dissolving the dye in OFP in a concentration of 0.66% by weight was circularly applied in an amount of 1.5 g to an area around the center of the disk (the substrate having the reflective layer and interlayer formed thereon). The disk was rotated at 120 rpm for about 4 seconds and then at 1,200 rpm for about 3 seconds to spread the dye solution. Thereafter, the disk was rotated at 9,200 rpm for 3 seconds to remove the excess dye solution. After the dye solution was thus applied, the disk was held in a 100°C environment for 1 hour to vaporize and remove the OFP as a solvent. Thus, a recording layer was formed.
Thereafter, an interfacial layer made of $ZnS\text{-}SiO_2$ (molar ratio, 80:20) was formed in a thickness of about 16 nm on the recording layer by sputtering. A transparent cover layer having an overall thickness of 100 μm which was composed of a polycarbonate resin sheet having a thickness of 75 μm and a pressure-sensitive adhesive layer having a thickness of 25 μm was laminated to the interfacial layer. Thus, an optical recording medium (optical recording medium of Example 1) was produced.

(EXAMPLE 2)

An alloy target having a composition represented by $Ag_{98.1}Nd_{1.0}Cu_{0.9}$ (in terms of at.%) was subjected to sputtering to form a reflective layer having a thickness of about 65 nm on a polycarbonate resin substrate having a guide groove with a groove width of about 0.18 μm and a groove depth of about 60 nm formed at a track pitch of 0.32 μm.

The dye represented by the following structural formula was dissolved in octafluoropentanol (OFP), and the solution obtained was applied on the reflective layer by spin coating to form a film.

The structural formula had a refractive index of 0.98 and an extinction coefficient of 1.22. In Fig. 10 are shown an absorption spectrum of the recording layer in a coating film state formed alone on a polycarbonate resin substrate and the wavelength dependence of the $n_d$ and $k_d$ thereof.

[Ka-15]

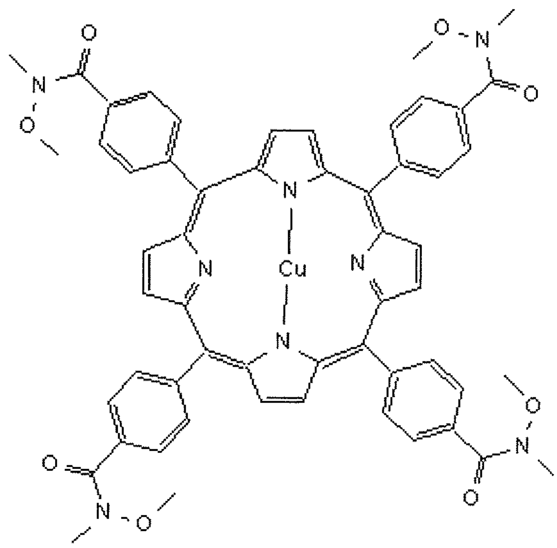

The spin coating, formation of the recording layer, and subsequent operations were conducted in the same manners as in Example 1.

Thereafter, an interfacial layer made of $ZnS-SiO_2$ (molar ratio, 80:20) was formed in a thickness of about 16 nm on the recording layer by sputtering. A transparent cover layer having an overall thickness of 100 μm which was composed of a polycarbonate resin sheet having a thickness of 75 μm and a pressure-sensitive adhesive layer having a thickness of 25 μm was laminated to the interfacial layer. Thus, an optical recording medium (optical recording medium of Example 1) was produced.

(COMPARATIVE EXAMPLE 1)

An alloy target having a composition represented by $Ag_{98.1}Nd_{1.0}Cu_{0.9}$ (in terms of at.%) was subjected to sputtering to form a reflective layer having a thickness of about 65 nm on a polycarbonate resin substrate having a guide groove with a groove width of about 0.18 μm and a groove depth of about 60 nm formed at a track pitch of 0.32 μm. The azo dye represented by the following structural formula was dissolved in octafluoropentanol (OFP), and the solution obtained was applied on the reflective layer by spin coating to form a film.

[Ka-16]

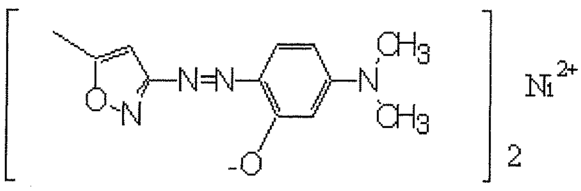

The dye material represented by the structural formula given above had a refractive index of 1.24 and an extinction coefficient of 0.24. The spin coating, formation of the recording layer, and subsequent operations were conducted in the same manners as in Example 1.

Thereafter, an interfacial layer made of $ZnS-SiO_2$ (molar ratio, 80:20) was formed in a thickness of about 20 nm on the recording layer by sputtering. A transparent cover layer having an overall thickness of 100 μm which was composed of a polycarbonate resin sheet having a thickness of 75 μm and a pressure-sensitive adhesive layer having a thickness of 25μ m was laminated to the interfacial layer. Thus, an optical recording medium (optical recording medium of Comparative Example 1) was produced.

(EVALUATION CONDITIONS)

The optical recording media of Examples 1 and 2 were evaluated for recording/reproducing characteristics with ODU 1000 Tester, manufactured by Pulstec Co., Ltd., which had an optical system having a recording/reproducing light wavelength λ of 406 nm, NA (numerical aperture) of 0.85, and converged-beam spot diameter of about 0.42 μm (in a range resulting in $1/e^2$ the center intensity). The recording/reproducingwas conducted in the substrate groove part (in-groove).

In the recording, a linear velocity of 4.92 m/s was taken as one-fold speed. Each recording medium was rotated at one-fold speed or two-fold speed to record mark length modulation signals (17 PP) which had undergone (1,7)RLL-NRZI modulation. The reference clockperiodTwas 15.15 nsec (channel clock frequency, 66 MHz) in one-fold speed, and was 7.58 nsec (channel clock frequency, 132 MHz) in two-fold speed. Recording conditions including recording power and recording pulse were regulated so as to minimize the jitter shown below. Reproducing was conducted at one-fold speed to determine jitter and reflectance.

Jitter was determined by the following procedure. The recorded signals were subjected to waveform equalization with a limit equalizer and then to binarization. Thereafter, the distribution σ of time differences between the leading edge and trailing edge of each binarized signal and the leading edge of a channel clock signal was determined with a time interval analyzer. The value of σ/T, wherein T was the channel clock frequency, was determined as jitter (%) (data-to-clock jitter).

Reflectance is proportional to the voltage output value for a reproducing detector. The value of reflectance was hence determined by normalizing the voltage output value with a known reflectance $R_{ref}$. In each of the Examples and Comparative Example, the reflectance increased through the recording.

The reflectances of the part highest in reflectance (9T mark) and the part lowest in reflectance (9T space), among the recorded signals, are expressed by $R_H$ and $R_L$, respectively. The degree of modulation m was calculated using the following equation.

$$m = (R_H - R_L)/R_H$$

With respect to push-pull signals, the value of normalizedpush-pull signal intensity ($IPP_{actual}$) was determined.

(EVALUATION RESULTS)

Fig. 11 shows transmission electron microscope photographs of sections of the disk used in Example 1. Fig. 11 (a) is a transmission electron microscope (TEM) photograph of a section of the disk in a pre-recording state, while Fig. 11 (b) is a transmission electron microscope (TEM) photograph of a section of the disk in a post-recording state. The section samples were produced in the following manner. A pressure-sensitive adhesive tape is applied to the cover layer and pulled away to partly expose the interfacial layer/cover layer boundary and thereby obtain an exposed surface formed by the peeling. Tungsten is vapor-deposited on the exposed surface for the purpose of protection. Furthermore, the tungsten-coated exposed surface is bombarded with high-speed ions from over the surface by sputtering under vacuum to form holes. A hole whose side wall included a section was examined with a transmission electron microscope.

In the section images shown in Fig. 11 (a) and Fig. 11 (b), the recording layers appear whitish because they are made of an organic substance and hence transmit electrons. It can be seen that the recording layer thickness $d_L$ in the recording land portion (cover layer groove part) is almost zero and the recording layer thickness $d_G$ in the recording groove portion is about 29 nm. The groove depth $d_{GL}$, which is defined as the difference in level in the reflection reference plane, is about 53 nm, which is almost equal to the value determined by an examination of the substrate surface with an AFM. It can be seen from the shape of the interfacial layer that in the recording pit portion, the recording layer has deformed to swell toward the cover layer (i.e., result in $d_{bmp}<0$ in Fig. 4). This recording layer is more whitish than the recording layer in a pre-recording state. It is therefore thought that voids (i.e., $n_d'=1$) have been formed. It can be further seen that the recording pits have been confined in the recording groove without protruding from the groove part.

The voids formed through the recording have a height from the reflection reference plane of about 88 nm, resulting in $d_{bmp}=59$ nm. Furthermore, neither alteration nor deformation is observed at the reflective layer/substrate

boundary. It was hence ascertained that $d_{pit} \approx d_{mix} \approx 0$. When these values are used together with $n_d$=1.08, $n_c$=1.5, $\delta n_d$=1.08-1=0.08 (provided that the refractive index of the space in the voids was taken as 1), $\lambda$=406 nm, $d_G \approx 29$ nm, $d_L \approx 0$ nm, and $d_{GL} \approx 53$ nm to estimate values of phase in this embodiment, then the following results are obtained.

Φb in equation (7) is as follows.

$$\phi b = (4\pi/406)\times(0.42\times29-1.5\times53) \approx -0.66\pi$$

Consequently, $|\Phi b_2|<\Pi$.

ΔΦ in equation (9) is as follows.

$$\Delta\phi = (4\pi/406)\times(0.42\times59+0.08\times88) \approx 0.31\pi$$

This satisfies the assumption that ΔΦ usually is n/2 or smaller.

Furthermore, Φa in equation (8) is as follows.

$$\phi a \approx (-0.66+0.31)\pi = -0.35\pi$$

Consequently, $|\Phi b|>|\Phi a|$ .

It has become obvious that those phase changes depend on a refractive-index change accompanied by the formation of voids in the recording pit portion and that the recording layer in the recording pit portion has deformed to swell toward the cover layer side. It can be seen that although $\delta n_d<0$, recording was able to be conducted while positively utilizing $d_{bmp}<0$ and further utilizing a phase change resulting in $\Delta\Phi>0$.

The polarity of the push-pull signals remained unchanged. Consequently, the recording can be regarded as LtoH recording based on a phase change resulting in $0<|\Phi_a|<|\Phi b|<\pi$.

In Example 2 also, the formation of voids in the recording pit portion and a swelling deformation toward the cover layer were observed.

In the optical recording medium of Example 1, the jitter σ, reflectances $R_H$ and $R_L$, and degree of modulation m were as follows. In the one-fold speed recording, σ=5.1%, $R_H$=34.2%, $R_L$=17.5%, and m=0.49. In the two-fold speed recording, σ=6.1%, $R_H$=33.4%, $R_L$=17.4%, and m=0.48.

The normalized push-pull intensity was 0.54 before recording, was 0.26 after the one-fold speed recording, and was 0.32 after the two-fold speed recording. The power for recording was 5.6 mW for one-fold speed and was 7.0 mW for two-fold speed.

The present inventors consider, based on the results of investigations, that in blue-ray disks, a jitter of 7.0% or lower, a recording power of 7.0 mW or lower, and a normalized push-pull signal intensity in the range of 0.21-0.60 are sufficient for practical use. It can be seen that the values of those properties in Example 1 clear these criteria.

In the optical recording medium of Example 2, the jitter σ, reflectances $R_H$ and $R_L$, and degree of modulation m were as follows. In the one-fold speed recording, σ=6.1%, $R_H$=38.8%, $R_L$=21.9%, and m=0.44. The normalized push-pull intensity was 0.50 before recording, and was 0.32 after the one-fold speed recording. In Example 2, these values almost satisfy the criteria for blue-ray disks although obtained in one-fold speed recording.

In the optical recording medium of Comparative Example 1, the jitter σ and reflectance $R_H$ were as follows. In the one-fold speed recording, σ=7.8% and $R_H$=30.8%. In the two-fold speed recording, σ=11.8% and $R_H$=31.2%. The power for recording was 6.6 mW for one-fold speed and was 8.0 mW for two-fold speed.

It can be seen that in the optical recording medium of Comparative Example 1, the value of jitter and the value of power for two-fold speed recording do not satisfy the criteria for blue-ray disks.

It can be seen from the results given above that an excellent optical recording medium satisfying a standard for blue-ray disks with respect to each of one-fold speed recording and two-fold speed recording can be obtained according to the invention.

While the invention has been described in detail and with reference to specific embodiments thereof, it will be apparent to one skilled in the art that various changes and modifications can be made therein without departing from the spirit and scope thereof.

This application is based on a Japanese patent application filed on September 6, 2006 (Application No. 2006-241738), the contents thereof being herein incorporated by reference.

INDUSTRIAL APPLICABILITY

The invention is especially suitable for use in, e.g., optical recording media of the film-side entrance type capable of blue-laser recording/reproducing.

## Claims

1. An optical recording medium which comprises a substrate having a guide groove and the following layers on the substrate in the following order:

   a layer having a light-reflecting function,
   a recording layer containing a porphyrin compound represented by the following formula [I] as a main component, and
   a cover layer capable of transmitting a recording/reproducing light entering the recording layer,
   wherein
   the recording/reproducing light has a wavelength λ of from 350 nm to 450 nm, and
   when a portion of the guide groove at a side far from a surface where a recording/reproducing light beam obtained by converging the recording/reproducing light enters the cover layer is represented as a recording groove portion, then
   a recording pit portion, which is formed in the recording groove portion, has a higher reflective optical intensity than the recording groove portion in an unrecorded state:

   [Ka-1]

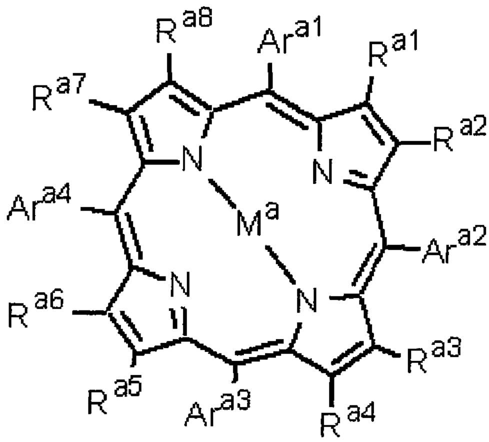

[I]

   (In general formula [I], $Ar^{a1}$ to $Ar^{a4}$ each independently represent an aromatic ring and each may have a plurality of substituents;
   $R^{a1}$ to $R^{a8}$ each independently represent a hydrogen atom or any substituent; and
   $M^a$ represents a metal cation having a valence of 2 or higher, provided that when $M^a$ has a valence of 3 or higher, then the molecule may further has a counter anion so that the molecule as a whole is neutral.)

2. The optical recording medium according to claim 1, wherein
   in the recording pit portion, voids are formed in an inner part of the recording layer or at the boundary between the recording layer and a layer adjoining the recording layer, and the formation of voids is accompanied by a shape change in which the recording layer swells toward the cover layer side.

**3.** The optical recording medium according to claim 1 or 2, wherein the porphyrin compound is a tetraarylporphyrin compound represented by the following general formula (II):

[Ka-2]

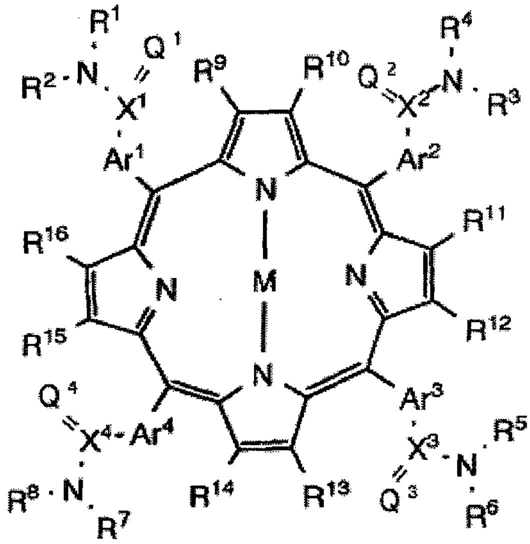

[II]

(In formula [I], $X^1$ to $X^4$ each independently represent an atom having a valence of 4 or higher, provided that when $X^1$ to $X^4$ are an atom having a valence of 5 or higher, these $X^1$ to $X^4$ may further have any substituent, and when $X^1$ to $X^4$ are an atom having a valence of 6 or higher, these $X^1$ to $X^4$ may respectively have two $=Q^1$s to two $=Q^4$s, wherein the two $Q^1$s to the two $Q^4$s each may be the same or different;
$Q^1$ to $Q^4$ each independently represent an atom in Group 16 of the periodic table;
$Ar^1$ to $Ar^4$ each independently represent an aromatic ring and each may have a substituent other than $X^1$ to $X^4$;
$R^1$ to $R^8$ each independently represent an organic group having 20 or less carbon atoms;
$R^9$ to $R^{16}$ each independently represent a hydrogen atom or an electron-attracting substituent; and
M represents a metal cation having a valence of 2 or higher, provided that when M has a valence of 3 or higher, then the molecule may further have a counter anion so that the molecule as a whole is neutral,
provided that $R^1$ and $R^2$, $R^3$ and $R^4$, $R^5$ and $R^6$, or $R^7$ and $R^8$ may be bonded to each other to form a ring.)

**4.** The optical recording medium according to any one of claims 1 to 3, which further comprises an interfacial layer between the recording layer and the cover layer, in which the interfacial layer prevents a material of the recording layer and a material of the cover layer from mixing.

**5.** The optical recording medium according to any one of claims 1 to 4, which further comprises an interlayer between the layer having a light-reflecting function and the recording layer.

**6.** The optical recording medium according to claim 5, wherein the interlayer contains at least one element selected from the group consisting of Ta, Nb, V, W, Mo, Cr, and Ti.

**7.** The optical recording medium according to any one of claims 1 to 6, wherein when a boundary of the layer having a light-reflecting function, which faces the recording layer, is represented as a reflection reference plane, and a portion of the guide groove in which the recording pit portion is not formed, is represented as a recording land portion, then the difference in level $d_{GL}$ between the recording groove portion and the recording land portion, as defined by the reflection reference plane, is 30-70 nm.

[Fig. 1]

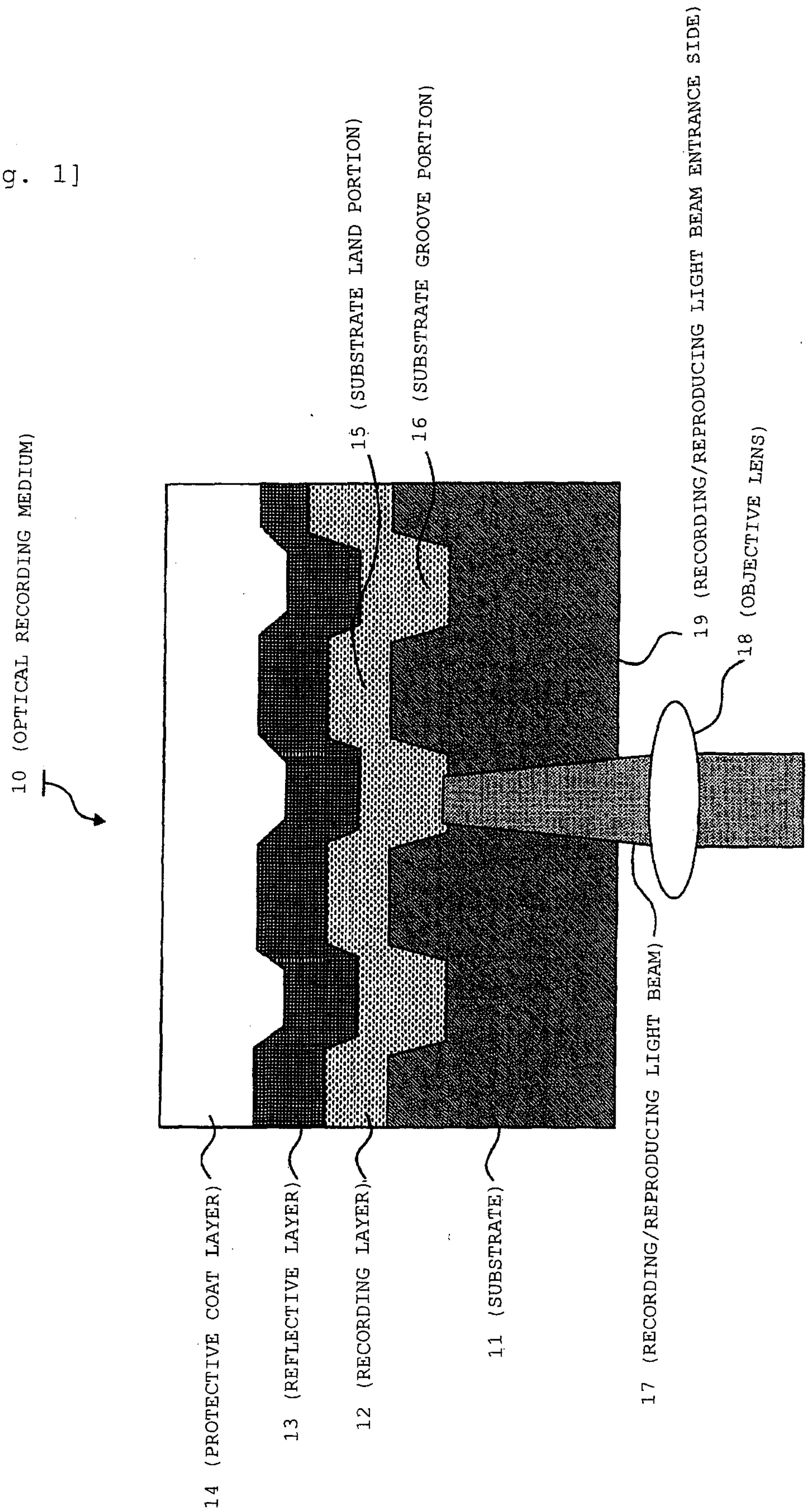

10 (OPTICAL RECORDING MEDIUM)
15 (SUBSTRATE LAND PORTION)
16 (SUBSTRATE GROOVE PORTION)
19 (RECORDING/REPRODUCING LIGHT BEAM ENTRANCE SIDE)
18 (OBJECTIVE LENS)
14 (PROTECTIVE COAT LAYER)
13 (REFLECTIVE LAYER)
12 (RECORDING LAYER)
11 (SUBSTRATE)
17 (RECORDING/REPRODUCING LIGHT BEAM)

[Fig. 2]

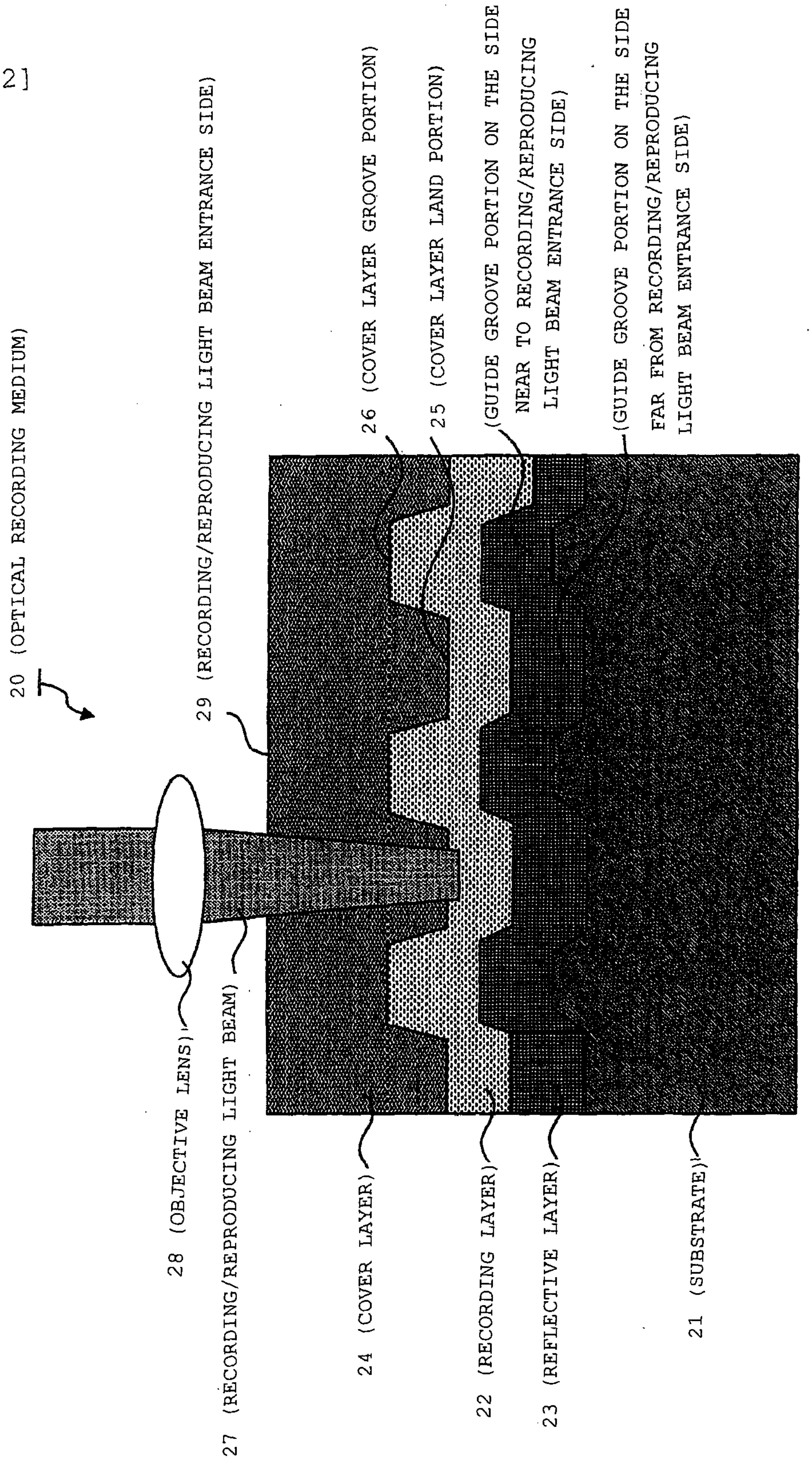
20 (OPTICAL RECORDING MEDIUM)
29 (RECORDING/REPRODUCING LIGHT BEAM ENTRANCE SIDE)
26 (COVER LAYER GROOVE PORTION)
25 (COVER LAYER LAND PORTION)
(GUIDE GROOVE PORTION ON THE SIDE NEAR TO RECORDING/REPRODUCING LIGHT BEAM ENTRANCE SIDE)
(GUIDE GROOVE PORTION ON THE SIDE FAR FROM RECORDING/REPRODUCING LIGHT BEAM ENTRANCE SIDE)
28 (OBJECTIVE LENS)
27 (RECORDING/REPRODUCING LIGHT BEAM)
24 (COVER LAYER)
22 (RECORDING LAYER)
23 (REFLECTIVE LAYER)
21 (SUBSTRATE)

[Fig. 3]

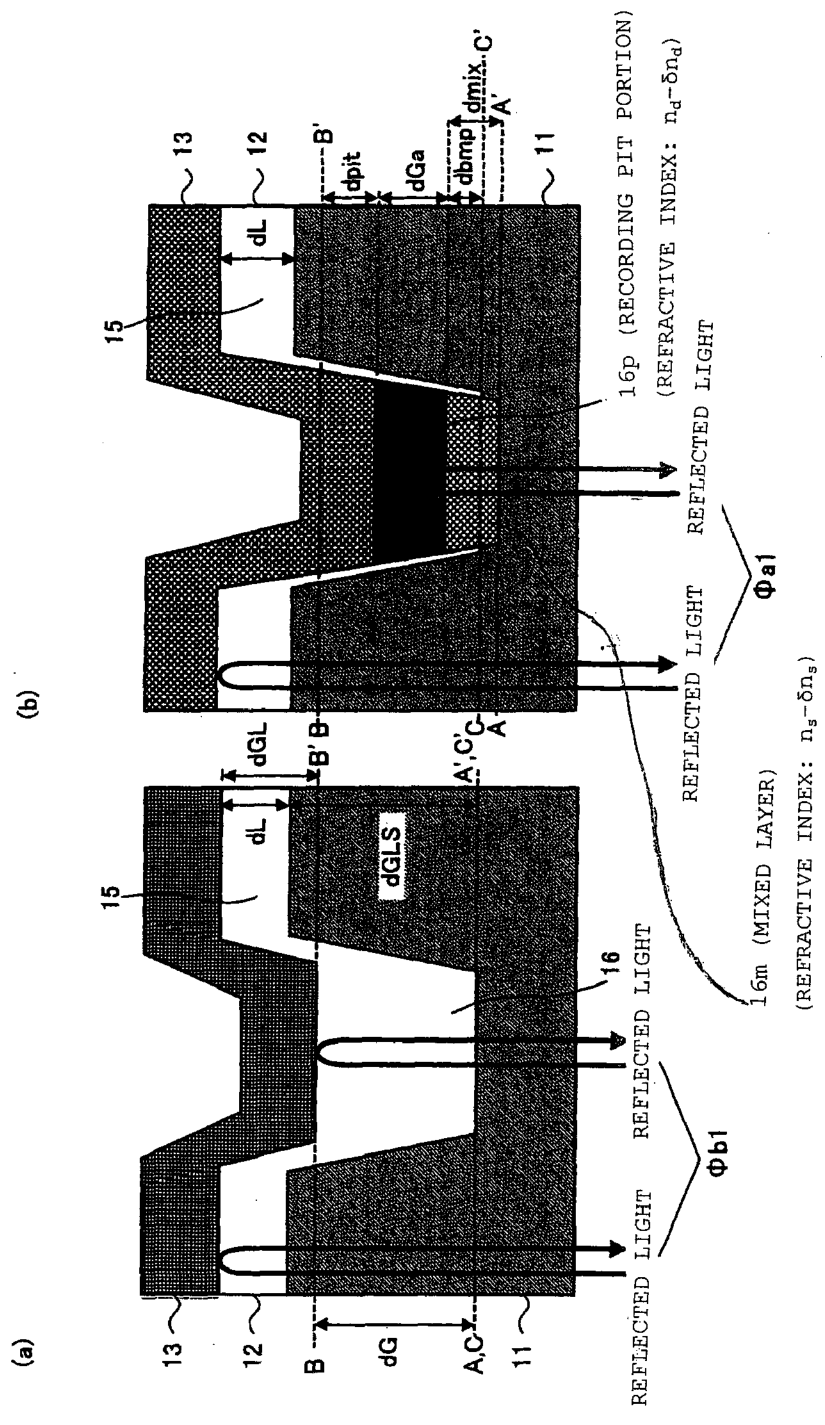
(a)
(b)
13
12
B
dG
A,C
11
15
16
dL
dGL
dGLS
B' B
A',C' C A
B'
dpit
dGa
dbmp
dmix
C'
A'
REFLECTED LIGHT
REFLECTED LIGHT
Φb1
REFLECTED LIGHT
REFLECTED LIGHT
Φa1
16p (RECORDING PIT PORTION)
(REFRACTIVE INDEX: $n_d-\delta n_d$)
16m (MIXED LAYER)
(REFRACTIVE INDEX: $n_s-\delta n_s$)

[Fig. 4]

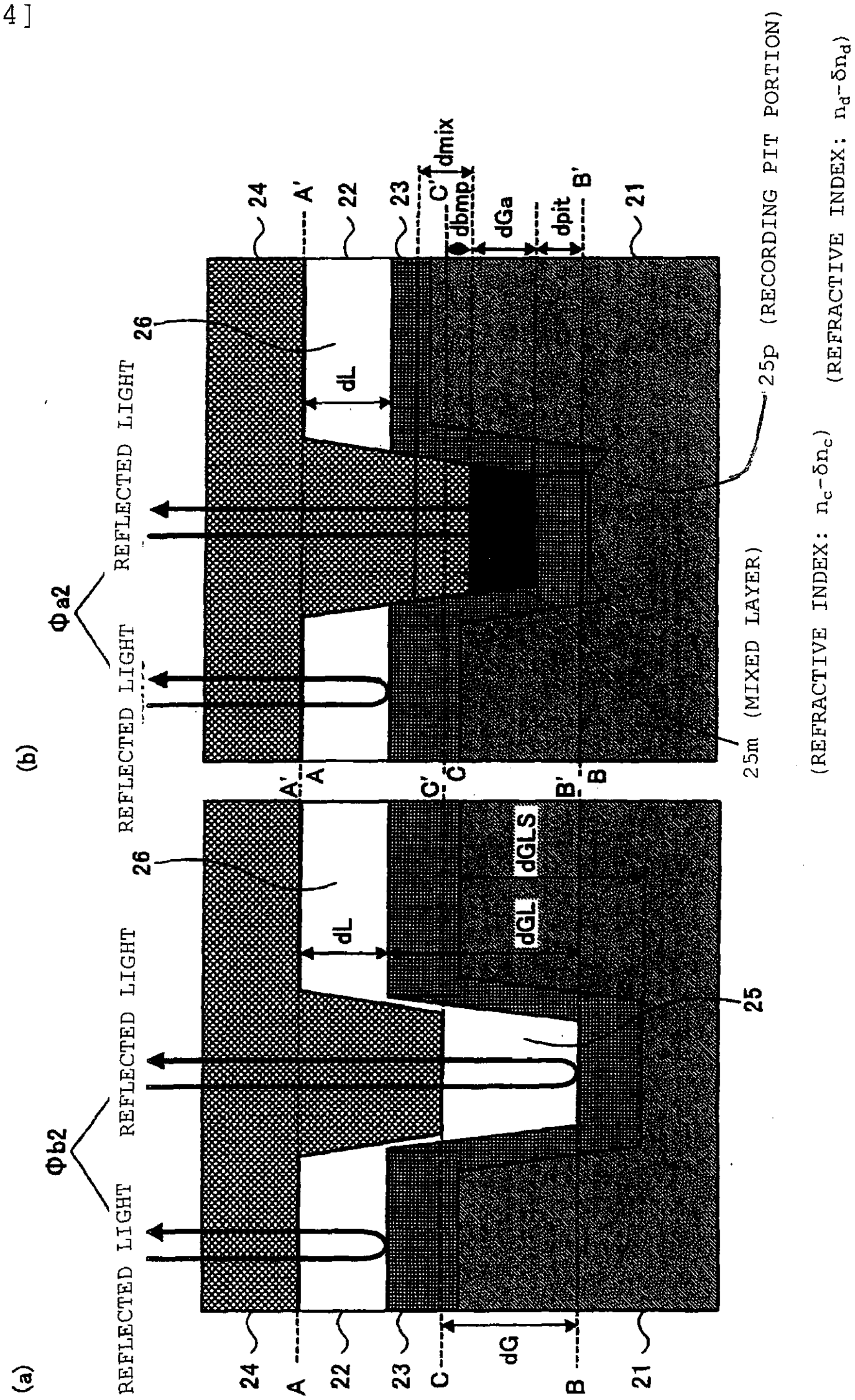
(a)
REFLECTED LIGHT
REFLECTED LIGHT
Φb2
24
A
22
23
C
dG
B
21
A'
C'
B'
26
dL
dGL
dGLS
25
(b)
REFLECTED LIGHT
REFLECTED LIGHT
Φa2
A'
A
C'
C
B'
B
26
dL
22
23
dbmp
dmix
dGa
dpit
21
25m (MIXED LAYER)
25p (RECORDING PIT PORTION)
(REFRACTIVE INDEX: $n_c-\delta n_c$)
(REFRACTIVE INDEX: $n_d-\delta n_d$)

[図5]

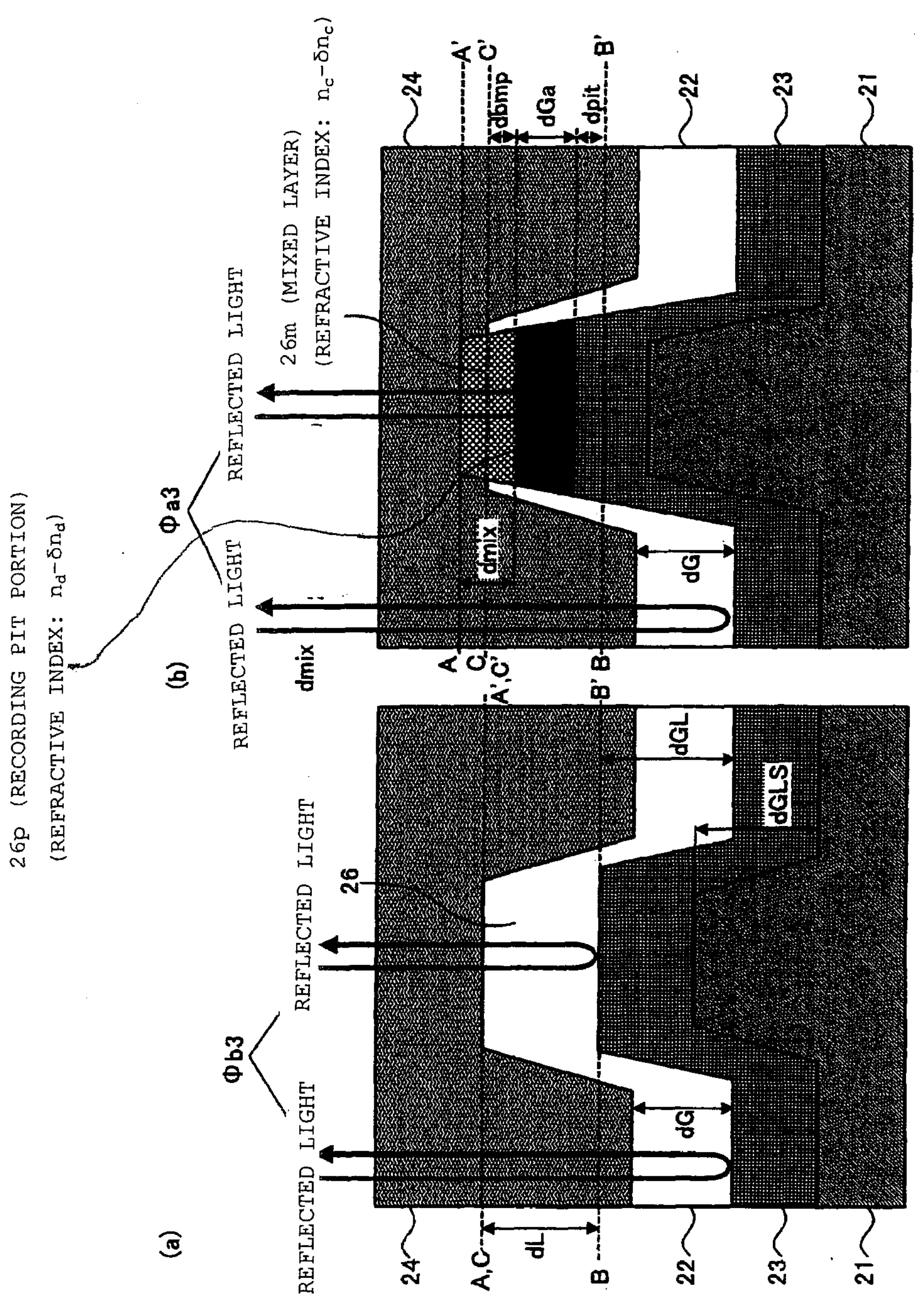
26p (RECORDING PIT PORTION)
(REFRACTIVE INDEX: $n_d-\delta n_d$)
26m (MIXED LAYER)
(REFRACTIVE INDEX: $n_c-\delta n_c$)
(a)
(b)
Φb3
Φa3
REFLECTED LIGHT
REFLECTED LIGHT
REFLECTED LIGHT
REFLECTED LIGHT
26
24
A,C
dL
B
22
23
21
dG
dGL
dGLS
dmix
A
C
A',C'
B' B
A'
C'
dbmp
dGa
dpit
B'

[Fig. 6]

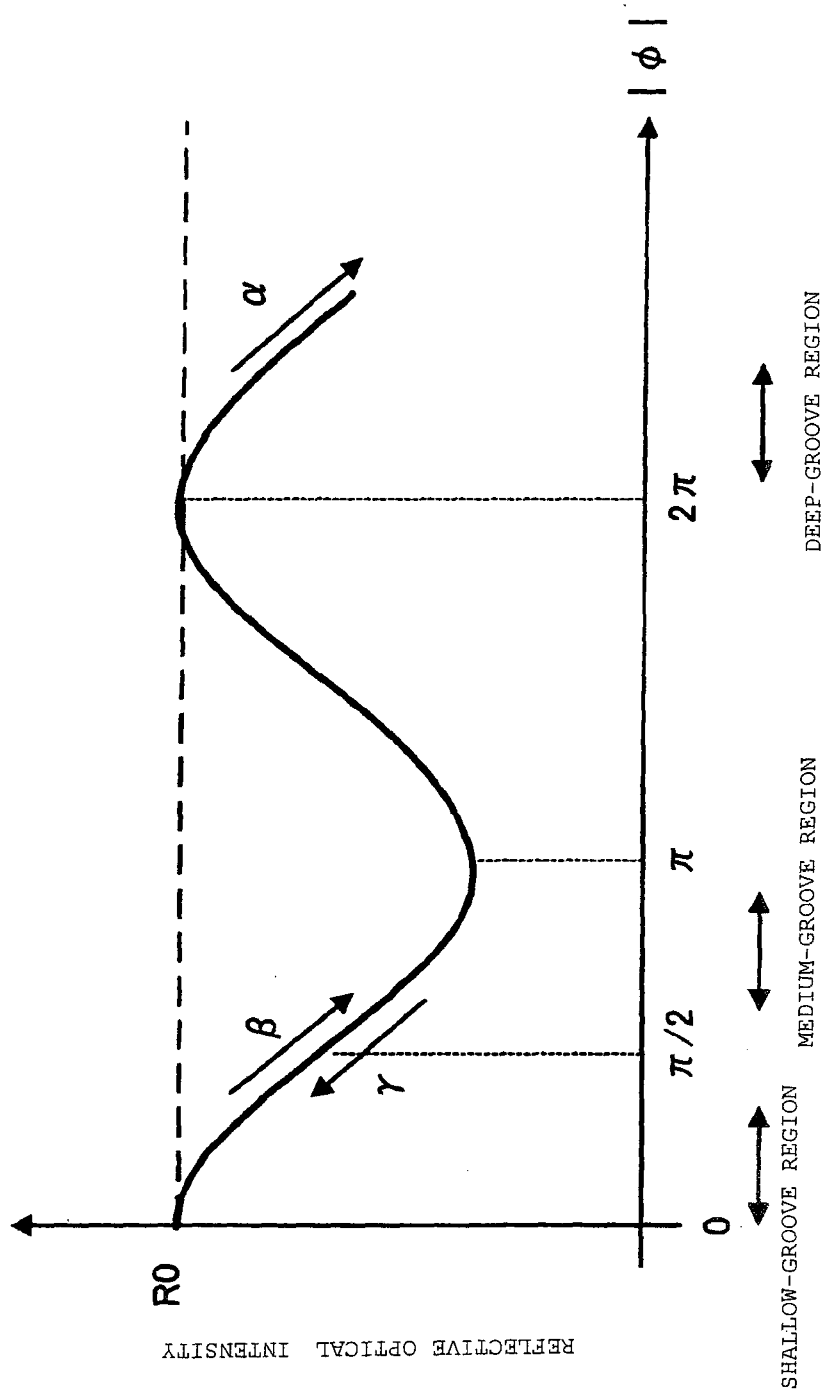

R0
REFLECTIVE OPTICAL INTENSITY
0
π/2
π
2π
|φ|
α
β
γ
SHALLOW-GROOVE REGION
MEDIUM-GROOVE REGION
DEEP-GROOVE REGION

[Fig. 7]

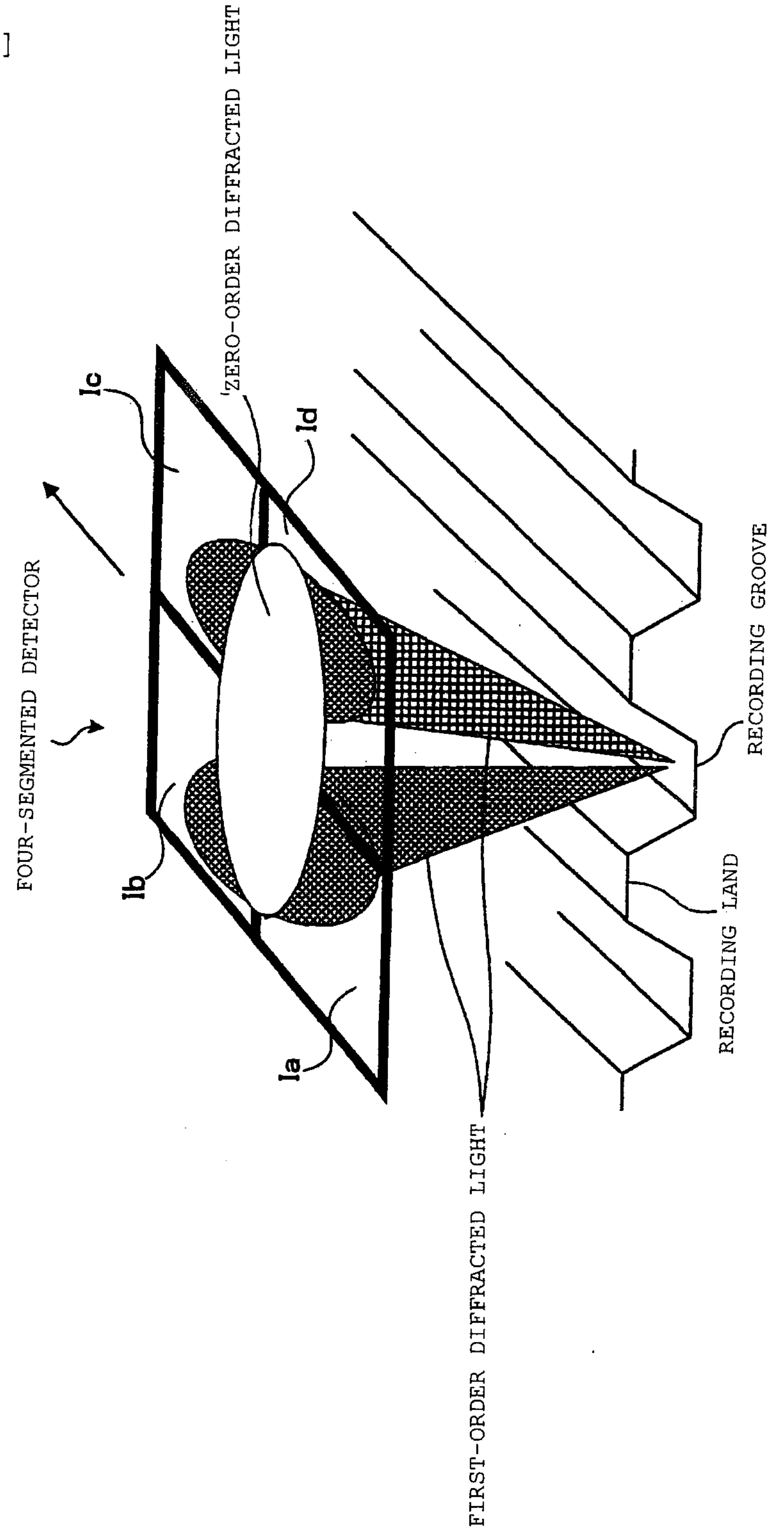
ZERO-ORDER DIFFRACTED LIGHT
FOUR-SEGMENTED DETECTOR
Ic
Id
Ib
Ia
RECORDING GROOVE
RECORDING LAND
FIRST-ORDER DIFFRACTED LIGHT

[Fig. 8]

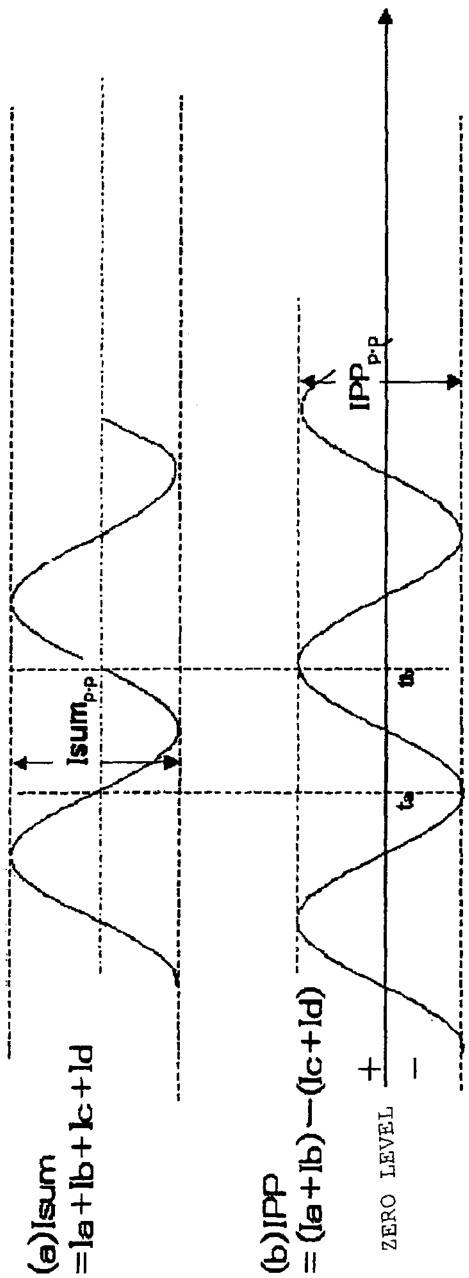

[Fig. 9]

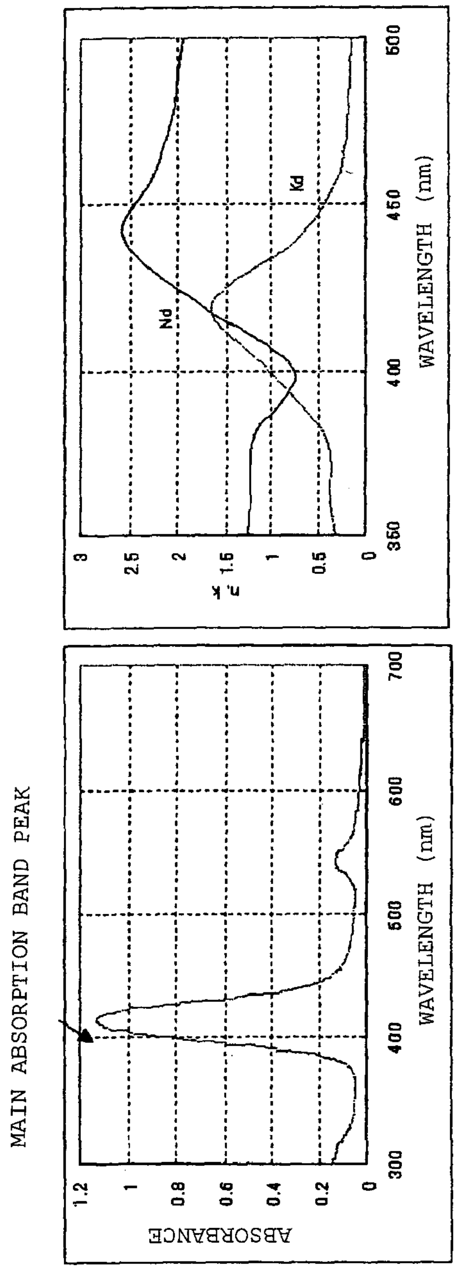


(a) ABSORPTION SPECTRUM

(b) WAVELENGTH DEPENDENCE OF nd AND kd

[Fig. 10]

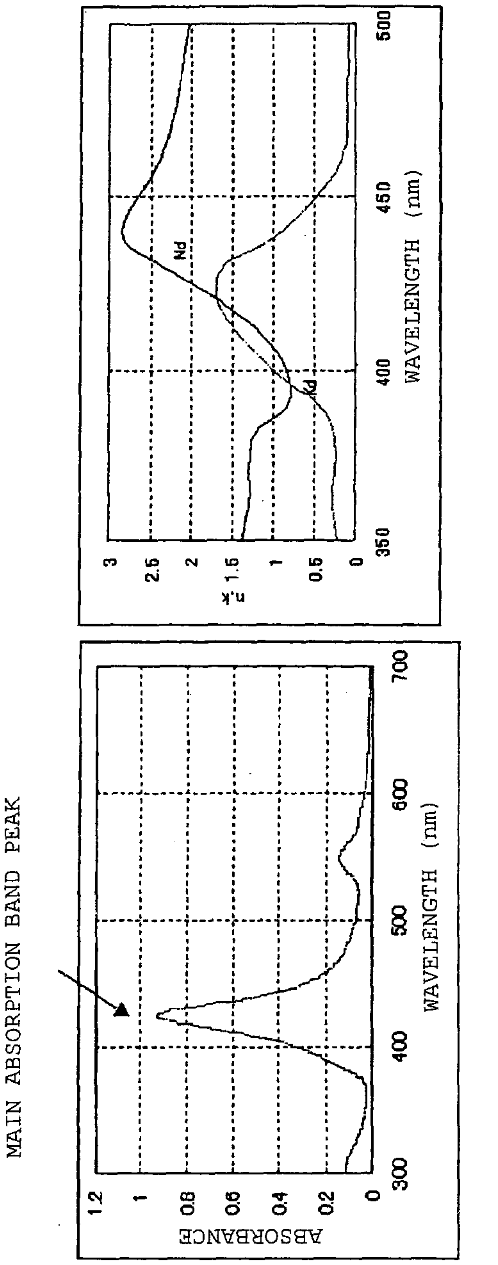


(a) ABSORPTION SPECTRUM

(b) WAVELENGTH DEPENDENCE OF nd AND kd

[Fig. 11]

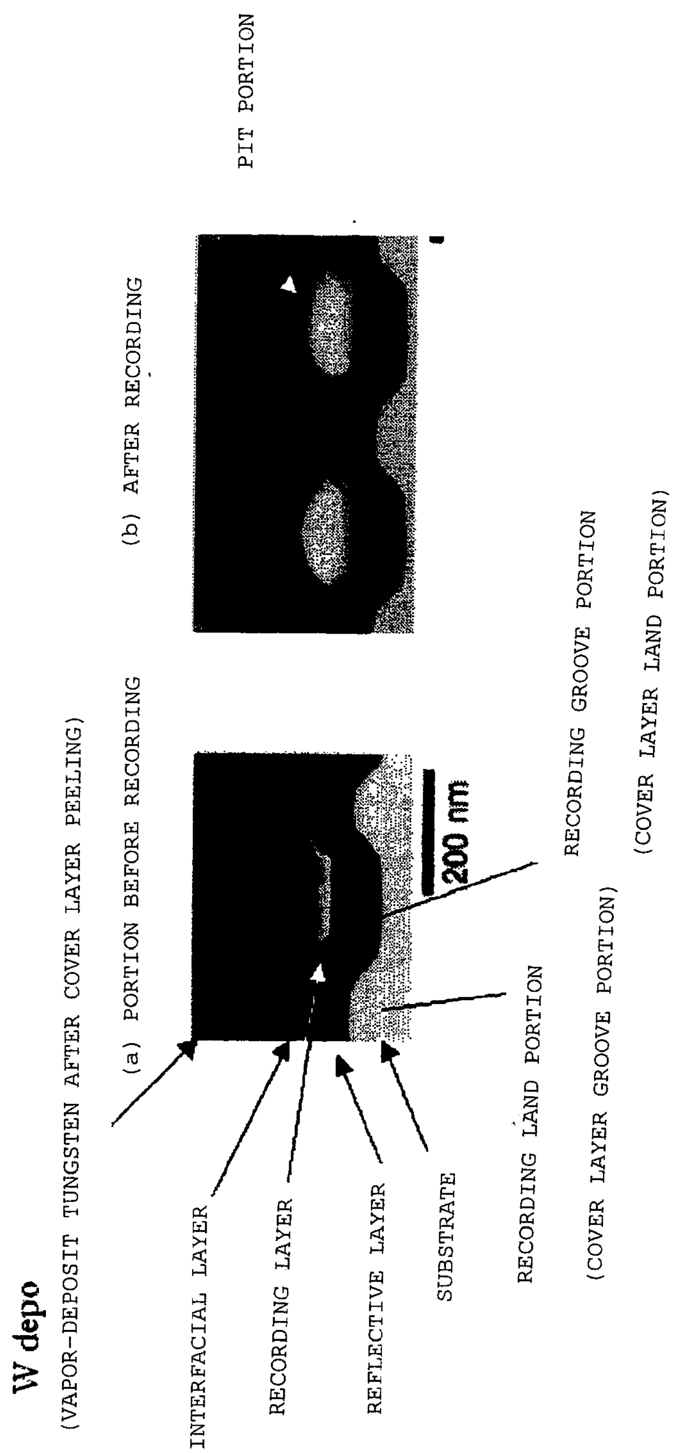
W depo
(VAPOR-DEPOSIT TUNGSTEN AFTER COVER LAYER PEELING)
(a) PORTION BEFORE RECORDING
(b) AFTER RECORDING
PIT PORTION
200 nm
INTERFACIAL LAYER
RECORDING LAYER
REFLECTIVE LAYER
SUBSTRATE
RECORDING LAND PORTION
(COVER LAYER GROOVE PORTION)
RECORDING GROOVE PORTION
(COVER LAYER LAND PORTION)

**INTERNATIONAL SEARCH REPORT**

International application No.
PCT/JP2007/067336

A. CLASSIFICATION OF SUBJECT MATTER
*B41M5/26*(2006.01)i, *G11B7/24*(2006.01)i, *G11B7/244*(2006.01)i, *G11B7/254*(2006.01)i, *G11B7/257*(2006.01)i

According to International Patent Classification (IPC) or to both national classification and IPC

B. FIELDS SEARCHED

Minimum documentation searched (classification system followed by classification symbols)
B41M5/26, G11B7/24, G11B7/244, G11B7/254, G11B7/257

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-160742 A (TDK Corp.),<br>10 June, 2004 (10.06.04),<br>Full text; all drawings<br>& US 2004142138 A1 & TW 200415639 A | 1,2,4-7<br>3 |
| Y | JP 2003-300983 A (Communications Research Laboratory),<br>21 October, 2003 (21.10.03),<br>Claims; Par. Nos. [0052] to [0055]<br>(Family: none) | 3 |
| A | JP 11-221964 A (Mitsubishi Chemical Corp.),<br>17 August, 1999 (17.08.99),<br>(Family: none) | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 October, 2007 (10.10.07) | 23 October, 2007 (23.10.07) |
| Name and mailing address of the ISA/<br>Japanese Patent Office<br><br>Facsimile No. | Authorized officer<br><br><br>Telephone No. |

Form PCT/ISA/210 (second sheet) (April 2007)

**INTERNATIONAL SEARCH REPORT**

International application No.
PCT/JP2007/067336

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-138633 A (Ricoh Co., Ltd.), 22 May, 2001 (22.05.01), (Family: none) | 1-7 |
| A | JP 2001-273672 A (Sony Corp.), 05 October, 2001 (05.10.01), & EP 1143431 A2 & US 2002001691 A1 | 1-7 |
| E,A | JP 2006-256295 A (Mitsubishi Chemical Corp.), 28 September, 2006 (28.09.06), (Family: none) | 3 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3063943 A
- JP 2132656 A
- JP 57501980 A
- JP 2002301870 A
- JP 4182944 A
- JP 2004030864 A
- JP 2003266954 A
- JP 2001331936 A
- JP 2005504649 T
- JP 6009107 A
- JP 2004160742 A
- JP 2006241738 A


### Non-patent literature cited in the description


- *Proceedings of International Symposium on Optical Memory, (U.S.A.),* 1991, vol. 4, 99-108
- *Proceedings of SPIE,* vol. 4342, 168-177
- Hikari Disuku Kaitai Shinsho. Nikkei BP Inc, 2003
- *Japanese Journal of Applied Physics, (Japan),* 2003, vol. 42, 1056-1058
- **Heitaro NAKAJIMA ; Hiroshi OGAWA.** Konpakuto Disuku Dokuhon. Ohmsha, Ltd, 1996, 168
- *Japanese Journal of Applied Physics, (Japan),* 2003, vol. 42, 914-918
- *Japanese Journal of Applied Physics, (Japan),* 2000, vol. 39, 775-778
- *Japanese Journal of Applied Physics, (Japan),* 2003, vol. 42, 912-914
- *Bioorg. Med. Chem.,* 2002, vol. 10, 3013-3021
- **Alphonsus V. Pocius.** Setchakuzai To Setchaku Gjjutsu Nyumon. The Nikkan Kogyo Shinbun Ltd, 1999
- Hiroyuki Fujiwara, Bunko Eriputometori. Maruzen Shuppan, 2003